# EUROPÄISCHE PATENTSCHRIFT

(11) **EP 1 017 755 B1**
(45) Veröffentlichungstag und Bekanntmachung des Hinweises auf die Patenterteilung: **29.01.2003**
(21) Anmeldenummer: 98948892.9
(22) Anmeldetag: 01.09.1998
(51) Int. Cl.: C09K 19/00, C09B 67/00, C09D 5/36, C09D 11/02, B32B 27/08

(54) **CHOLESTERISCHE EFFEKTSCHICHTEN UND VERFAHREN ZU DEREN HERSTELLUNG**
COATINGS WITH A CHOLESTERIC EFFECT AND METHOD FOR THE PRODUCTION THEREOF
COUCHES A EFFET CHOLESTERIQUES ET LEUR PROCEDE DE PRODUCTION

(30) Priorität: 02.09.1997 DE 19738369; 23.12.1997 DE 19757699
(43) Veröffentlichungstag der Anmeldung: 12.07.2000
(60) Teilanmeldung: 02016507.2
(73) Patentinhaber: BASF AKTIENGESELLSCHAFT, 67056 Ludwigshafen (DE)
(72) Erfinder: SCHUHMACHER, Peter, D-68163 Mannheim (DE); SCHNEIDER, Norbert, D-67122 Altrip (DE); RICHTER, Volker, D-69118 Heidelberg (DE); KELLER, Harald, D-67069 Ludwigshafen (DE); BLASCHKA, Peter, D-67069 Ludwigshafen (DE); BETTINGER, Günter, D-67105 Schifferstadt (DE); MEYER, Frank, D-68165 Mannheim (DE); BECK, Erich, D-68526 Ladenburg (DE); SIEMENSMEYER, Karl, D-67227 Frankenthal (DE); STEININGER, Helmut, D-67551 Worms (DE); BEST, Wolfgang, D-67251 Freinsheim (DE)
(74) Vertreter: Kinzebach, Werner, Dr.
(86) Internationale Anmeldenummer: EP9805544
(87) Internationale Veröffentlichungsnummer: WO99011733

(56) Entgegenhaltungen:
- EP-A- 0 685 749
- DE-A- 19 602 848
- DE-A- 19 619 973
- GB-A- 2 276 883
- GB-A- 2 282 145

## Beschreibung

Die Erfindung betrifft verbesserte cholesterische Effektschichten, Verfahren zu deren Herstellung und deren Verwendung.

Beim Erwärmen formanisotroper Stoffe können flüssigkristalline Phasen, sogenannte Mesophasen, auftreten. Die einzelnen Phasen unterscheiden sich durch die räumliche Anordnung der Molekülschwerpunkte einerseits sowie durch die Molekülanordnung hinsichtlich der Längsachsen andererseits (G. W. Gray, P. A. Winsor, Liquid Crystals and Plastic Crystals, Ellis Horwood Limited, Chichester 1974). Die nematisch flüssigkristalline Phase zeichnet sich durch Parallelorientierung der Molekül-Längsachsen aus (eindimensionaler Ordnungszustand). Unter der Voraussetzung, daß die die nematische Phase aufbauenden Moleküle chiral sind, entsteht eine sogenannte chiral nematische (cholesterische) Phase, bei der die Längsachsen der Moleküle eine zu ihr senkrechte, helixartige Überstruktur ausbilden (H. Baessler, Festkörperprobleme XI, 1971). Der chirale Molekülteil kann sowohl im flüssigkristallinen Molekül selbst vorhanden sein als auch als Dotierstoff zur nematischen Phase gegeben werden, wodurch die chiral nematische Phase induziert wird. Dieses Phänomen wurde zuerst an Cholesterolderivaten untersucht (z. B. H. Baessler, M. M. Labes, *J. Chem. Phys. 52,* 631 (1970)).

Die chiral nematische Phase hat besondere optische Eigenschaften: eine hohe optische Rotation sowie einen ausgeprägten Zirkulardichroismus, der durch Selektivreflektion von zirkular polarisiertem Licht innerhalb der chiral nematischen Schicht entsteht. In Abhängigkeit von der Ganghöhe der helixartigen Überstruktur können unterschiedliche Farben erzeugt werden, die je nach Blickwinkel unterschiedlich erscheinen können. Die Ganghöhe der helixartigen Überstruktur ist ihrerseits vom Verdrillungsvermögen der chiralen Komponente abhängig. Dabei kann insbesondere durch Änderung der Konzentration eines chiralen Dotierstoffs die Ganghöhe und damit der Wellenlängenbereich des selektiv reflektierten Lichts einer chiral nematischen Schicht variiert werden. Solche chiral nematischen Systeme bieten für eine praktische Anwendung interessante Möglichkeiten.

Cholesterische Effektpigmentschichten und die daraus hergestellten Pigmente sind bekannt.

Die EP-A-686 674 und die ihr zugrunde liegende DE-A-44 16 191 beschreibt Interferenzpigmente aus in cholesterischer Anordnung fixierten Molekülen; die Pigmente weisen eine plättchenförmige Struktur und eine, durch ein Beispiel belegte, Schichtdicke von 7 µm auf. Zur Herstellung der Pigmente wird hochviskoses (zähflüssiges) LC-Material auf einen Träger aufgebracht, wobei der Träger unter einer fixierten Rakel mit einer Laufgeschwindigkeit von etwa 2 m/min fortbewegt wird. Hierdurch werden die flüssigkristallinen Moleküle orientiert.

Aus der DE-A-196 39 179 sind lichtdurchlässige Zusammensetzungen bekannt, die Pigmente mit vom Betrachtungswinkel abhängiger Farbigkeit enthalten. Die Zusammensetzungen sollen absorptive Farbmittel in einer Menge enthalten, die bewirkt, dass der bei Glanzwinkelkonfiguration auftretende winkelabhängige Farbeffekt verstärkt wird, ohne dass bei allen anderen Winkelkonfigurationen die Transparenz der Zusammensetzung entscheidend beeinträchtigt wird. Die Herstellung der Pigmente erfolgt, wie in der oben genannten EP-A-686 674 beschrieben.

Aus der DE-A-196 39 229 ist eine Zusammensetzung bekannt, in der mindestens eine Matrix, die Pigmente mit vom Betrachtungswinkel abhängiger Farbigkeit enthält, räumlich oder flächenförmig strukturiert in Form von Strukturelementen in mindestens einer weiteren Matrix vorliegt. Hierbei sind die Matrizes 1 und 2 nicht identisch oder enthalten nichtidentische Pigmente in identischen Konzentrationen. Die Herstellung der Pigmente erfolgt wie in der oben genannten EP-A-686 674 beschrieben.

Die DE-A-196 39 165 beschreibt ein Verfahren zur Erzielung neuer Farbeffekte mittels Pigmenten mit vom Betrachtungswinkel abhängiger Farbigkeit in einer Matrix, wobei die Pigmente nach ihrem Einbringen in die Matrix gezielt raum- und/oder flächenselektiv in der Matrix verkippt werden. Das Verkippen der Pigmente erfolgt vorzugsweise mittels unterschiedlich gerichteter Bewegung der Pigmente in der Matrix oder durch Verwendung von Pigmenten unterschiedlicher Konzentration in der Matrix. Die Herstellung der Pigmente erfolgt wie in der oben genannten EP-A-686 674 beschrieben.

Die DE-A-195 02 413 beschreibt ein Pigment mit vom Betrachtungswinkel abhängiger Farbigkeit, das durch dreidimensionales Vernetzen von orientierten Substanzen flüssigkristalliner Struktur mit chiraler Phase erhalten worden ist. Um ein solches Pigment farbhaltig gegenüber erhöhten Temperaturen zu machen, wird vorgeschlagen, dass das Vernetzen in Gegenwart von zumindest einer weiteren, zumindest zwei vernetzbare Doppelbindungen enthaitenden, farbneutralen Verbindungen durchgeführt wird. Das Auftragen der unvernetzten cholesterischen Mischung erfolgt durch Rakeln, beispielsweise auf eine Folie. Über die Dicke der aufgerakelten Schicht werden keine Angaben gemacht.

Die US-A-5 364 557 beschreibt cholesterische Tinten und Druckfarben, die plättchen- oder schuppenförmige cholesterische Pigmente enthalten. Die Herstellung der Pigmente erfolgt durch Beschichtung eines Transportbandes mit einer cholesterischen Schmelze und nachfolgende Glättung und Ausrichtung des cholesteren Films mittels einer Messerklinge. Dieser Ausrichtungsschritt wird als essentiell für die Durchführung der Erfindung beschrieben. Die Pigmente können zwei Schichten unterschiedlicher Händigkeit oder zwei Schichten gleicher Händigkeit mit einer dazwischen liegenden weiteren Schicht umfassen, die die Drehrichtung des zirkular polarisierten Lichts umkehrt. Eine Licht absorbierende Schicht wird nicht erwähnt.

Aus der US-A-5 599 412 ist ein Herstellungsverfahren und eine Apparatur zur Herstellung von cholesterischen Tinten und Druckfarben bekannt. Das geschmolzene Polymer wird, wie in der zuvor zitierten US-A-5 364 557 beschrieben, aufgetragen und ausgerichtet.

Die DE-A-44 18 076 beschreibt Effektlacke bzw. Effektlackierungen, die Interferenzpigmente aus veresterten Celluloseethern enthalten. Mit diesen Interferenzpigmenten sollen sich bei dem Lack von der Lichteinfallsrichtung und von der Betrachtungsrichtung abhängige Farbwechsel oder besonders intensive Farbtöne mit bisher nicht bekannter Brillanz auf dem damit lackierten Gegenstand herstellen lassen. Die Pigmente werden durch Zerkleinern cholesterischer Schichten hergestellt, die nach dem Aushärten eine Dicke von 5 bis 200 µm haben sollen. Die Auftragung der Schichten erfolgt beispielsweise durch Rakeln. In den Beispielen wird eine Schichtdicke von etwa 10 µm angegeben.

Die DE-A-196 297 61 beschreibt kosmetische oder pharmazeutische Zubereitungen, die Pigmente mit vom Betrachtungswinkel abhängiger Farbigkeit enthalten. Die Pigmente enthalten mindestens eine orientierte vernetzte Substanz mit flüssigkristalliner Struktur und mit chiraler Phase. Die Pigmente sind von plättchenförmiger Gestalt und weisen eine Dicke von 1 bis 20 µm auf. Die Herstellung der Pigmente erfolgt, wie in der oben genannten EP-A-686 674 beschrieben, wobei die Schichtdicke jedoch 5 um statt 7 µm betragen soll.

Aus der WO 96/02597 ist ein Verfahren zur Beschichtung oder zum Bedrucken von Unterlagen mit einem Mittel bekannt, das ein chirales oder achirales, flüssigkristallines Monomer und eine nichtflüssigkristalline, chirale Verbindung enthält. Die flüssigkristallinen Monomere sind vorzugsweise photochemisch polymerisierbare Bisacrylate. Um die für die Ausbildung der erwünschten optischen Eigenschaften notwendige einheitliche Orientierung der cholesterischen Phase auch auf komplex geformten, großen Oberflächen zu erreichen, ist die Beimischung eines polymeren Bindemittels notwendig. Die Herstellung der Schichten, über deren Dicke nichts gesagt wird, erfolgt durch verschiedene Druckverfahren oder durch Spritzen. Die Auftragung mittels eines Gießspaltes wird als möglich erwähnt, jedoch in keinem der 33 Beispiele exemplifiziert.

Aus der DE-A-196 02 795 ist ein Verfahren zur Herstellung von Pigmentpartikeln bekannt. Die Pigmentpartikel weisen eine weitgehend einheitliche, definierte Form und Größe auf, da sie entweder durch Polymerisation einer polymerisierbaren Mischung in einheitlich dimensionierten Vertiefungen oder durch Vorformung mittels eines Druckverfahrens und nachfolgende Polymerisation hergestellt werden. Die Schichtdicke der Pigmente wird nicht erwähnt. Die Bedeutung des Einsatzes polymerer Bindemittel und/oder monomerer Verbindungen, die durch Polymerisation in ein polymeres Bindemittel überführt werden können, für die Verbesserung der Fließviskosität, wird besonders betont.

Die DE-A-196 02 848 beschreibt ein Verfahren zur Herstellung von Pigmenten, wobei eine polymerisierbare Mischung eingesetzt wird, die unter anderem zwingend ein polymeres Bindemittel und/oder monomere Verbindungen, die durch Polymerisation in ein polymeres Bindemittel überführt werden, und/oder ein Dispergierhilfsmittel enthält. Diese Hilfsmittel sollen eine beträchtliche Verbesserung der Fließviskosität bewirken.

Aus der DE-A-42 40 743 sind Pigmente mit vom Betrachtungswinkel abhängiger Farbigkeit bekannt. Die Pigmente werden bevorzugt aus dreidimensional vernetzbaren Polyorganosiloxanen hergestellt, wobei die Flüssigkristallmasse auf eine Metall-, Kunststoff- oder Glasunterlage aufgerakelt, thermisch oder photochemisch vernetzt und das Vernetzungsprodukt dann von der Unterlage abgelöst wird. Die Pigmente weisen vorzugsweise eine Dicke von 5 bis 50 µm auf.

Die EP-B-383 376 beschreibt Flüssigkristallpigmente, die plättchenförmige Partikel umfassen, die wenigstens teilweise mit flüssigkristallinem Material beschichtet sind. Die Beschichtung erfolgt durch Dispergieren der plättchenförmigen Partikel in einem Lösungsmittel, in dem flüssigkristallines Material gelöst ist und nachfolgendes Ausfällen wenigstens eines Teils des flüssigkristallinen Materials auf die Partikel. Gleichmäßige und exakt parallel zur mittleren Schicht angeordnete cholesterische Schichten sind mittels dieses Verfahrens nicht herstellbar. Die Pigmente sind offensichtlich nicht volldeckend, da sie vorzugsweise auf schwarze Oberflächen aufgetragen werden sollen.

Die oben beschriebenen Verfahren zur Herstellung cholesterischer Schichten besitzen den gravierenden Nachteil, dass die erreichbaren Auftragsgeschwindigkeiten sehr gering sind. Eine Herstellung cholesterischer Schichten, z. B. für Effektfolien oder Effektpigmente im großtechnischen Maßstab ist deshalb praktisch nicht möglich. Die mit Hilfe bekannter Verfahren herstellbaren cholesterischen Pigmente besitzen ebenfalls eine Reihe von Nachteilen. Pigmente mit Schichtdicken < 5 µm sind nicht herstellbar, und außerdem ist die Schichtdickenschwankung unbefriedigend hoch. Dadurch werden auch die gewünschten optischen Eigenschaften, wie Glanz und Farbintensität, negativ beeinflußt. Außerdem ist die Auftragung mehrerer cholesterischer Schichten übereinander nicht zufriedenstellend möglich, da auf diese Weise hergestellte mehrschichtige Effektpigmente oder Folien zu dick und damit schlecht verarbeitbar wären.

Die DE-A-196 19 973 skizziert, in nicht nacharbeitbarer Weise, ein Konzept zwei- bzw. dreischichtiger plättchenförmiger Interferenzpigmente. Die Pigmente sollen zumindest eine Lage aufweisen, die aus flüssigkristallinen Polymeren besteht, deren Mesogene zumindest näherungsweise chiral-nematisch und/oder smektisch und/oder cholesterisch geordnet sind. Außerdem ist in den Interferenzpigmenten eine lichtabsorbierende Lage vorgesehen, die zumindest für einen Teil des sichtbaren Lichtspektrums absorbierend ist. Die Pigmente sollen durch Rakeln, Aufwalzen oder Aufsprühen auf eine glatte Unterlage, Aushärten des so erzeugten dünnen Filmes, Aufbringen der lichtabsorbierenden Lage, Aushärten dieser lichtabsorbierenden Lage, gegebenenfalls Aufbringen und Aushärten eines weiteren, nach Zusammensetzung und Lagenstärke mit dem ersten Film übereinstimmenden Filmes, sowie Abziehen und Zerkleinern des ausgehärteten Lagenverbundes erhältlich sein. Konkrete Pigmente werden jedoch nicht offenbart. Im Hinblick auf die stoffliche zusammensetzung der Pigmente wird lediglich gesagt, dass als flüssigkristalline Polymere "flüssigkristalline Hauptoder Seitenketten-Polymere oder Mischungen davon, flüssigkristalline Oligomere oder Oligomermischungen oder flüssigkristalline Monomere oder Monomermischungen in Betracht" kommen. Beispiele zur Herstellung der Pigmente oder die Pigmente enthaltender Lackformulierungen fehlen. Die Offenbarung der DE-A-196 19 973 erschöpft sich daher in rein theoretischen Erörterungen des Konzeptes zwei- oder dreischichtiger Pigmente. Es wird somit keine für den Fachmann nacharbeitbare technische Lehre bereitgestellt.

Die WO 94/22976 und die ihr zugrundeliegende GB-A-2276883 beschreiben zweischichtige cholesterische Pigmente auf der Basis von zwei verschiedenen Polyorganosiloxanen der Firma Wacker. Die Herstellung der Pigmente erfolgt in extrem aufwendiger Weise durch separates Beschichten zweier zuvor mit Nylon beschichteter Glasplatten mit Lösungen der oben genannten Flüssigkristalle; Reiben jeder Flüssigkristallschicht, um diese zu orientieren; Anbringen thermisch deformierbarer Spacer auf den Glasplatten; Aufeinanderlegen der Glasplatten mit einander zugewandten cholesterischen Schichten und Vereinigung der cholesterischen Schichten durch thermische Deformation der Spacer bei erhöhter Temperatur im Vakuum sowie Vernetzen der vereinigten Cholesterschichten. Der so erhältliche Film soll, wie auch die aus ihm durch Mahlen erhältlichen Pigmente, eine Dicke von ungefähr 10 µm aufweisen. Der Film löst sich offensichtlich trotz der vorherigen Beschichtung der Glasplatten mit Nylon nur unvollständig von den Glasplatten, so daß Reste des Films zur Gewinnung der Pigmente von den Platten abgekratzt werden müssen, was die Herstellung der Pigmente noch aufwendiger gestaltet. Das Konzept dreischichtiger Pigmente wird lediglich skizziert. Diese Pigmente sind durch das für zweischichtige Pigmente beschriebene Herstellungsverfahren nicht herstellbar. Die WO 94/22976 bzw. die ihr zugrundeliegende GB-A-2276883 stellen somit keine für den Fachmann nacharbeitbare technische Lehre bereit, die Dreischichtpigmente in irgendeiner Weise verfügbar machen würde. Die Offenbarung erschöpft sich in rein theoretischen Erörterungen des Aufbaus von dreischichtigen Pigmenten.

Insbesondere für eine Anwendung in Automobillacken sind Pigmente mit einem Durchmesser von etwa 20 bis 30 µm erwünscht. Die Pigmente sollen, damit sie sich beispielsweise in einer Lackierung richtig orientieren, ein Verhältnis Pigmentdicke : Pigmentlänge von etwa 1:5 aufweisen. Mit Hilfe bekannter Verfahren lassen sich Mehrschichtpigmente daher nur mit Durchmessern von etwa 70 µm herstellen, die für viele Anwendungen zu groß sind. Auch die herstellung von Pigmenten mit Durchmessern von ≤ 30 µm ist bereits problematisch.

Die mit Hilfe bekannter Verfahren hergestellten Interferenzpigmente müssen für die Absorption des transmittierenden Wellenlängenbereiches entweder zusätzliche Pigmente in der Cholestermatrix enthalten oder auf einen farbigen Untergrund aufgebracht werden. Beim Einbau von Fremdpigmenten in die flüssigkristalline Masse ist von Nachteil, dass durch Absorption und Streulicht ein erheblicher Teil des reflektierenden Wellenbereiches absorbiert bzw. gestreut wird, so dass der besondere Vorteil der Interferenzpigmente auf cholesterischer Basis weitgehend aufgehoben wird. Das gleiche Problem tritt auf, wenn man cholesterische Pigmente mit absorbierenden Pigmenten in Lackzubereitungen einmischt. Farbeindruckstörende Reflexionen sind nur vermeidbar, wenn das absorbierende Pigment möglichst feinteilig in die Cholestermatrix eindispergiert wird. Nach allgemeinen Erfahrungen gelingt dies nur, wenn das Pigment mit eigens auf die Pigmentoberfläche abgestimmten Additiven dispergiert wird. Diese Verbindungen, wie z. B. Fettsäuren, Salze der Fettsäuren, Sojalecithine oder Phosphorsäureester stören jedoch die Ausbildung der helikalen Orientierung und verhindern damit eine optimale Farbausbildung. Erfolgt die Absorption dagegen über eine farbige Unterschicht, ist eine gleichmäßig hohe Untergrundqualität notwendig, um den erwünschten Gesamteindruck der Effektbeschichtung zu erzielen. Daher muss ein erheblicher Aufwand zur Vorbehandlung des Untergrundes getrieben werden. Ein idealer Untergrund für maximale Brillanz müsste schwarz/spiegelglänzend beschaffen sein, was beispielsweise bei Autokarosserien nur sehr schwierig zu realisieren ist.

Der Erfindung liegt daher die Aufgabe zugrunde, Effektpigmente und -folien bereitzustellen, welche die beschriebenen Nachteile des Standes der Technik nicht mehr aufweisen. Eine weitere Aufgabe der vorliegenden Erfindung ist es, ein verbessertes Verfahren zur Herstellung cholesterischer Schichten bereitzustellen.

Überraschenderweise wurde gefunden, dass die der Erfindung zugrunde liegenden Aufgaben gelöst werden können, wenn man zur Herstellung cholesterischer Schichten im Gegensatz zum Stand der Technik ein z. B. durch Verdünnen gießfähig gemachtes cholesterisches Gemisch verwendet.

Gegenstand der vorliegenden Erfindung ist somit ein Verfahren zur Herstellung von cholesterischen Schichten, das dadurch gekennzeichnet ist, dass man auf einen, vorzugsweise beweglichen, Träger wenigstens eine Schicht eines reaktiven, gießfähigen cholesterischen Gemischs, vorzugsweise durch Gießen, aufbringt und eine feste Cholesterenschicht ausbildet, die eine mittlere Schichtdickenschwankung von weniger als ± 0,2 µm besitzt. Vorzugsweise trägt man das reaktive, gießfähige cholesterische Gemisch in der isotropen Phase auf. In einer bevorzugten Ausführungsform verdünnt man das reaktive, gießfähige cholesterische Gemisch vor dem Gießen und bildet die feste Cholesterenschicht gegebenenfalls unter (d. h. während oder nach) Entfernen des Verdünnungsmittels aus. Die Ausbildung der festen Cholesterenschicht kann durch Vernetzung, durch Polymerisation oder durch schnelles Abkühlen unter die Glasübergangstemperatur (Einfrieren der cholesterischen Phase) erfolgen, wobei im Rahmen der vorliegenden Erfindung unter Vernetzung die kovalente Verknüpfung polymerer Verbindungen und unter Polymerisation die kovalente Verknüpfung monomerer Verbindungen zu Polymeren verstanden wird. Unter Härtung wird Vernetzung, Polymerisation oder das Einfrieren der cholesterischen Phase verstanden. Ein Gemisch wird im Rahmen der vorliegenden Erfindung als reaktiv bezeichnet, wenn wenigstens eine in dem Gemisch enthaltene Verbindung zur Ausbildung kovalenter Verknüpfungen befähigt ist.

Der bewegliche Träger ist vorzugsweise bandförmig und besteht z. B. aus einer Metall-, Papier- oder Kunststofffolienbahn.

Die erfindungsgemäße Herstellung cholesterischer Schichten, die ihrerseits wiederum zur Produktion von Effektfolien und Effektpigmenten verwendet werden können, bietet eine Reihe überraschender Vorteile:
a) Entgegen bisheriger Annahmen ist eine Orientierung der Cholester-Helices insbesondere vorteilhaft bei Verwendung verdünnter Cholesterlösungen möglich. Entgegen der allgemeinen Erwartung beobachtet man eine besonders gleichmäßige Ausrichtung der Helices in den erfindungsgemäß hergestellten Schichten.
b) Eine Nachorientierung der gegossenen (noch unpolymerisierten bzw. unvernetzten) Schicht zur Ausrichtung der Cholesteren ist nicht notwendig.
c) Die erzeugten Cholesterschichten besitzen eine extrem homogene Schichtdicke.
d) Äußerst dünne Cholesterschichten sind in reproduzierbarer Weise herstellbar.
e) Die erzeugten Cholesterenschichten sind auf beiden Seiten extrem glatt und deshalb hochglänzend.
f) Farbbrillanz und Glanz der damit hergestellten Effektfolien und -pigmente sind im Vergleich zum Stand der Technik deutlich verbessert.
g) Eine kostengünstige Herstellung von Effektpigmenten und -folien sowie deren Verwendung bei der Serienproduktion von Wirtschaftsgütern, wie z. B. Kraftfahrzeugen, wird erstmals ermöglicht.
h) Brillante mehrschichtige Effektpigmente mit einem Durchmesser von 30 µm, insbesondere ≤ 20 µm, wie sie beispielsweise für Kfz-Lackierungen erwünscht sind, sind in reproduzierbarer Weise herstellbar.
i) Der Farbeindruck der gehärteten Cholesterschicht ist von externen Stimuli weitgehend unabhängig, d. h. über einen weiten Temperatur- und Druckbereich stabil.

Das cholesterische Gemisch wird vorzugsweise mit einem Anteil an Verdünnungsmittel von etwa 5 bis 95 Gew.-%, insbesondere etwa 30 bis 80 Gew.-%, insbesondere etwa 40 bis 70 Gew.-%, besonders bevorzugt etwa 55 bis 60 Gew.-%, jeweils bezogen auf das Gesamtgewicht des aufzubringenden Gemischs, aufgetragen.

Vorzugsweise setzt man in dem erfindungsgemäßen Verfahren ein gießfähiges, reaktives cholesterisches Gemisch ein, das ausgewählt ist unter Gemischen, enthaltend:
a) mindestens ein cholesterisches, polymerisierbares Monomer in einem inerten Verdünnungsmittel; oder
b) mindestens ein achirales, nematisches, polymerisierbares Monomer und eine chirale Verbindung in einem inerten Verdünnungsmittel; oder
c) mindestens ein cholesterisches, vernetzbares Oligomer oder Polymer in einem inerten Verdünnungsmittel; oder
d) ein cholesterisches Polymer in einem polymerisierbaren Verdünnungsmittel; oder
e) mindestens ein cholesterisches Polymer, dessen cholesterische Phase durch schnelles Abkühlen unter die Glasübergangstemperatur eingefroren werden kann.

Bevorzugte Monomere der Gruppe a) sind in der DE-A-196 02 848 beschrieben, auf die hiermit in vollem Umfang Bezug genommen wird. Insbesondere umfassen die Monomere a) mindestens ein chirales, flüssigkristallines, polymerisierbares Monomer der Formel I

[Z¹―Y¹―A¹―Y²―M¹―Y³―]ₙ X (I)

in der die Variablen die folgende Bedeutung haben:
- Z¹: eine polymerisierbare Gruppe oder ein Rest, der eine polymerisierbare Gruppe trägt,
- Y¹,Y²,Y³: unabhängig voneinanderchemische Bindungen, Sauerstoff, Schwefel,

―CO―O―, ―O―CO―,―O―CO―O―,

―CO―N(R)―

oder

―N(R)―CO―,
- A¹: ein Spacer,
- M¹: eine mesogene Gruppe,
- X: ein n-wertiger chiraler Rest,
- R: Wasserstoff oder C₁-C₄-Alkyl,
- n: 1 bis 6,
wobei die Reste Z¹, Y¹, Y², Y³, A¹ und M¹, gleich oder verschieden sein können, wenn n größer als 1 ist.

Bevorzugte Reste Z¹ sind:

CH₂ = CH- , CH ≡ C-,

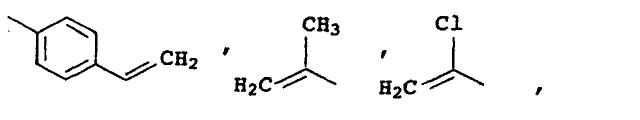

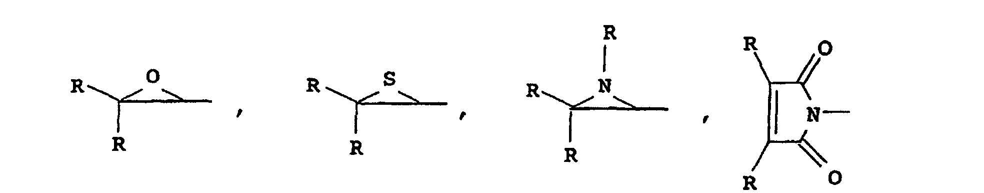

― N = C = O, ― N = C = S, ― O ― C ≡N,

― COOH, ― OH

oder

― NH₂,

wobei die Reste R gleich oder verschieden sein können und Wasserstoff oder C₁-C₄-Alkyl, wie Methyl, Ethyl, n-Propyl, iso-Propyl, n-Butyl, iso-Butyl, sec.-Butyl oder tert.-Butyl, bedeuten. von den reaktiven polymerisierbaren Gruppen können die Cyanate spontan zu Cyanuraten trimerisieren und sind daher bevorzugt. Die anderen genannten Gruppen benötigen zur Polymerisation weitere Verbindungen mit komplementären reaktiven Gruppen. So können beispielsweise Isocyanate mit Alkoholen zu Urethanen und mit Aminen zu Harnstoffderivaten polymerisieren. Analoges gilt für Thiirane und Aziridine. Carboxylgruppen können zu Polyestern und Polyamiden kondensiert werden. Die Maleinimidogruppe eignet sich besonders zur radikalischen Copolymerisation mit olefinischen Verbindungen wie Styrol. Die komplementären reaktiven Gruppen können dabei entweder in einer zweiten erfindungsgemäßen Verbindung vorhanden sein, die mit der ersteren gemischt wird, oder sie können durch Hilfsverbindungen, die 2 oder mehr dieser komplementären Gruppen enthalten, in das polymere Netzwerk eingebaut werden.

Besonders bevorzugte Gruppierungen Z¹-Y¹ sind Acrylat und Methacrylat.

Y¹-Y³ können die oben genannten Bedeutungen haben, wobei unter einer chemischen Bindung eine kovalente Einfachbindung verstanden werden soll.

Als Spacer A¹ kommen alle für diesen Zweck bekannten Gruppen in Betracht. Die Spacer enthalten in der Regel 1 oder mehrere, wie z. B. 2 bis 30, vorzugsweise 1 bis 12 oder 2 bis 12 C-Atome und bestehen aus linearen aliphatischen Gruppen. Sie können in der Kette z.B. durch O, S, NH oder NCH₃ unterbrochen sein, wobei diese Gruppen nicht benachbart sein dürfen. Als Substituenten für die Spacerkette kommen dabei noch Fluor, Chlor, Brom, Cyan, Methyl oder Ethyl in Betracht.

Repräsentative Spacer sind beispielsweise:

-(CH₂)ₚ-, -(CH₂CH₂O)ₘCH₂CH₂-, -CH₂CH₂SCH₂CH₂-, -CH₂CH₂NHCH₂CH₂-,

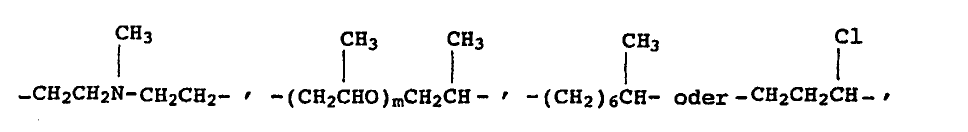

wobei
- m: für 1 bis 3 und
- p: für 1 bis 12 steht.

Die mesogene Gruppe M¹ hat vorzugsweise die Struktur

(T-Y⁸)ₛ-T

wobei Y⁸ ein Brückenglied gemäß einer der Definitionen von Y¹, s eine Zahl von 1 bis 3 und T gleiche oder verschiedene zweiwertige isocycloaliphatische, heterocycloaliphatische, isoaromatische oder heteroaromatische Reste bedeuten.

Die Reste T können auch durch C₁-C₄-Alkyl, Fluor, Chlor, Brom, Cyan, Hydroxy oder Nitro substituierte Ringsysteme sein. Bevorzugte Reste T sind:

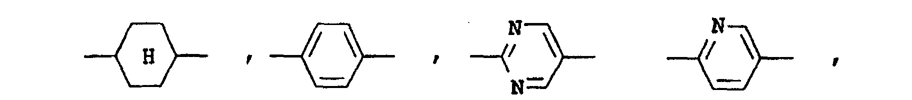

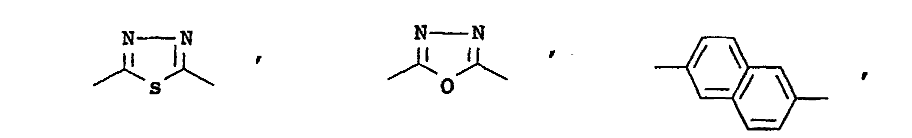

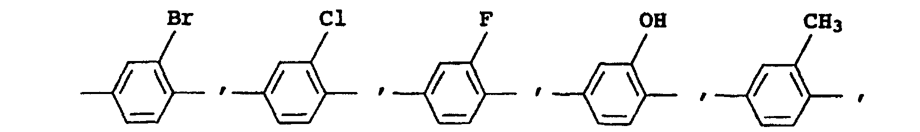

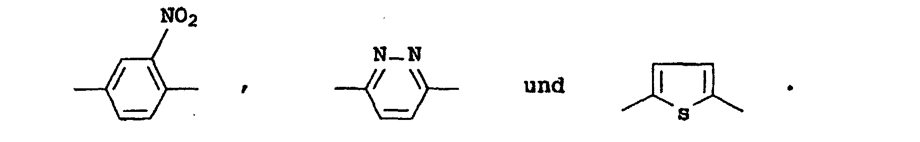

Besonders bevorzugt sind die folgenden mesogenen Gruppen M¹:

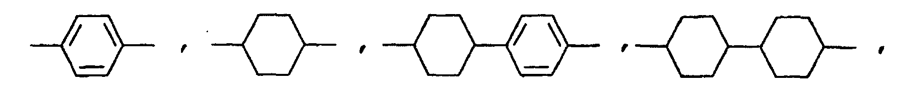

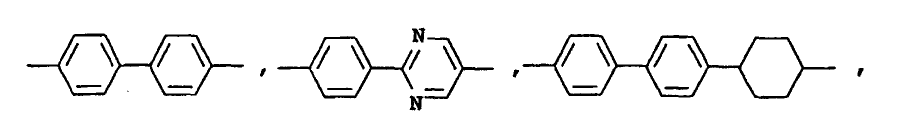

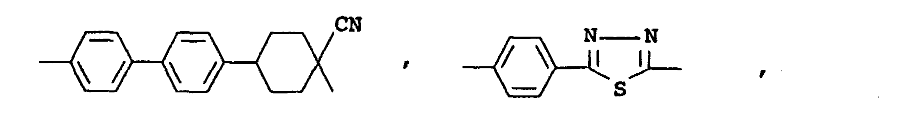

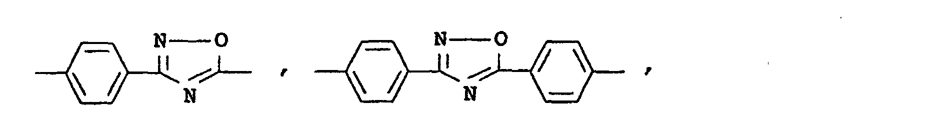

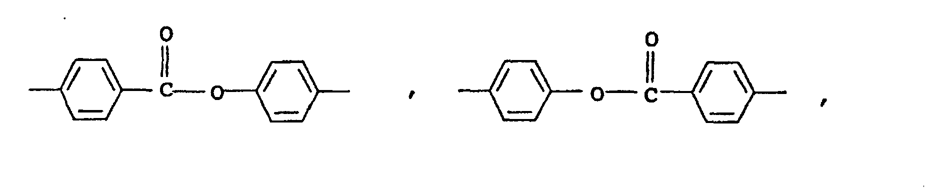

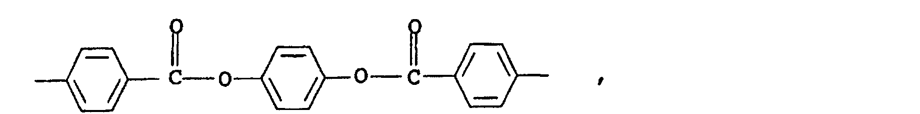

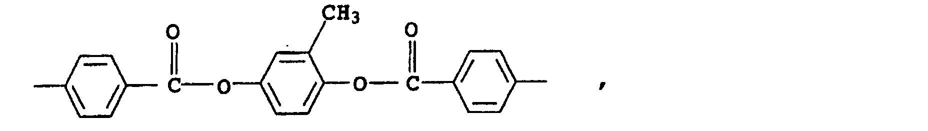

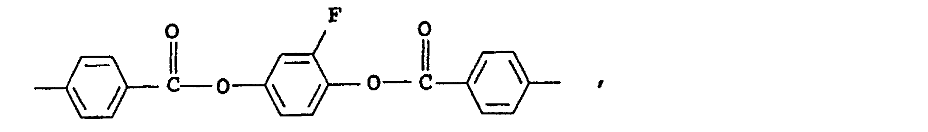

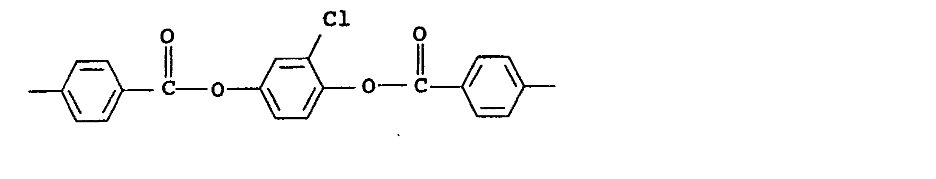

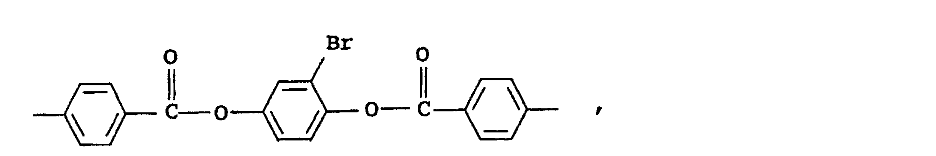

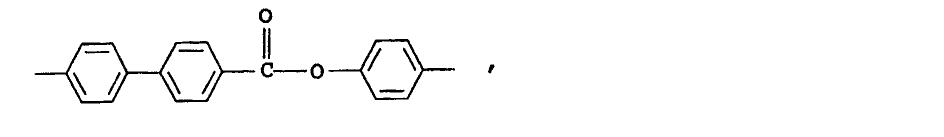

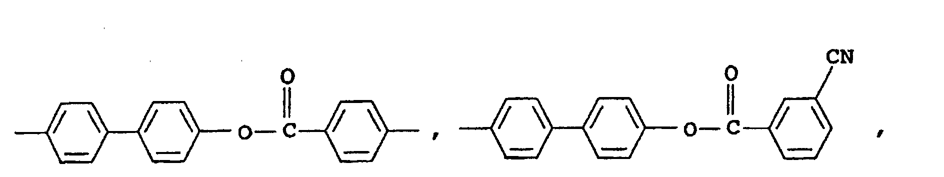

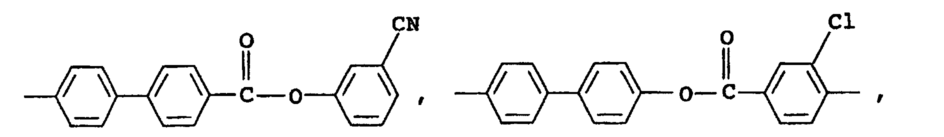

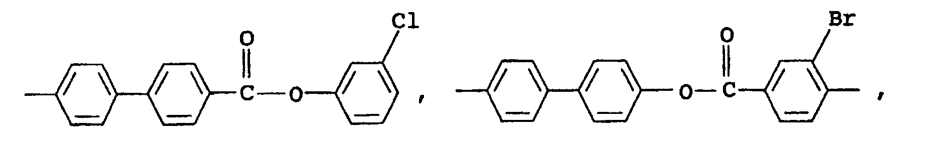

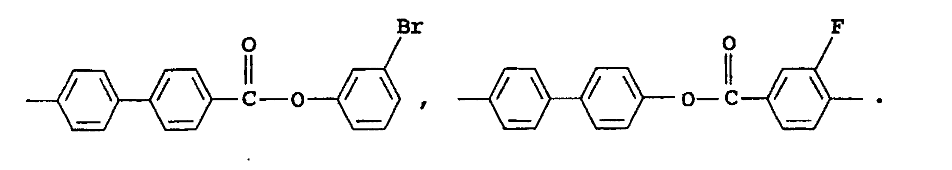

Von den chiralen Resten X der Verbindungen der Formel I sind u.a. aufgrund der Verfügbarkeit insbesondere solche bevorzugt, die sich von Zuckern, Binaphthyl- oder Biphenylderivaten sowie optisch aktiven Glykolen, Dialkoholen oder Aminosäuren ableiten. Bei den Zuckern sind insbesondere Pentosen und Hexosen und davon abgeleitete Derivate zu nennen.

Beispiele für Reste X sind die folgenden Strukturen, wobei die endständigen Striche jeweils die freien Valenzen bedeuten.

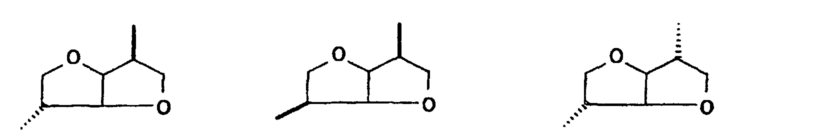

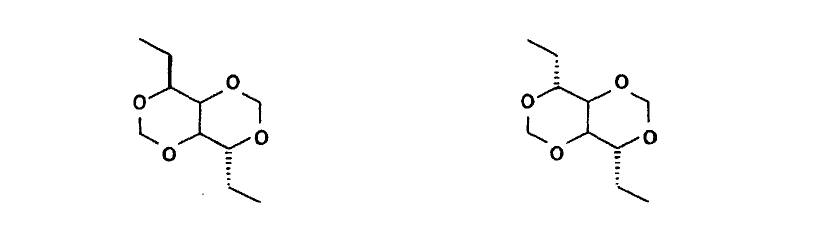

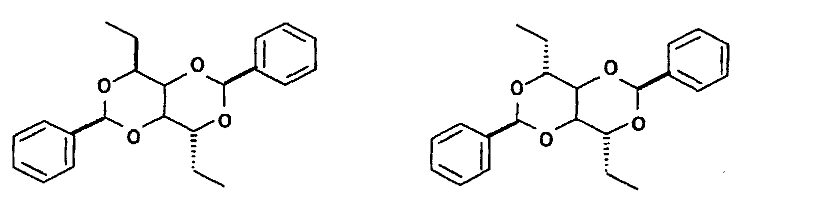

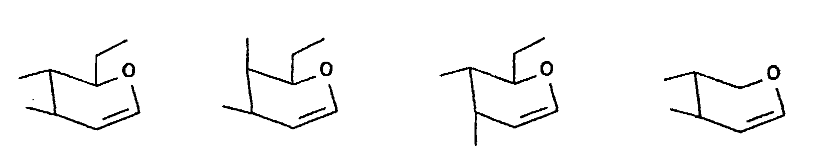

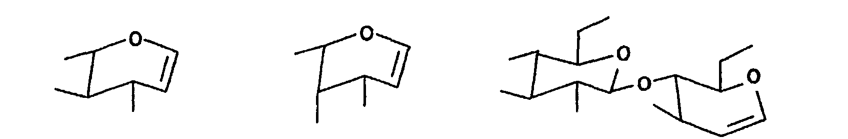

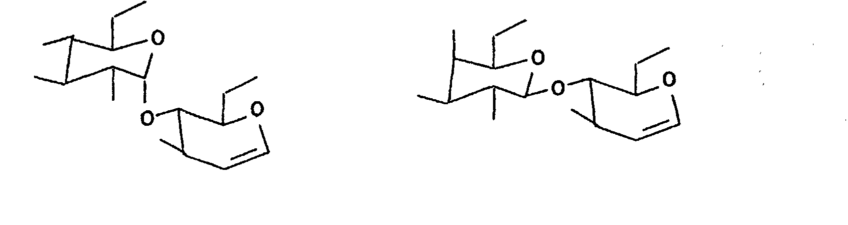

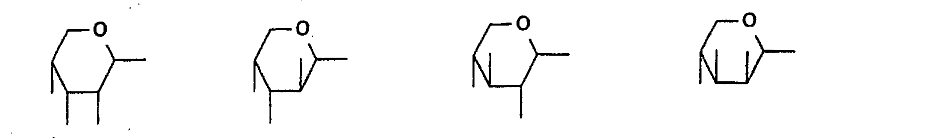

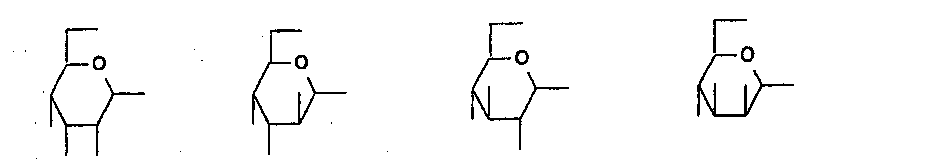

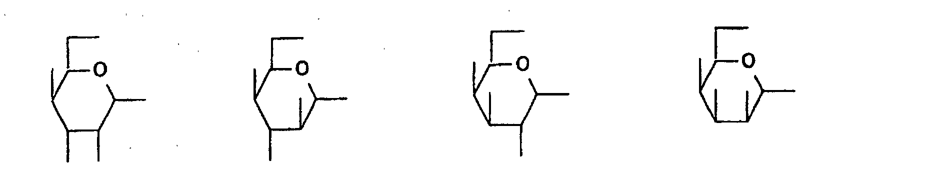

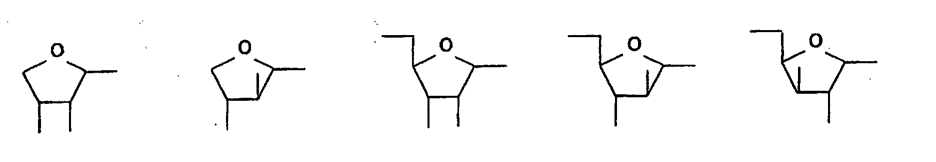

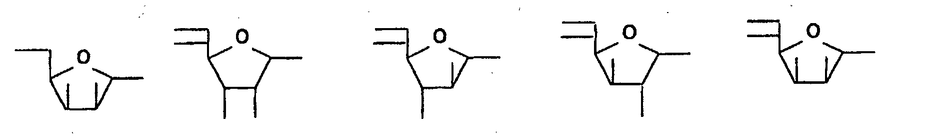

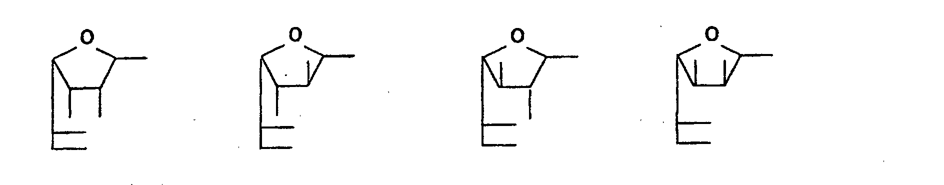

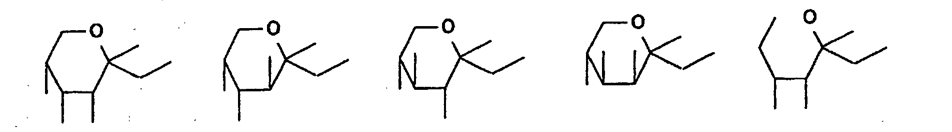

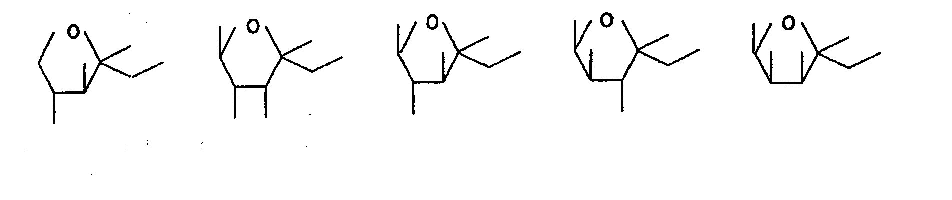

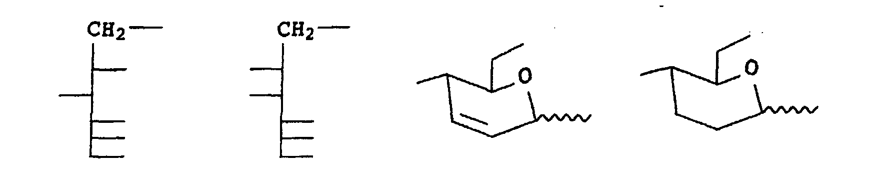

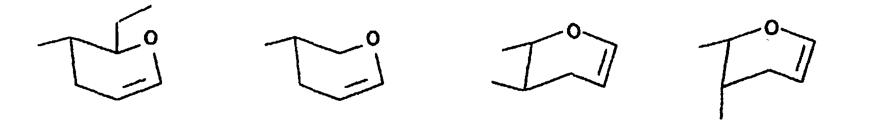

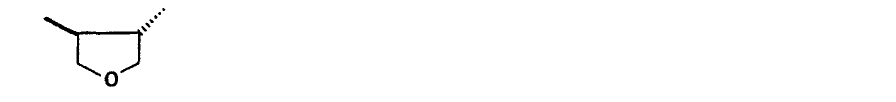

Besonders bevorzugt sind 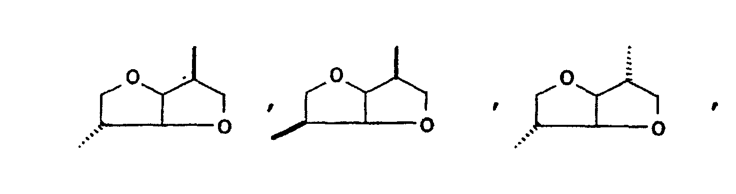 und

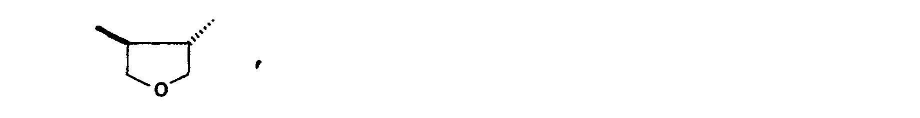

Weiterhin sind auch chirale Gruppen geeignet, die folgende Strukturen aufweisen: 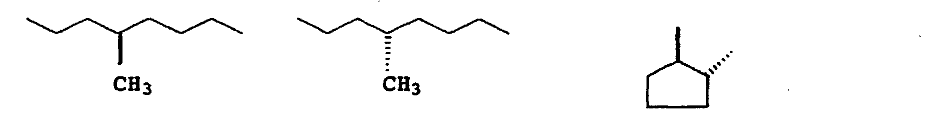 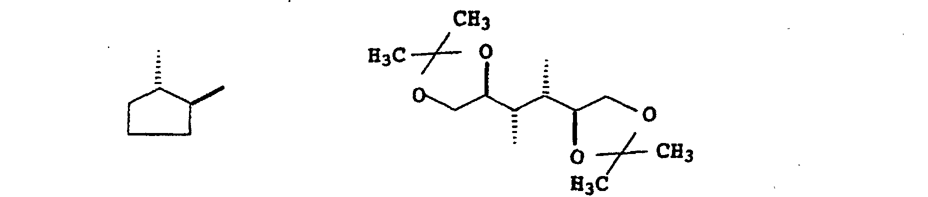 Weitere Beispiele sind in der deutschen Anmeldung P 43 42 280.2 aufgeführt.
- n: ist bevorzugt 2.

Als bevorzugte Monomere der Gruppe b) enthält das polymerisierbare Gemisch im erfindungsgemäßen Verfahren mindestens ein achirales flüssigkristallines polymerisierbares Monomer der Formel II

Z²―Y⁴―A²―Y⁵―M²―Y⁶―A³―Y⁷―Z³)ₙ (II)

in der die Variablen die folgende Bedeutung haben:
- Z²,Z³: gleiche oder verschiedene polymerisierbare Gruppen oder Reste, die eine polymerisierbare Gruppe enthalten
- n: 0 oder 1
- Y⁴, Y⁵, Y⁶, Y⁷: unabhängig voneinander chemische Bindungen, Sauerstoff, Schwefel,

―CO―O―,―O―CO―,―O―CO―O―,

―CO―N(R)―

oder

―N(R)―CO―,
- A²,A³: gleiche oder verschiedene Spacer und
- M²: eine mesogene Gruppe.

Dabei gelten für die polymerisierbaren Gruppen, die Brückenglieder Y⁴ bis Y^{7,} die Spacer und die mesogene Gruppe die gleichen Bevorzugungen wie für die entsprechenden Variablen der Formel I.

Außerdem enthält das Gemisch nach b) eine chirale Verbindung. Die chirale Verbindung bewirkt die Verdrillung der achiralen flüssigkristallinen Phase zu einer cholesterischen Phase. Dabei hängt das Ausmaß der Verdrillung von der Verdrillungsfähigkeit des chiralen Dotierstoffs und von seiner Konzentration ab. Damit hängt also die Ganghöhe der Helix und wiederum auch die Interferenzfarbe von der Konzentration des chiralen Dotierstoffs ab. Es kann daher für den Dotierstoff kein allgemeingültiger Konzentrationsbereich angegeben werden. Der Dotierstoff wird in der Menge zugegeben, bei der der gewünschte Farbeffekt entsteht.

Bevorzugte chirale Verbindungen sind solche der Formel Ia

[Z¹―Y¹―A¹―Y²―M^{a}―Y³―]ₙ X (Ia),

in der Z¹, Y¹, Y², Y³, A¹, X und n die obengenannten Bedeutung haben und M^{a} ein zweiwertiger Rest ist, der mindestens ein heterooder isocyclisches Ringsystem enthält.

Der Molekülteil M^{a} ähnelt dabei den beschriebenen mesogenen Gruppen, da auf diese Weise eine besonders gute Kompatibilität mit der flüssigkristallinen Verbindung erreicht wird. M^{a} muß jedoch nicht mesogen sein, da die Verbindung Ia lediglich durch ihre chirale Struktur eine entsprechende Verdrillung der flüssigkristallinen Phase bewirken soll. Bevorzugte Ringsysteme, die in M^{a} enthalten sind, sind die oben erwähnten Strukturen T, bevorzugte Strukturen M^{a} solche der oben genannten Formel (T-Y⁸)ₛ-T. Weitere Monomere und chirale Verbindungen der Gruppe b) sind in der WO 97/00600 und der ihr zugrundeliegenden DE-A-195 324 08 beschrieben, auf die hiermit in vollem Umfang Bezug genommen wird.

Bevorzugte Polymere der Gruppe c) sind cholesterische Cellulosederivate, wie sie in der DE-A-197 136 38 beschrieben werden, insbesondere cholesterische Mischester von
(VI) Hydroxyalkylethern der Cellulose mit
(VII) gesättigten, aliphatischen oder aromatischen Carbonsäuren und
(VIII) ungesättigten Mono- oder Dicarbonsäuren.

Besonders bevorzugt sind Mischester, bei denen die über Etherfunktionen gebundenen Hydroxyalkylreste der Komponente VI geradkettige oder verzweigte C₂-C₁₀-Hydroxyalkylreste, insbesondere Hydroxypropyl- und/oder Hydroxyethylreste umfassen. Die Komponente VI der erfindungsgemäßen Mischester weist vorzugsweise ein Molekulargewicht von etwa 500 bis etwa 1 Million auf. Bevorzugtermaßen sind die Anhydroglukose-Einheiten der Cellulose mit einem durchschnittlichen molaren Substitutionsgrad von 2 bis 4 mit Hydroxyalkylresten verethert. Die Hydroxyalkylgruppen in der Cellulose können gleich oder verschieden sein. Bis zu 50 % davon können auch durch Alkylgruppen (insbesondere C₁-C₁₀-Alkylgruppen) ersetzt werden. Ein Beispiel hierfür ist die Hydroxypropylmethylcellulose.

Als Komponente VII der einsetzbaren Mischester sind geradkettige aliphatische C₁-C₁₀-Carbonsäuren, insbesondere C₂-C₆-Carbonsäuren, verzweigte aliphatische C₄-C₁₀-Carbonsäuren, insbesondere C₄-C₆-Carbonsäuren oder geradkettige oder verzweigte Halogencarbonsäuren brauchbar. Die Komponente VII kann auch Benzoesäure oder aromatisch substituierte aliphatische Carbonsäuren, insbesondere Phenylessigsäure sein. Besonders bevorzugt ist die Komponente VII ausgewählt unter Essigsäure, Propionsäure, n-Buttersäure, Isobuttersäure oder n-Valeriansäure, insbesondere unter Propionsäure, 3-Cl-Propionsäure, n-Buttersäure oder Isobuttersäure.

Vorzugsweise ist die Komponente VIII ausgewählt unter ungesättigten C₃-C₁₂-Mono- oder Dicarbonsäuren oder Halbestern einer derartigen Dicarbonsäure, insbesondere α,β-ethylenisch ungesättigten C₃-C₆-Mono- oder Dicarbonsäuren oder Halbestern der Dicarbonsäuren.

Die Komponente VIII der einsetzbaren Mischester ist besonders bevorzugt ausgewählt unter Acrylsäure, Methacrylsäure, Crotonsäure, Vinylessigsäure, Maleinsäure, Fumarsäure oder Undecensäure, insbesondere unter Acrylsäure oder Methacrylsäure.

vorzugsweise ist die Komponente VI mit einem durchschnittlichen molaren Substitutionsgrad von 1,5 bis 3, insbesondere von 1,6 bis 2,7, besonders bevorzugt von 2,3 bis 2,6 mit der Komponente VII und VIII verestert. Vorzugsweise sind etwa 1 bis 30 %, insbesondere 1 bis 20 % oder 1 bis 10 %, besonders bevorzugt etwa 5 bis 7 % der OH-Gruppen der Komponente VI mit der Komponente VIII verestert.

Das Mengenverhältnis der Komponente VII zu Komponente VIII bestimmt den Farbton des Polymers.

Gut geeignete Polymere der Gruppe c) sind außerdem die in der DE-A-197 17 371 beschriebenen, propargylterminierten, cholesterischen Polyester oder Polycarbonate.

Weiterhin sind vernetzbare Oligo- oder Polyorganosiloxane einsetzbar, wie sie z. B. aus der EP-A-0 358 208, der DE-A-195 41 820 oder der DE-A-196 19 460 bekannt sind.

Bevorzugt unter diesen Verbindungen sind Polyester oder Polycarbonate mit wenigstens einer Propargylendgruppe der Formel R³C≡C-CH₂-, worin R³ für H, C₁-C₄-Alkyl, Aryl oder Ar-C₁-C₄-alkyl (z. B. Benzyl oder Phenethyl) steht, die direkt oder über ein Bindeglied an die Polyester oder Polycarbonate gebunden ist. Das Bindeglied ist vorzugsweise ausgewählt unter

-O-, -S-, -NR⁴-,

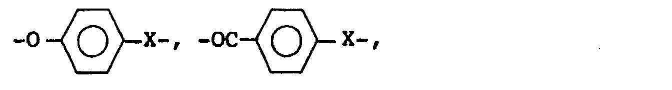

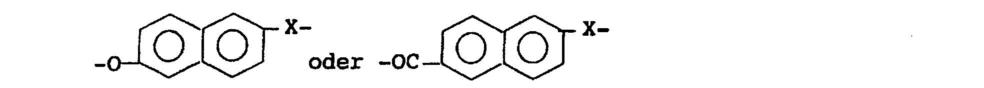

(die Propargylguppe ist an X gebunden),
worin R⁴ für H, C₁-C₄-Alkyl oder Phenyl steht, X für O, S oder MR² steht, und R² für H, C₁-C₄-Alkyl oder Phenyl steht.

Vorzugsweise ist in den Polyestern die Propargylendgruppe über 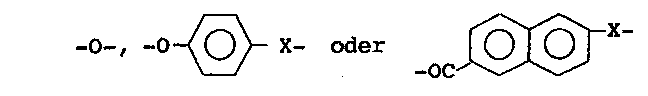 (X = O, S) gebunden.

Die Polyester enthalten vorzugsweise
(IX) mindestens eine aromatische oder araliphatische Dicarbonsäureeinheit und/oder mindestens eine aromatische oder araliphatische Hydroxycarbonsäureeinheit und
(X) mindestens eine Dioleinheit.

Bevorzugte Dicarbonsäureeinheiten sind solche der Formel 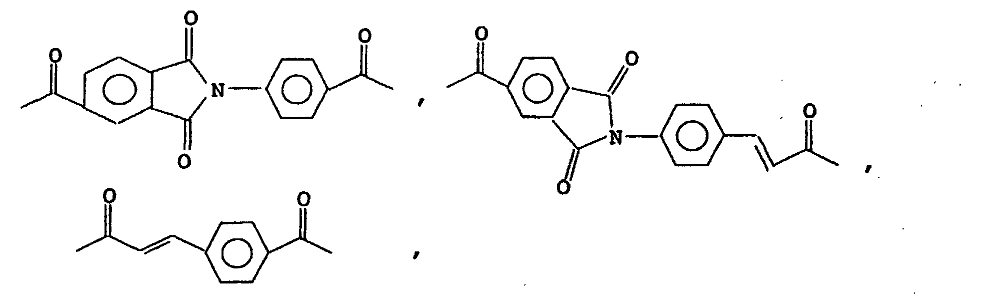 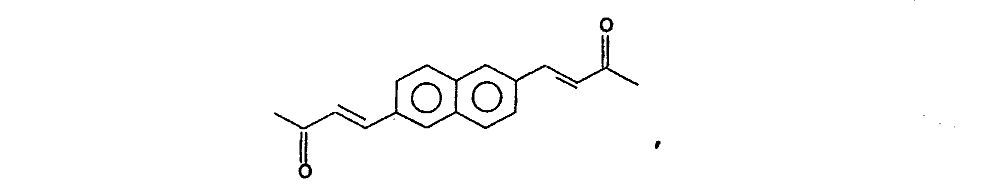 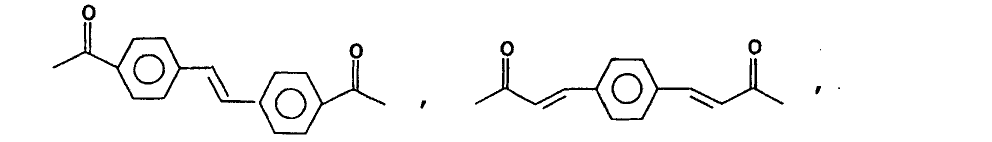 insbesondere solche der Formel 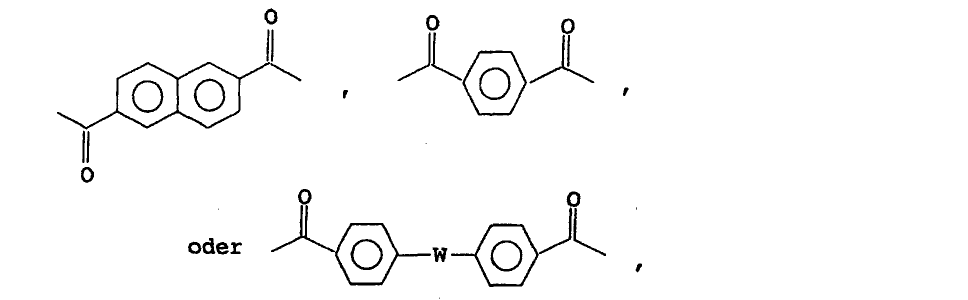 wobei jede der Phenylgruppen bzw. die Naphthylgruppe 1, 2 oder 3 Substituenten aufweisen kann, die unabhängig voneinander ausgewählt sind unter C₁-C₄-Alkyl, C₁-C₄-Alkoxy, Halogen oder Phenyl, wobei in den obigen Formeln
- W: für NR, S, O, (CH₂)ₚO(CH₂)_{q}, (CH₂)ₘ oder eine Einfachbindung steht,
- R: Alkyl oder Wasserstoff bedeutet,
- m: eine ganze Zahl von 1 bis 15 bedeutet, und
- p und q: unabhängig voneinander für ganze Zahlen von 0 bis 10 stehen.

Bevorzugte Hydroxycarbonsäureeinheiten sind solche der Formel 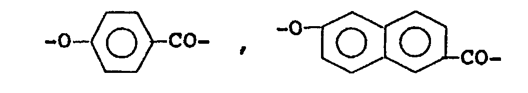 und 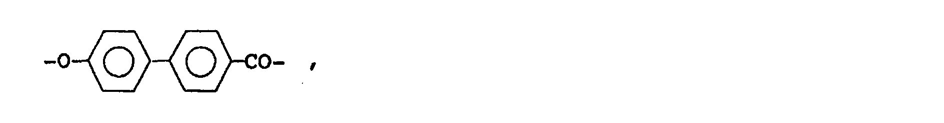 wobei jede Phenylgruppe oder die Naphthylgruppe 1, 2 oder 3 Substituenten aufweisen kann, die unabhängig voneinander ausgewählt sind unter C₁-C₄-Alkyl, C₁-C₄-Alkoxy, Halogen oder Phenyl.

Bevorzugte Dioleinheiten sind solche der Formel 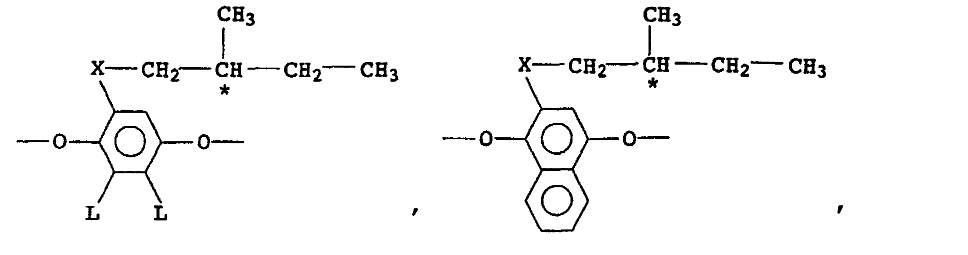 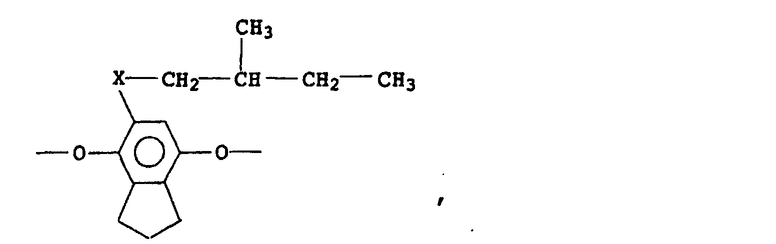 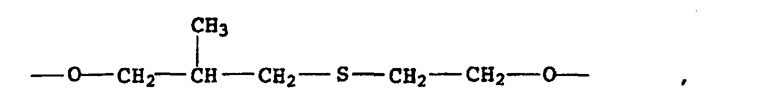 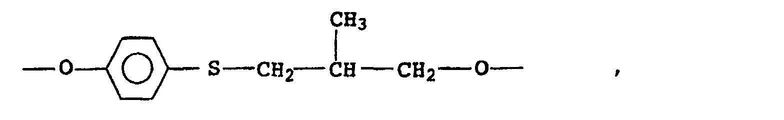 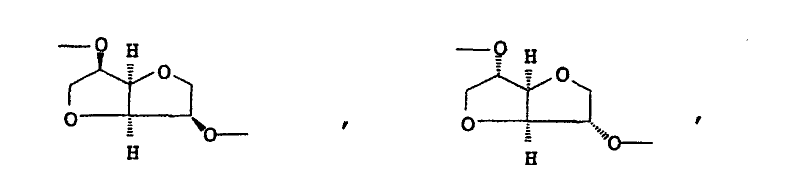 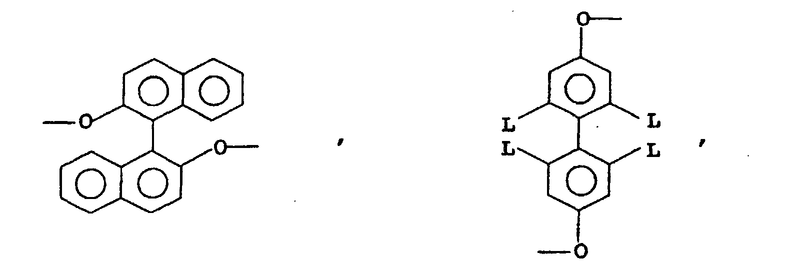 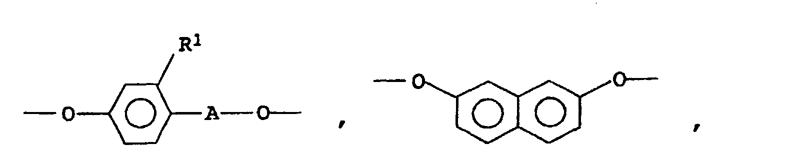 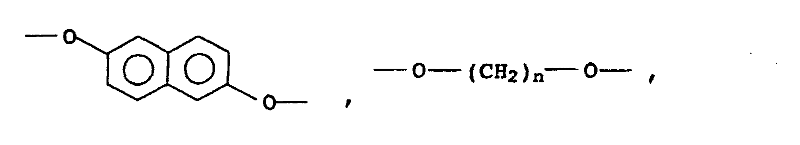 insbesondere solche der Formel 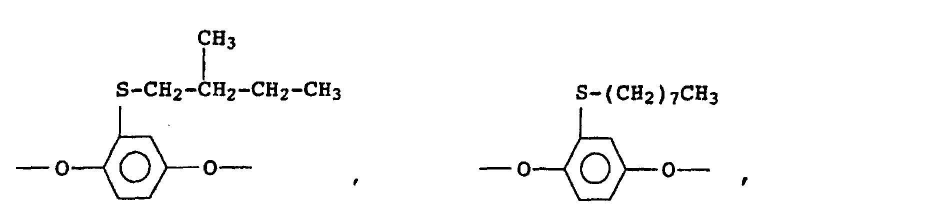 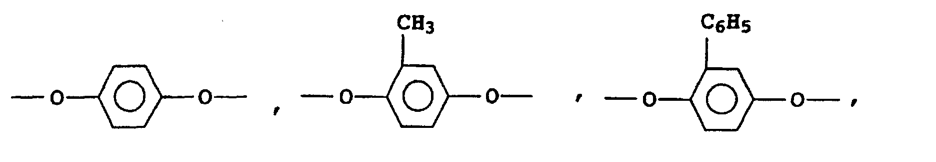 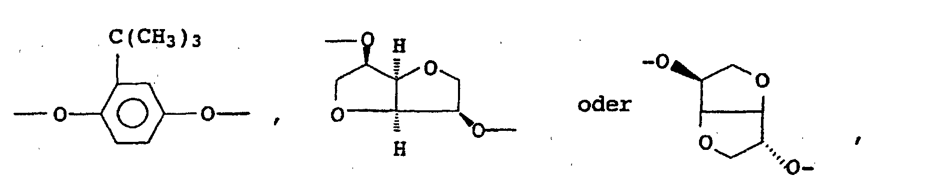 wobei in den obigen Formeln
- L: für Alkyl, Alkoxy, Halogen, COOR, OCOR, CONHR oder NHCOR steht,
- X: für S, O, N, CH₂ oder eine Einfachbindung steht,
- A: eine Einfachbindung, (CH₂)ₙ, O(CH₂)ₙ, S(CH₂)ₙ, NR(CH₂)ₙ, 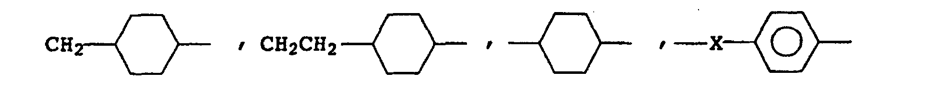 oder 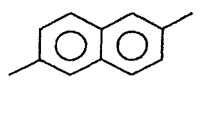 bedeutet,
- R: Alkyl oder Wasserstoff bedeutet,
- R¹: Wasserstoff, Halogen, Alkyl oder Phenyl bedeutet und
- n: eine ganze Zahl von 1 bis 15 bedeutet.

Bevorzugt sind Polyester, die mindestens eine Dicarbonsäureeinheit der Formel 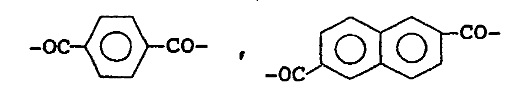 oder 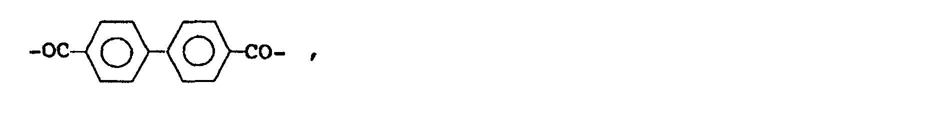 und mindestens eine Dioleinheit der Formel 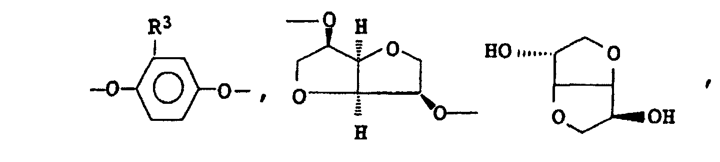 wobei R³ für H, Halogen, C₁-C₄-Alkyl, insbesondere CH₃ oder C(CH₃)₃, oder Phenyl steht, enthalten.

Weitere bevorzugte Verbindungen sind Diester der Formel P-Y-B-CO-O-A-O-CO-B-Y-P, worin P für eine Propargylendgruppe der oben definierten Formel steht, Y für O, S oder NR² (R² = C₁-C₄-Alkyl) steht, B für 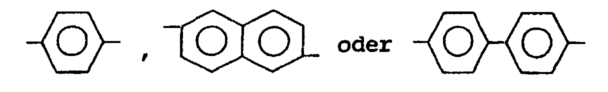 steht, wobei jede Phenylgruppe oder die Naphthylgruppe 1, 2 oder 3 Substituenten aufweisen kann, die unabhängig voneinander ausgewählt sind unter C₁-C₄-Alkyl, C₁-C₄-Alkoxy, Halogen oder Phenyl, und A (zusammen mit den benachbarten Sauerstoffatomen) für eine der oben genannten Dioleinheiten steht.

Besonders bevorzugte Diester sind solche der oben genannten Formel, in der B für 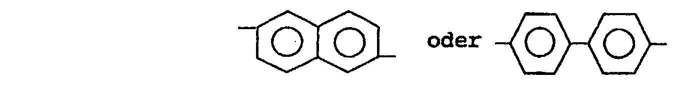 steht, und insbesondere Diester der Formel

HC ≡CCH₂O-B-CO-O-A-O-CO-B-OCH₂-C≡CH,

worin
(XI)
   B für 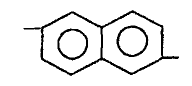 und
   A für 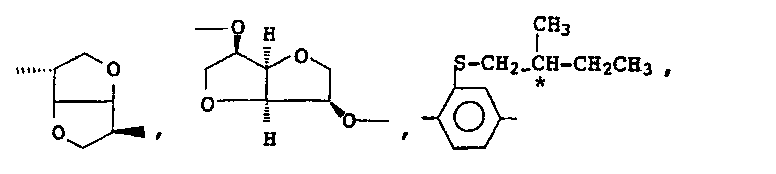 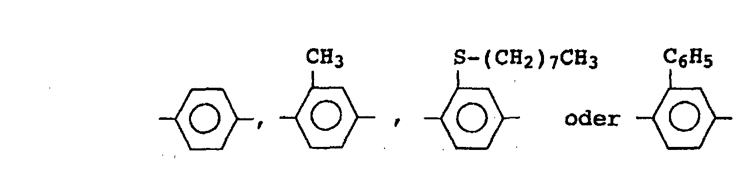 steht, oder
(XII)
   B für 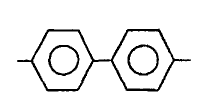 steht, und
   A die unter XI genannten Bedeutungen besitzt.

Weitere bevorzugte Verbindungen sind Polycarbonate, die mindestens eine Dioleinheit der oben genannten Formeln,
insbesondere der Formeln 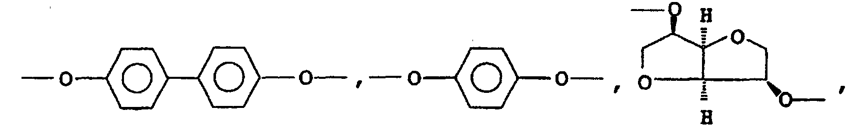 oder 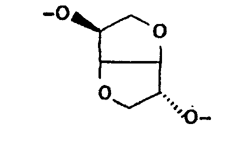 eingebaut enthalten.

Bevorzugte Polycarbonate sind dabei solche, die als Dioleinheiten mindestens eine mesogene Einheit der Formel 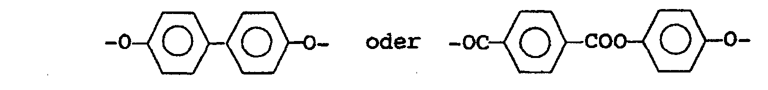 und mindestens eine chirale Einheit der Formel 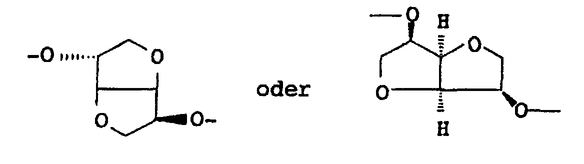 und gegebenenfalls eine nicht-chirale Einheit der Formel 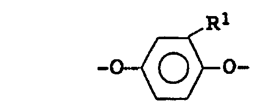 enthalten, wobei R¹ die oben angegebenen Bedeutungen besitzt und insbesondere für H oder CH₃ steht.

Besonders bevorzugte Polycarbonate sind solche mit Propargylendgruppen der Formel HC≡CCH₂O-R⁵-CO, worin R⁵ für 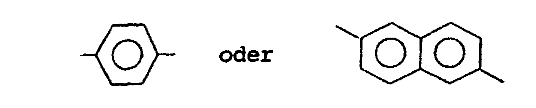 steht.

Als Polymere der Gruppe c) sind außerdem cholesterische Polycarbonate, die auch an nicht-terminaler Position photoreaktive Gruppen enthalten, geeignet. Solche Polycarbonate werden in der DE-A-196 31 658 beschrieben. Sie entsprechen vorzugsweise der Formel XIII 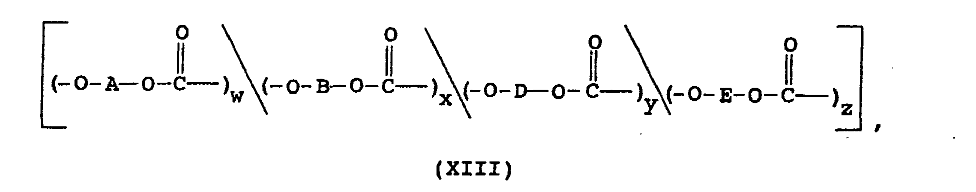 wobei das Molverhältnis w/x/y/z etwa 1 bis 20/etwa 1 bis 5/etwa 0 bis 10/etwa 0 bis 10 beträgt. Besonders bevorzugt ist ein Molverhältnis w/x/y/z von etwa 1 bis 5/etwa 1 bis 2/etwa 0 bis 5/etwa 0 bis 5.

In der Formel XIII steht
- A: für eine mesogene Gruppe der Formel 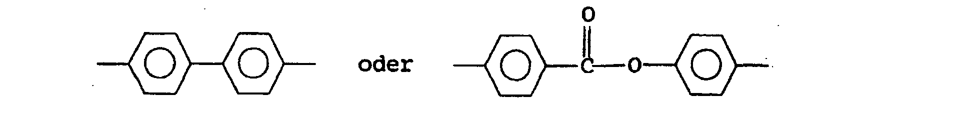
- B: für eine chirale Gruppe der Formel 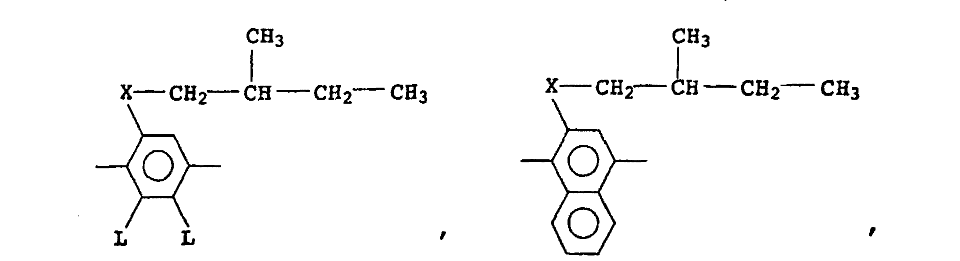 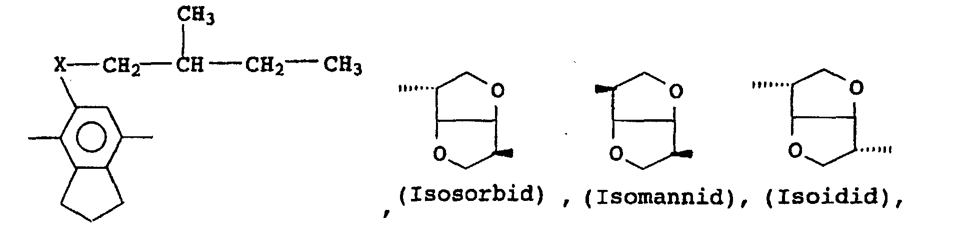 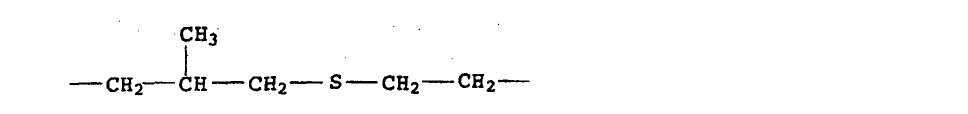 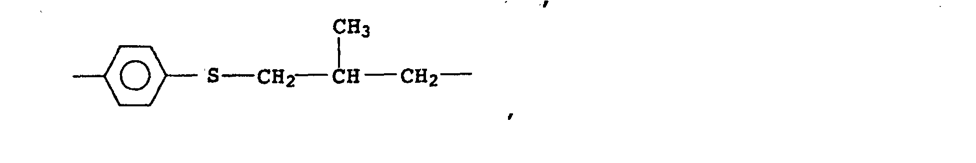 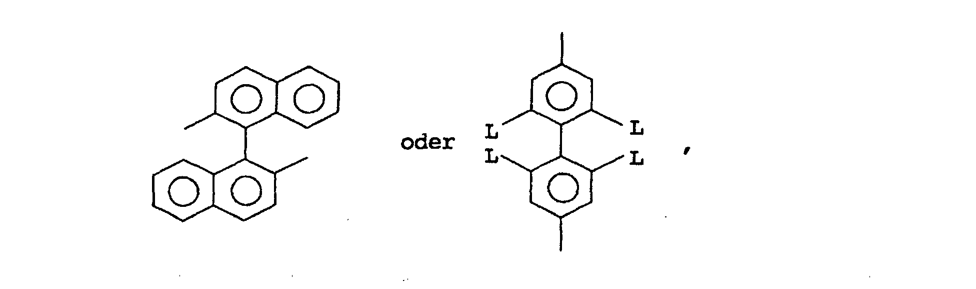
- D: für eine photoreaktive Gruppe der Formel 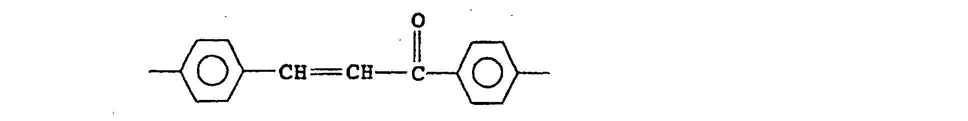 oder 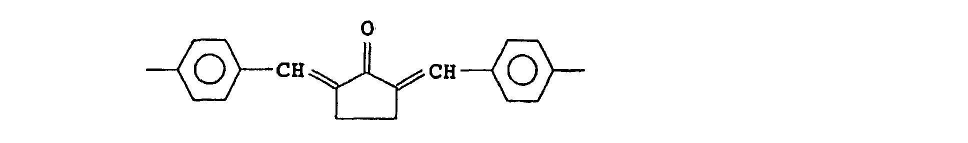 und
- E: für eine weitere, nicht-chirale Gruppe der Formel 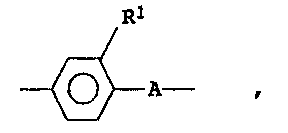
wobei in den obigen Formeln
- L: für Alkyl, Alkoxy, Halogen, COOR, OCOR, CONHR oder NHCOR steht,
- X: für S, O, N, CH₂ oder eine Einfachbindung steht,
- R: für Alkyl oder Wasserstoff steht,
- A: eine Einfachbindung, (CH₂)ₙ, O(CH₂)ₙ, S(Cu₂)ₙ, NR(CH₂)ₙ, 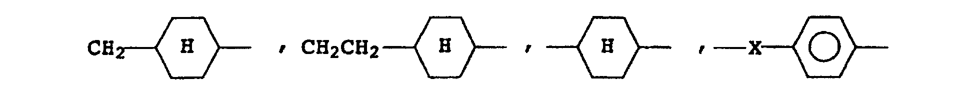 oder 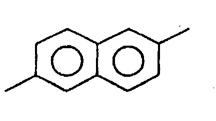 bedeutet,
- R¹: Wasserstoff, Halogen, Alkyl oder Phenyl bedeutet und
- n: eine ganze Zahl von 1 bis 15 bedeutet.

Wenn R¹ für Alkyl, Halogen und A für eine Einfachbindung stehen oder wenn R¹ für H oder Alkyl und A für

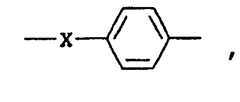

―O(CH₂)₃―, ―S(CH₂)ₙ

order

―NR(CH₂)ₙ

steht, handelt es sich um löslichkeitsverbessernde Gruppen. Beispiele hierfür sind

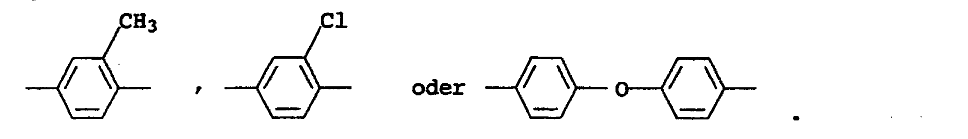

Isosorbid, Isomannid und/oder Isoidid ist die bevorzugte chirale Komponente.

Der Anteil der chiralen Diolstruktureinheiten liegt bevorzugt im Bereich von 1 bis 80 mol-% des Gesamtgehaltes an Diolstruktureinheiten, besonders bevorzugt 2 bis 20 mol-%, je nach gewünschtem Interferenzfarbton.

Geeignete Polymere der Gruppe e) sind chiral nematische Polyester mit flexiblen Ketten, die Isosorbid-, Isomannid- und/oder Isoidideinheiten, vorzugsweise Isosorbideinheiten, umfassen und zur Flexibilisierung der Ketten mindestens eine Einheit enthalten, die ausgewählt ist unter (und abgeleitet von)
(a) aliphatischen Dicarbonsäuren,
(b) aromatischen Dicarbonsäuren mit flexiblem Spacer,
(c) α,ω-Alkanoiden,
(d) Diphenolen mit flexiblem Spacer und
(e) Kondensationsprodukten aus einem Polyalkylenterephthalat oder Polyalkylennaphthalat mit einem acylierten Diphenol und einem acylierten Isosorbid,
wie sie in der DE-A-197 04 506 beschrieben werden.

Die Polyester sind nicht kristallin und bilden stabile Grandjean-Texturen aus, die sich beim Abkühlen unter die Glasübergangstemperatur einfrieren lassen. Die Glasübergangstemperaturen der Polyester wiederum liegen trotz der Flexibilisierung oberhalb von 80 °C, vorzugsweise oberhalb von 90 °C, insbesondere oberhalb von 100 °C.

Die einsetzbaren Polyester enthalten als Einheiten (a) vorzugsweise solche der Formel

― OC ―(CH₂)ₙ―CO―

wobei n für eine Zahl im Bereich von 3 bis 15, insbesondere 4 bis 12 steht und besonders bevorzugt Adipinsäure;
als Einheiten (b) vorzugsweise solche der Formel 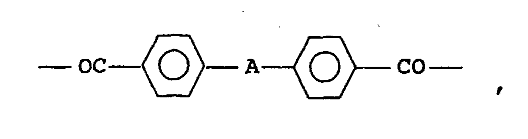 wobei
- A: für (CH₂)ₙ, O(CH₂)ₙO oder (CH₂)ₒ-O-(CH₂)ₚ steht,
- n: für eine Zahl im Bereich von 3 bis 15, insbesondere 4 bis 12, besonders bevorzugt 4 bis 10 steht und
- o und p: unabhängig voneinander für eine Zahl im Bereich von 1 bis 7 stehen;
als Einheiten (c) vorzugsweise solche der Formel

―O―(CH₂)ₙ―O―

oder

― O―(CH₂―CH₂―O)ₘ― ,

wobei
- n: für eine Zahl im Bereich von 3 bis 15, insbesondere 4 bis 12, besonders bevorzugt 4 bis 10 steht und
- m: für eine Zahl im Bereich von 1 bis 10 steht; und
als Einheiten (d) vorzugsweise solche der Formel 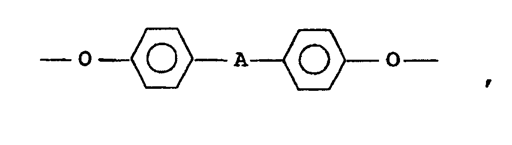 wobei
- A: für (CH₂)ₙ, O(CH₂)ₙO oder (CH₂)ₒ-O-(CH₂)ₚ steht,
- n: für eine Zahl im Bereich von 3 bis 15, insbesondere 4 bis 12, besonders bevorzugt 4 bis 10 steht und
- o und p: unabhängig voneinander für eine Zahl im Bereich von 1 bis 7 stehen.

Die einsetzbaren Polyester enthalten außerdem als nicht flexible Säurekomponente vorzugsweise Dicarbonsäureeinheiten der Formel 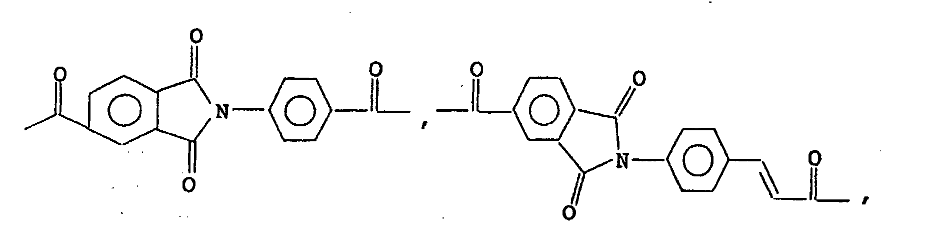 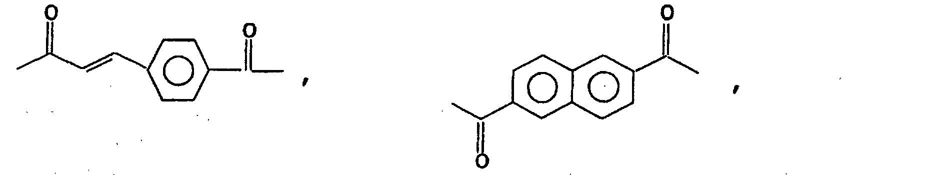 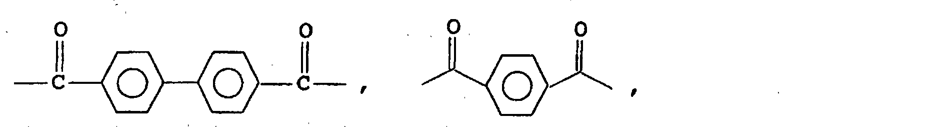 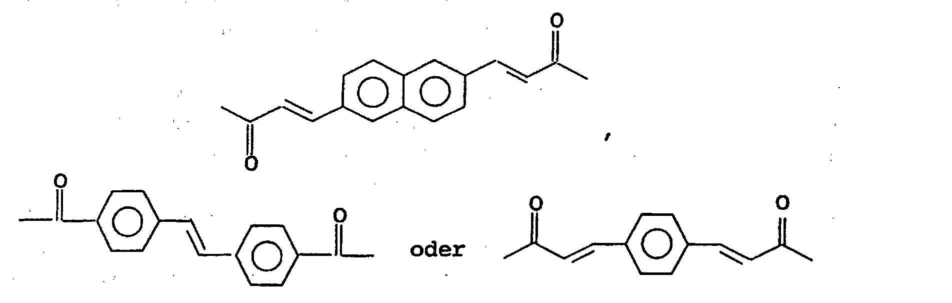 und als nicht flexible Alkoholkomponente Dioleinheiten der Formel 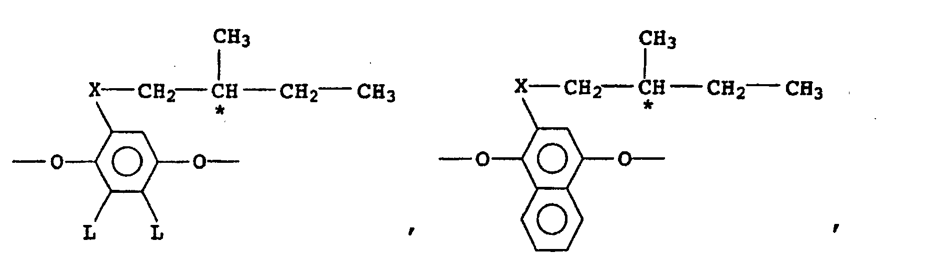 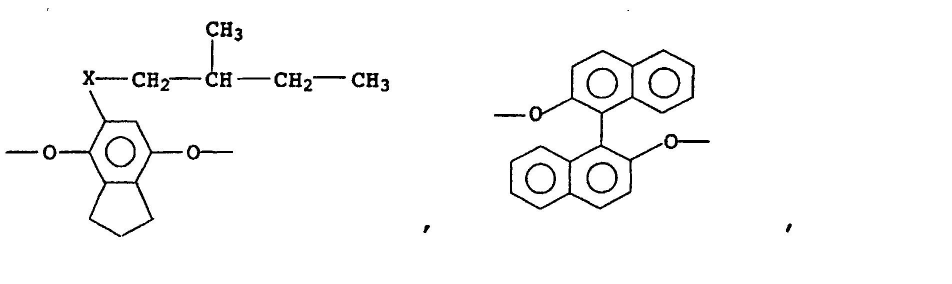 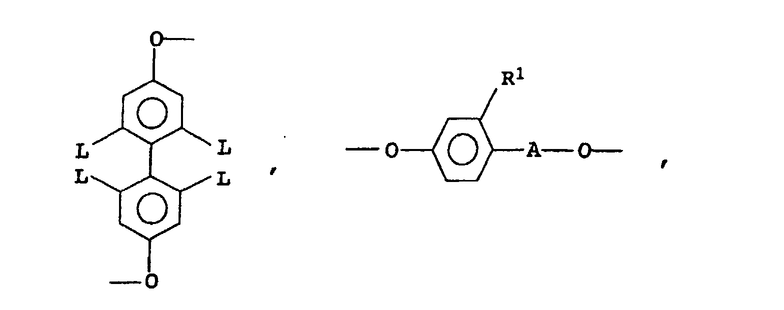 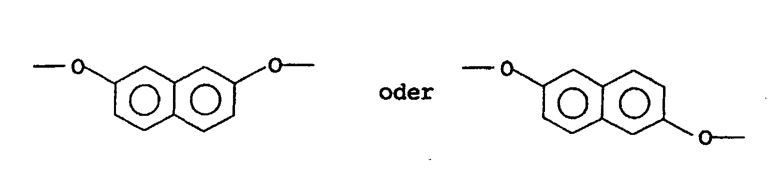 wobei in den obigen Formeln
- L: für Alkyl, Alkoxy, Halogen, COOR, OCOR, CONHR oder NHCOR steht,
- X: für S, O, N, CH₂ oder eine Einfachbindung steht,
- A: eine Einfachbindung 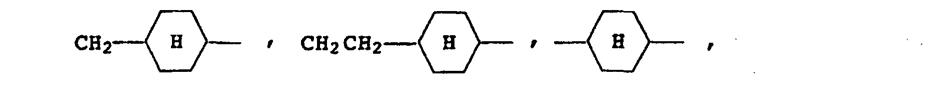 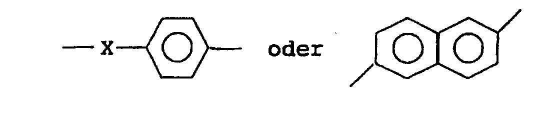 bedeutet und
wobei
- R¹: Wasserstoff, Halogen, Alkyl oder Phenyl bedeutet und
- R: Alkyl oder Wasserstoff bedeutet.

Gegebenenfalls enthalten die einsetzbaren Polyester zusätzliche flexible Dioleinheiten der Formel 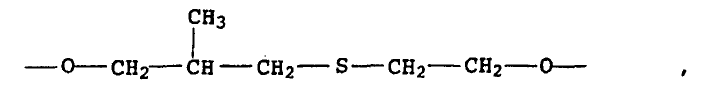 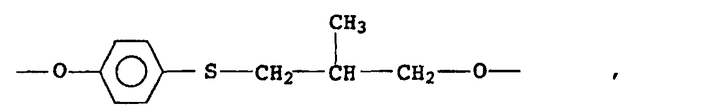 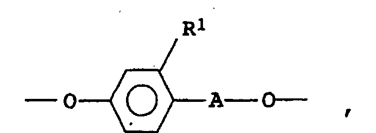 wobei
- R¹: Wasserstoff, Halogen, Alkyl oder Phenyl bedeutet,
- A: (CH₂)n, O(CH₂)ₙ, S(CH₂)ₙ oder NR(CH₂)ₙ bedeutet und
- n: eine Zahl von 1 bis 15 bedeutet.

Bevorzugte Polymere der Gruppe d) sind beispielsweise vernetzbare, cholesterische Copolyisocyanate, wie sie in der US-A-08 834 745 beschrieben werden. Solche Copolyisocyanate weisen wiederkehrende Einheiten der Formeln 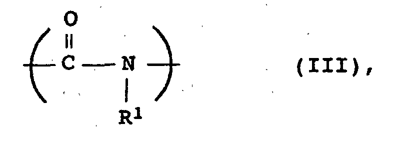 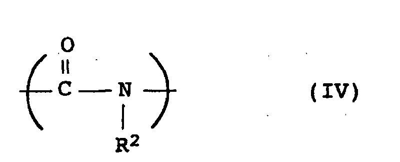 und gegebenenfalls der Formel 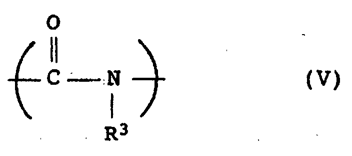 auf,
worin
- R¹: für einen chiralen aliphatischen oder aromatischen Rest steht,
- R²: für einen vernetzbaren Rest steht und
- R³: für einen achiralen Rest steht.

Soweit nicht anders angegeben, ist hier unter "Alkyl" (auch in Bedeutungen wie Alkoxy, Dialkyl, Alkylthio etc.) ein verzweigtes und unverzweigtes C₁-C₁₂-Alkyl, vorzugsweise C₃-C₁₂-, besonders bevorzugt C₄-C₁₀-, insbesondere C₆-C₁₀-Alkyl zu verstehen.

Vorzugsweise ist R¹ ausgewählt unter (chiralen) verzweigten oder unverzweigten Alkyl-, Alkoxyalkyl-, Alkylthioalkyl-, Cycloalkyl-, Alkylphenyl- oder C₃-C₉-Epoxyalkylresten oder Resten von Estern von C₁-C₆-Fettsäuren mit C₁-C₆-Alkanolen oder C₃-C₉-Dialkylketonen. Der Esterrest kann sowohl über den Fettsäureanteil als auch über den Alkanolrest an das N-Atom gebunden sein. Der Rest R¹ kann 1, 2 oder 3 Substituenten aufweisen, die gleich oder verschieden und ausgewählt sind unter Alkoxygruppen, Di-C₁-C₄-alkylaminogruppen, CN, Halogenatomen oder C₁-C₄-Alkylthiogruppen.

Vorzugsweise ist R¹ ausgewählt unter Alkyl, Alkoxyalkyl, Resten von Estern von C₁-C₆-Fettsäuren mit C₁-C₆-Alkanolen, C₃-C₉-Dialkylketonen und epoxidierten C₃-C₉-Epoxyalkylresten, wobei R¹ durch 1 oder 2 Reste substituiert sein kann, die gleich oder verschieden und ausgewählt sind unter Alkoxy, Halogen, CN oder CF₃. Bevorzugte Substituenten für verzweigte oder unverzweigte Alkyl- oder Alkoxyreste sind ausgewählt unter Alkoxygruppen, Halogenatomen oder CN; für Ester von C₁-C₆-Fettsäuren mit C₁-C₆-Alkanolen unter Alkoxygruppen, Halogenatomen, CN oder CF₃ und für C₃-C₉-Dialkylketone unter Alkoxygruppen, Halogenatomen oder CN.

Insbesondere weist die Hauptkette des Restes R¹ eine Länge von 3 bis 12, insbesondere 6 bis 10, vorzugsweise 6 bis 8 Gliedern (C-, O- und/oder S-Atome) auf. Besonders bevorzugt sind Reste R¹, die ausgewählt sind unter

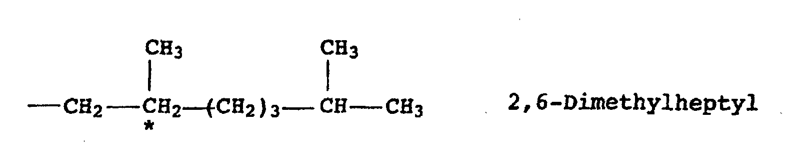

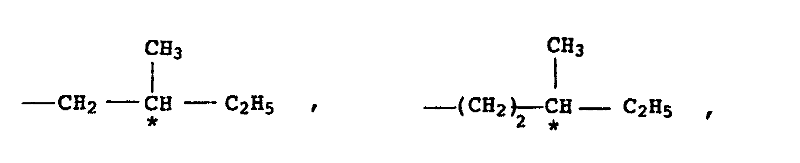

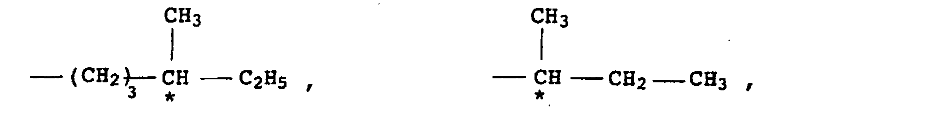

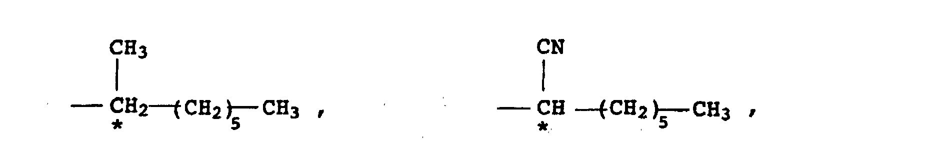

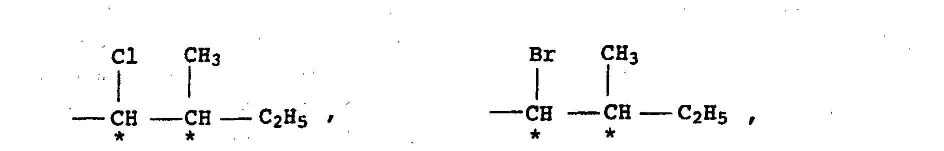

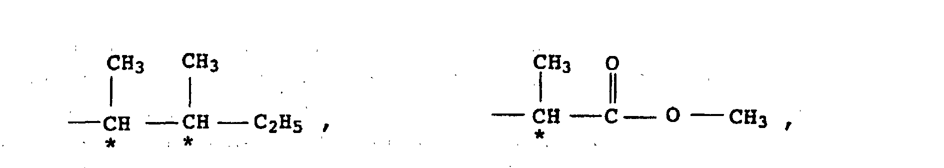

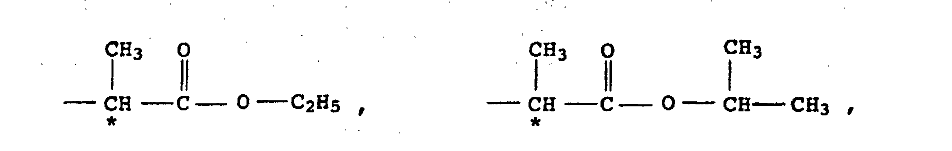

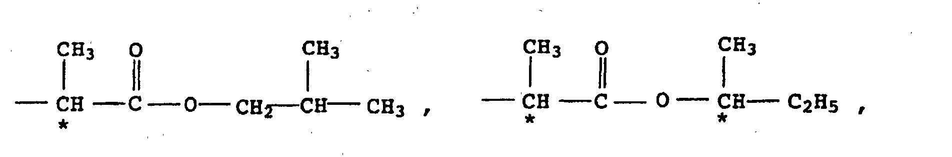

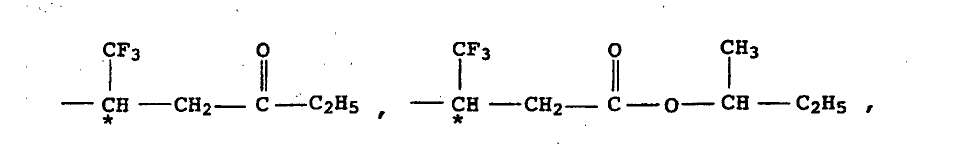

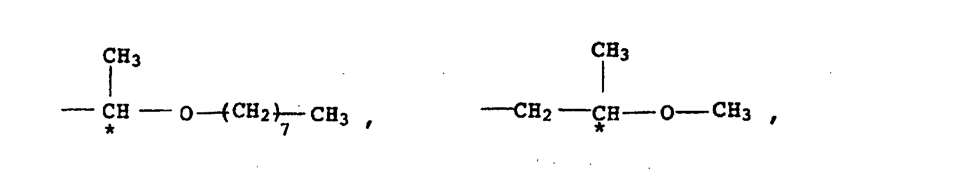

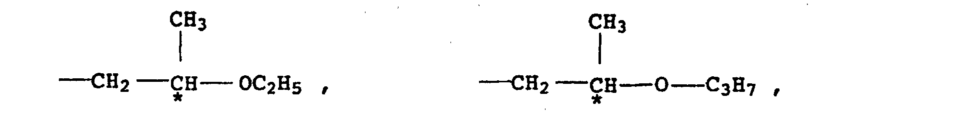

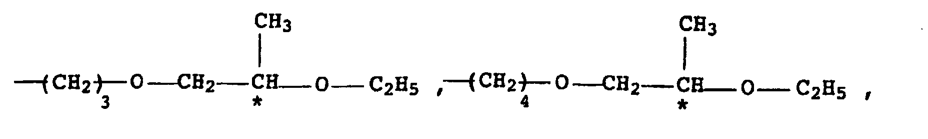

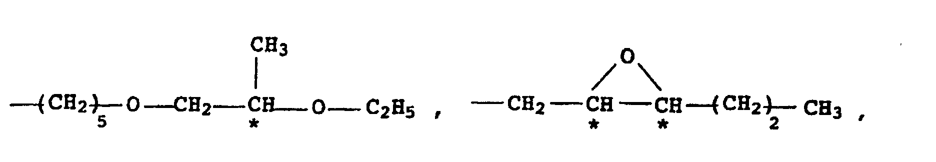

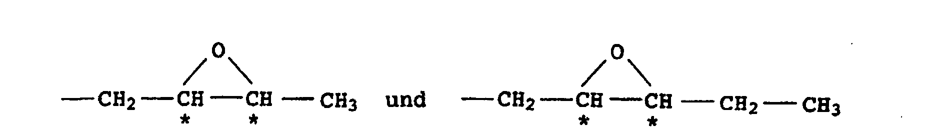

Ganz besonders bevorzugt ist die Komponente III der einsetzbaren Copolyisocyanate von 2,6-Dimethylheptylisocyanat abgeleitet.

Der Rest R² der einsetzbaren Copolyisocyanate ist vorzugsweise ausgewählt unter C₃-C₁₁-Alkenylresten, C₄-C₁₁-Vinyletherresten (= Vinyl-C₂-C₉-Alkylethern), ethylenisch ungesättigten C₃-C₁₁-Carbonsäureresten und Estern von ethylenisch ungesättigten C₃-C₆-Monocarbonsäuren mit C₂-C₆-Alkanolen, wobei die Bindung an das N-Atom über den Alkanolrest des Esters erfolgt. Besonders bevorzugt ist der Rest ausgewählt unter Methylacrylat, Ethylacrylat, Propylacrylat, n-Butylacrylat, Isobutylacrylat, 2-Ethylhexylacrylat, Methylmethacrylat, Ethylmethacrylat, Propylmethacrylat, n-Butylmethacrylat, Isobutylmethacrylat, 2-Ethylhexylmethacrylat, insbesondere unter Ethylacrylat oder Ethylmethacrylat.

Der Rest R³ besitzt vorzugsweise die gleichen Bedeutungen wie der Rest R¹. Er ist aber achiral, d. h. er weist kein Chiralitätszentrum auf oder liegt als racemisches Gemisch vor.

Besonders bevorzugt weist die Hauptkette des Restes R³ eine Länge von 4 bis 12, insbesondere 6 bis 10, vorzugsweise 6 bis 8 Gliedern (C-, O- und/oder S-Atome) auf. Ganz besonders bevorzugt ist die Komponente V der erfindungsgemäßen Copolyisocyanate von n-Hexylisocyanat, n-Heptylisocyanat oder n-Octylisocyanat abgeleitet.

Die Komponenten III, IV und V sind vorzugsweise im Molmengenverhältnis III:IV:V von etwa 1 bis 20 : 1 bis 20 : 50 bis 98, insbesondere etwa 5 bis 15 : 5 bis 15 : 65 bis 90, besonders bevorzugtermaßen etwa 15:10:75 vorhanden.

Die Einheiten III, IV und V können in den einsetzbaren Copolyisocyanaten statistisch verteilt sein.

Erfindungsgemäß ganz besonders bevorzugt ist der Einsatz von chiralen Verbindungen und nematischen Monomeren der Gruppe b), insbesondere von chiralen Verbindungen der Formel 2: 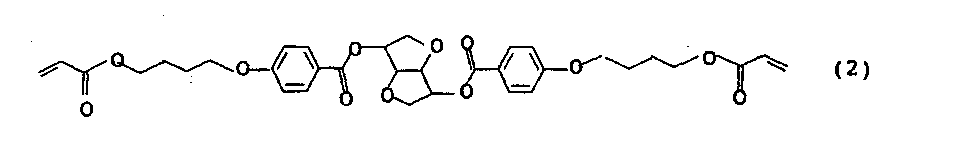 oder der Formel 5: 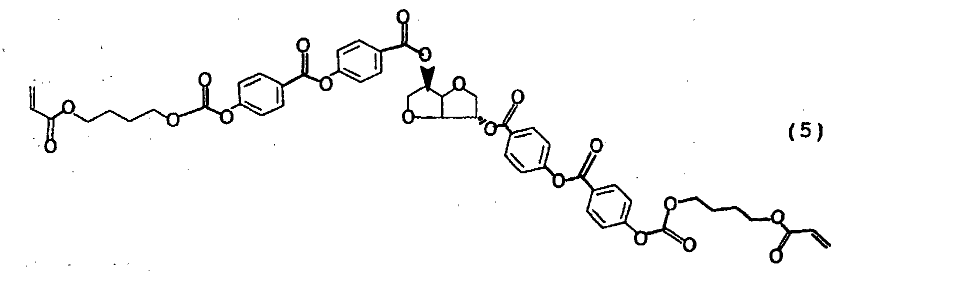 und nematischen Monomeren der Formel 1: 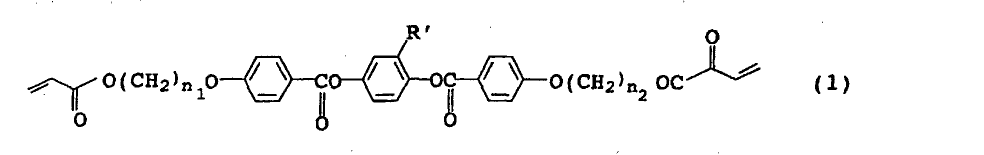 oder bevorzugt der Formel 3: 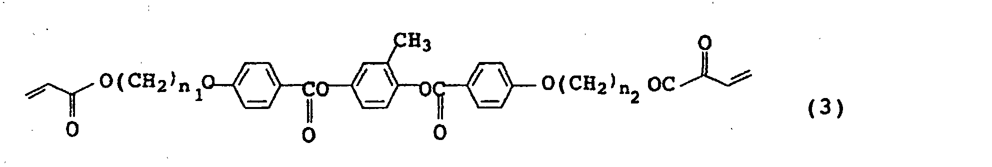 oder besonders bevorzugt der Formel 4: 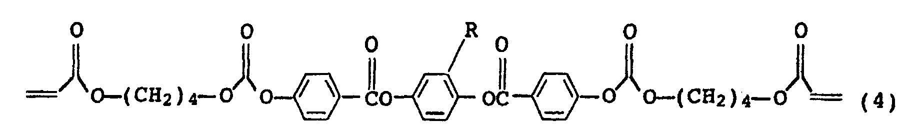 wobei in den Formeln 1 und 3 n₁ und n₂ unabhängig voneinander für 4 oder 6 stehen, R' in Formel 1 für H oder Cl steht und die Monomeren der Formel 1 oder 3 vorzugsweise als Gemische von Verbindungen mit n₁/n₂ = 4/4, 4/6, 6/4 oder 6/6 eingesetzt werden, und R in Formel 4 für H, Cl oder CH₃ steht. Erfindungsgemäß einsetzbar sind jedoch auch andere cholesterische Gemische, beispielsweise die in der EP-A-686 674 offenbarten Gemische.

In dem erfindungsgemäßen Verfahren einsetzbare Verdünnungsmittel sind für die Verbindungen der Gruppen a) oder b) lineare oder verzweigte Ester, besonders Essigsäureester, cyclische Ether und Ester, Alkohole, Lactone, aliphatische und aromatische Kohlenwasserstoffe, wie Toluol, Xylol und Cyclohexan, sowie Ketone, Amide, N-Alkylpyrrolidone, besonders N-Methylpyrrolidon, und insbesondere Tetrahydrofuran (THF), Dioxan und Methylethylketon (MEK).

Geeignete Verdünnungsmittel für die Polymere der Gruppe c) sind beispielsweise Ether und cyclische Ether wie Tetrahydrofuran oder Dioxan, chlorierte Kohlenwasserstoffe, wie Dichlormethan, 1,1,2,2-Tetrachlorethan, 1-Chlornaphthalin, Chlorbenzol oder 1,2-Dichlorbenzol. Diese Verdünnungsmittel sind besonders für Polyester und Polycarbonate geeignet. Geeignete Verdünnungsmittel für Cellulosederivate sind beispielsweise Ether, wie Dioxan, oder Ketone, wie Aceton. Werden Copolyisocyanate als Polymere der Gruppe d) eingesetzt, ist es sinnvoll, polymerisierbare Verdünnungsmittel, wie in der US-A-08 834 745 beschrieben, zu verwenden. Solche polymerisierbaren Verdünnungsmittel sind beispielsweise
- Ester α,β-ungesättigter Mono- oder Dicarbonsäuren, insbesondere C₃-C₆-Mono- oder Dicarbonsäuren, mit C₁-C₁₂-Alkanolen, C₂-C₁₂-Alkandiolen oder deren C₁-C₆-Alkylether und Phenylether, beispielsweise Acrylate und Methacrylate, Hydroxyethyl- oder Hydroxypropylacrylat oder -methacrylat sowie 2-Ethoxyethylacrylat oder -methacrylat;
- Vinyl-C₁-C₁₂-alkylether, wie Vinylethyl-, Vinylhexyl- oder Vinyloctylether;
- Vinylester von C₁-C₁₂-Carbonsäuren, wie Vinylacetat, Vinylpropionat, Vinyllaurat;
- C₃-C₉-Epoxide, wie 1,2-Butylenoxid, Styroloxid;
- N-Vinylpyrrolidon, N-Vinylcaprolactam, N-Vinylformamid;
- vinylaromatische Verbindungen, wie Styrol, α-Methylstyrol, Chlorstyrol, und
- Verbindungen mit zwei oder mehreren vernetzbaren Gruppen, wie Diester von Diolen (einschließlich Polyethylenglykole) mit Acryl- oder Methacrylsäure oder Divinylbenzol.

Beispiele für bevorzugte polymerisierbare Verdünnungsmittel sind 2-Ethoxyethylacrylat, Diethylenglykoldiacrylat, Ethylenglykoldimethacrylat, Diethylenglykoldimethacrylat, Triethylenglykoldimethacrylat, Diethylenglykolmonomethyletheracrylat, Phenoxyethylacrylat und Tetraethylenglykoldimethacrylat. Ein besonders bevorzugtes polymerisierbares Verdünnungsmittel ist Styrol.

Auch die Gemische der Gruppen a), b) oder c) können in kleinen Mengen polymerisierbare Verdünnungsmittel zusätzlich zu dem inerten Verdünnungsmittel enthalten. Bevorzugte, a), b) oder c) zusetzbare, polymerisierbare Lösungsmittel sind Acrylate, insbesondere höherfunktionelle Acrylate wie Bis-, Tris- oder Tetraacrylate, besonders bevorzugt hochsiedende Oligoacrylate. Die bevorzugte Zusatzmenge liegt bei etwa 5 Gew.-%, bezogen auf das Gesamtgewicht des Gemischs.

Gegebenenfalls kann auch Wasser dem Verdünnungsmittel zugesetzt sein oder sogar als alleiniges Verdünnungsmittel eingesetzt werden.

Das vernetzbare oder polymerisierbare Gemisch kann für die photochemische Polymerisation handelsübliche Photoinitiatoren enthalten. Für eine Härtung durch Elektronenstrahlen sind solche nicht notwendig. Geeignete Photoinitiatoren sind beispielsweise Isobutyl-benzoinether, 2,4,6-Trimethylbenzoyldiphenylphosphinoxid, 1-Hydroxycyclohexyl-phenylketon, 2-Benzyl-2-dimethylamino-1-(4-morpholinophenyl)-furan-1-on, Mischungen von Benzophenon und 1-Hydroxycyclohexyl-phenylketon, 2,2-Dimethoxy-2-phenylacetophenon, perfluorierte Diphenyltitanocene, 2-Methyl-1-(4-[methylthio] phenyl)-2-(4-morpholinyl)-1-propanon, 2-Hydroxy-2-methyl-l-phenyl-propan-1-on, 4-(2-Hydroxyethoxy)phenyl-2-hydroxy-2-propylketon, 2,2-Diethoxyacetophenon, 4-Benzoyl-4'-methyldiphenyl-sulfid, Ethyl-4-(dimethylamino)benzoat, Mischungen von 2-Isopropylthioxanthon und 4-Isopropyl-thioxanthon, 2-(Dimethylamino)ethylbenzoat, d,l-Campherchinon, Ethyl-d,l-campherchinon, Mischungen von Benzophenon und 4-Methylbenzophenon, Benzophenon, 4,4'-Bisdimethylamin-benzophenon, (η⁵-Cyclopentadienyl) (η⁶-isopropylphenyl)-eisen(II)-hexafluorophosphat, Triphenylsulfonium-hexafluorophosphat oder Mischungen von Triphenylsulfoniumsalzen, sowie Butandioldiacrylat, Dipropylenglykoldiacrylat, Hexandioldiacrylat, 4-(1,1-Dimethylethyl)cyclohexylacrylat, Trimethylolpropantriacrylat und Tripropylenglykoldiacrylat.

Die Brillanz der Pigmentschicht kann durch Zugabe geringer Mengen geeigneter Verlaufsmittel gesteigert werden. Einsetzbar sind etwa 0,005 bis 1 Gew.-%, insbesondere 0,01 bis 0,5 Gew.-%, bezogen auf die Menge an eingesetztem Cholester. Geeignete Verlaufsmittel sind beispielsweise Glykole, Siliconöle und insbesondere Acrylatpolymere, wie die unter der Bezeichnung Byk 361 bzw. Byk 358 der Firma Byk-Chemie erhältlichen Acrylatcopolymere und die unter der Bezeichnung Tego flow ZFS 460 der Fa. Tego erhältlichen modifizierten silikonfreien Acrylatpolymere.

Gegebenenfalls enthält das polymerisierbare oder vernetzbare Gemisch auch Stabilisatoren gegen UV- und Wettereinflüsse. Hierfür eignen sich zum Beispiel Derivate des 2,4-Dihydroxybenzophenons, Derivate des 2-Cyan-3,3-diphenylacrylates, Derivate des 2,2',4,4'-Tetrahydroxybenzophenons, Derivate des Orthohydroxyphenylbenztriazols, Salicylsäureester, Orthohydroxyphenyl-S-triazine oder sterisch gehinderte Amine. Diese Stoffe können allein oder vorzugsweise in Form von Gemischen eingesetzt werden.

Vorzugsweise weist das gießfähige, reaktive cholesterische Gemisch eine Viskosität im Bereich von etwa 10 bis 500 mPas, insbesondere etwa 10 bis 100 mPas, gemessen bei 23 °C, auf.

Besonders bevorzugt bringt man das cholesterische Gemisch mit einer Geschwindigkeit von etwa 1 bis 800 m/min, insbesondere etwa 5 bis 100 m/min, auf den Träger auf.

In einer bevorzugten Ausführungsform des erfindungsgemäßen Verfahrens wird das Gemisch mittels eines Umkehrwalzenbeschichters, eines kiss coaters oder insbesondere mittels eines Extrusionsgießers, Rakelgießers oder Messergießers, ganz besonders bevorzugt mittels eines Rakelgießers oder Messergießers auf die Unterlage aufgebracht.

Vorteilhaft wird das Gemisch mittels einer Gießvorrichtung aufgetragen, die das Gemisch beim Auftragen einem hohen Schergefälle unterwirft.

Vorzugsweise wird eine Gießvorrichtung verwendet, deren Gießspaltbreite im Bereich von etwa 2 bis 50 µm, insbesondere etwa 4 bis 15 µm liegt. Vorteilhaft ist außerdem, bei einem Gießerüberdruck von etwa 0,01 bis 0,7 bar, vorzugsweise 0,05 bis 0,3 bar zu arbeiten.

Erfindungsgemäß besonders geeignete Vorrichtungen zur Herstellung cholesterischer Schichten sind Beschichtungsmaschinen mit Messergießer-Auftragswerk, mit denen sich ein cholesterisches Gemisch auf eine Trägerfolie, die über eine mit sehr hoher Rundlaufgenauigkeit laufende Walze geführt wird, aufbringen lässt. Vorteilhafterweise ist das Gießmesser auf einen Präzisionsschlitten montiert, so dass sich ein definierter Spalt gegen die Trägerfolie genau einstellen läßt.

Gegebenenfalls wird die Beschichtungsmaschine mit Kühlvorrichtungen, beispielsweise mit Kühlwalzen, versehen, um auch temperaturempfindliche Folien als Unterlagen verwenden zu können.

Vorzugsweise erfolgt der Auftrag des cholesterischen Gemischs unter erhöhtem Druck, insbesondere bei einem Gießerüberdruck im Bereich von etwa 0,01 bis 0,7 bar, besonders bevorzugt 0,05 bis 0,3 bar.

Die aufgetragene Schicht wird durch eine Trockenvorrichtung, beispielsweise durch einen Umlufttrockner, getrocknet und anschließend, oder anstelle des Trocknens, thermisch, durch UV-Strahlen oder durch Elektronenstrahlen polymerisiert bzw. vernetzt, wobei die Härtung durch UV-Strahlung oder durch Elektronenstrahlen bevorzugt ist.

Die aufgetragene Schicht wird vorzugsweise bis zu einem Restgehalt an flüchtigen Verdünnungsmitteln von weniger als 1 Gew.-%, bezogen auf das Trockengewicht der aufgebrachten Schicht, getrocknet. Die Trocknung erfolgt vorzugsweise bei einer Temperatur im Bereich von 20 bis 100 °C über einen Zeitraum von etwa 2 bis 60 Sekunden.

Die gehärtete cholesterische Schicht weist eine mittlere Trockenschichtdicke von 0,5 bis 20 µm, wie z. B. 1 bis 10 µm insbesondere 1 bis 4,5 µm, besonders bevorzugt 1 bis 3 µm, oder 2 bis 4 µm auf. Die erfindungsgemäß hergestellten cholesterischen Schichten weisen eine mittlere Schichtdickenschwankung von ±0,2 µm oder darunter auf, was eine hohe Farbkonstanz der cholesterischen Schicht zur Folge hat. Die mittlere Schichtdickenschwankung kann in einfacher Weise, wie z. B. mikroskopisch anhand von Dünnschnitten, bestimmt werden. Eine geeignete Bestimmungsmethode kann beispielsweise in Anlehnung an die in der EP-A-0 566 100 beschriebene Methodik durchgeführt werden.

Die erfindungsgemäß hergestellten cholesterischen Schichten können durch wenigstens einen der im Folgenden genannten Parameter zusätzlich charakterisiert werden:
a) Rz (nach DIN 4768): ≤ 210 nm, insbesondere ≤ 110 nm, wie z. B. etwa 105 bis 40 nm;
b) Ra (nach DIN 4768/1): ≤ 40 nm, insbesondere ≤ 20 nm, vorzugsweise ≤ 16 nm, wie z. B. 15 bis 5 nm;
c) Glanz (nach DIN 67530) bei Cholesterauftrag auf eine schwarz rückbeschichtete PET-Folie und einem Messwinkel von 60°:
   ≥ 90, wie z. B. 100 bis 190, und insbesondere
   ≥ 100, wie z. B. 100 bis 130 bei Reflexionsmaximum im blauen Spektralbereich; oder
   ≥ 130, wie z. B. 130 bis 160 bei Reflexionsmaximum im grünen Spektralbereich; oder
   ≥ 160, wie z. B. 160 bis 190 bei Reflexionsmaximum im roten Spektralbereich;
d) Domänendurchmesser: ≥ 5 µm, insbesondere ≥ 15 µm, vorzugsweise ≥ 20 µm oder ≥ 25 µm mit Tendenz zur Auflösung;
e) Tiefe der die Domänen begrenzenden Mikrorillen: ≤ 110 nm, insbesondere ≤ 50 nm, vorzugsweise ≤ 15 nm, wie z. B. 10 bis 3 nm.

In einer Ausführungsform des erfindungsgemäßen Verfahrens wird die ausgehärtete cholesterische Schicht vom Träger entfernt und gegebenenfalls zu Pigmenten zerkleinert.

Eine weitere bevorzugte Ausführungsform des erfindungsgemäßen Verfahrens besteht darin, dass man den Träger mit wenigstens einem weiteren cholesterischen Gemisch gleicher oder unterschiedlicher Zusammensetzung beschichtet. Die cholesterischen Schichten können unterschiedliche Farben oder unterschiedliche Händigkeiten aufweisen. Insbesondere wird der Träger, nach oder zwischen der Auftragung der cholesterischen Schicht(en) mit wenigstens einer weiteren Schicht beschichtet, die ausgewählt ist unter einer Releaseschicht, einer transmittierendes Licht absorbierenden Schicht, Klebeschicht, Stabilisatorschicht, Stützschicht oder Deckschicht.

In einer weiteren bevorzugten Ausführungsform wird die erfindungsgemäß erhaltene, ausgehärtete mehrere Teilschichten umfassende Schichtstruktur vom Träger entfernt, in gewünschter Weise konfektioniert (z. B. Effektfolienbögen) oder gegebenenfalls zu Effektpigmenten zerkleinert.

Brauchbare erfindungsgemäße Schichtstrukturen erhält man aber auch dann, wenn man den Träger von der cholesterischen Schichtstruktur nicht entfernt. So können beispielsweise erfindungsgemäß Effektfolienbahnen hergestellt werden, welche als weiterer Bestandteil eine, vorzugsweise thermoplastische, Trägerfolie umfassen. Dies ermöglicht eine besonders rationelle Folienherstellung in großen Mengen.

Vorteilhafterweise werden in dem erfindungsgemäßen Verfahren Beschichtungsapparaturen eingesetzt, die präzise Einfach- oder Mehrfachbeschichtungen nicht nur mit cholesterischen Gemischen, sondern auch mit anderen gießbaren Systemen ermöglichen. Dies erlaubt die effiziente Herstellung von bandförmigem cholesterischen Material, das eine oder mehrere Schichten umfasst und das je nach gewünschter Verwendung unterschiedliche Schichtfolgen aufweisen kann.

Ein weiterer Gegenstand der vorliegenden Erfindung ist daher ein, vorzugsweise bahn- oder blattförmiges, cholesterisches Material, das folgende Schichtenfolge aufweist:
A) gegebenenfalls mindestens eine Releaseschicht,
B) mindestens eine cholesterische Farbeffektschicht,
C) gegebenenfalls mindestens eine transmittierendes Licht vollständig oder teilweise absorbierende Schicht,
D) gegebenenfalls mindestens eine weitere cholesterische Farbeffektschicht und
E) gegebenenfalls mindestens eine weitere Schicht, ausgewählt unter einer Releaseschicht, einer gegebenenfalls eingefärbten Schmelzkleberschicht oder einer gegebenenfalls eingefärbten thermoplastischen Schicht.

Beispiele für solche Schichtstrukturen sind:
1) mindestens eine cholesterische Farbeffektschicht,
2) mindestens eine cholesterische Farbeffektschicht - mindestens eine transmittierendes Licht vollständig oder teilweise absorbierende Schicht - mindestens eine cholesterische Farbeffektschicht,
3) mindestens eine Releaseschicht - mindestens eine cholesterische Farbeffektschicht,
4) mindestens eine Releaseschicht - mindestens eine cholesterische Farbeffektschicht - mindestens eine transmittierendes Licht vollständig oder teilweise absorbierende Schicht - mindestens eine cholesterische Farbeffektschicht,
5) mindestens eine cholesterische Farbeffektschicht - mindestens eine Schmelzkleberschicht,
6) mindestens eine cholesterische Farbeffektschicht - mindestens eine thermoplastische Schicht,
7) mindestens eine cholesterische Farbeffektschicht - mindestens eine transmittierendes Licht vollständig oder teilweise absorbierende Schicht - mindestens eine cholesterische Farbeffektschicht - mindestens eine Schmelzkleberschicht,
8) mindestens eine cholesterische Farbeffektschicht- mindestens eine transmittierendes Licht vollständig oder teilweise absorbierende Schicht - mindestens eine cholesterische Farbeffektschicht - mindestens eine thermoplastische Schicht,
9) mindestens eine Releaseschicht - mindestens eine cholesterische Farbeffektschicht - mindestens eine Schmelzkleberschicht,
10) mindestens eine Releaseschicht - mindestens eine cholesterische Farbeffektschicht - mindestens eine thermoplastische Schicht,
11) mindestens eine Releaseschicht - mindestens eine cholesterische Farbeffektschicht - mindestens eine Releaseschicht,
12) mindestens eine Releaseschicht - mindestens eine cholesterische Farbeffektschicht - mindestens eine transmittierendes Licht vollständig oder teilweise absorbierende Schicht - mindestens eine cholesterische Farbeffektschicht - mindestens eine Schmelzkleberschicht,
13) mindestens eine Releaseschicht - mindestens eine cholesterische Farbeffektschicht - mindestens eine transmittierendes Licht vollständig oder teilweise absorbierende Schicht - mindestens eine cholesterische Farbeffektschicht - mindestens eine thermoplastische Schicht,
14) mindestens eine Releaseschicht - mindestens eine cholesterische Farbeffektschicht - mindestens eine transmittierendes Licht vollständig oder teilweise absorbierende Schicht - mindestens eine cholesterische Farbeffektschicht - mindestens eine Releaseschicht.

Die oben erwähnte thermoplastische Schicht kann dabei die Trägerschicht selbst oder eine auf den Träger zusätzlich aufgetragene Schicht darstellen.

Die gegebenenfalls vorhandene Releaseschicht umfasst beispielsweise Polyolefinverbindungen oder silikonhaltige Verbindungen.

Die Schichten A) bis E) können strahlungsvernetzbar sein und enthalten in diesem Fall strahlungsvernetzbare, ungesättigte Gruppen oder Epoxidgruppen enthaltende Systeme, beispielsweise Polyurethanacrylate, Polyesteracrylate, acrylierte Polymere, Epoxidacrylate oder Melaminacrylate.

Wenn die Strahlungsvernetzung über UV-Strahlung erfolgen soll, können die Schichten A) bis E) einen der oben beschriebenen Photoinitiatoren oder Gemische davon enthalten.

Es ist besonders bevorzugt, die Schichten in einem Auftragungsvorgang nass-in-nass auf den Träger aufzubringen, gegebenenfalls gemeinsam zu trocknen und danach gegebenenfalls gemeinsam zu härten. Für das gleichzeitige Auftragen der genannten Schichten sind insbesondere Messer- bzw. Rakelgießverfahren, Extrusions- bzw. Abstreifgießverfahren sowie das Kaskadengießverfahren geeignet. Beim Messer- bzw. Rakelgießverfahren erfolgt das Auftragen der Flüssigkeit auf einen Träger durch einen Schlitz eines Gießerblocks, wobei die Schichtdicke über einen definierten Rakelspalt zwischen einer Walze, über die der Träger geführt wird und der Gießerkante eingestellt werden kann. Zum Auftragen der untersten (ersten) Schicht wird der erste Gießerblock gegen die Walze verstellt, zum Auftragen der zweiten Schicht wird ein zweiter Gießerblock gegen den ersten Gießerblock verstellt und zum Auftragen der dritten Schicht wird ein dritter Gießerblock gegen den zweiten verstellt, usw. Ein analoges Verfahren wird in der DE-A-19 504 930 beschrieben, worauf hiermit Bezug genommen wird. Alle Flüssigkeiten laufen ihrem jeweiligen Gießrakel zu und werden gleichzeitig übereinander abgerakelt. Beim Extrusions- bzw. Abstreifgießverfahren wird ein flexibler Träger, beispielsweise eine Folie, mit definierter Bahnspannung zwischen zwei Walzen an dem Gießerkopf vorbei geführt. Aus parallelen, quer zur Bahnlaufrichtung angeordneten Gießschlitzen werden die der erwünschten Schichtstärke angepassten Flüssigkeitsmengen gleichzeitig auf das Substrat aufgebracht. Ein solches Verfahren ist beispielsweise in der EP-A-431 630, der DE-A-3 733 031 und der EP-A-452 959 beschrieben, worauf hiermit Bezug genommen wird. Beim Kaskadengießverfahren wird der Träger über eine Walze geführt. Die aufzubringenden Flüssigkeiten laufen aus verschiedenartig angeordneten Schlitzen übereinander und dann gemeinsam auf den Träger auf. Dieses Verfahren ist gleichfalls in der DE-A-19 504 930 beschrieben. Selbstverständlich ist es auch möglich, zunächst nur eine Schicht aufzubringen, diese gegebenenfalls zu trocknen und zu härten und dann mehrere Schichten nass-in-nass beispielsweise mit einem der oben aufgeführten Verfahren auf die gehärtete cholesterische Schicht aufzutragen. Ebenso können die Schichten einzeln nacheinander aufgetragen, gegebenenfalls getrocknet und gehärtet werden.

Als Schichtträger dienen vorzugsweise bekannte, vorzugsweise thermoplastische, Filme aus Polyestern, wie Polyethylenterephthalat oder Polyethylennaphthalat sowie Polyolefinen, Cellulosetriacetat, Polycarbonaten, Polyamiden, Polyimiden, Polyamidoimiden, Polysulfonen, Aramiden oder aromatischen Polyamiden. Die Dicke der Schichtträger beträgt vorzugsweise etwa 5 bis 100 µm, insbesondere etwa 10 bis 20 µm. Der Schichtträger kann vorher einer Koronaentladungsbehandlung, einer Plasmabehandlung, einer leichten Adhäsionsbehandlung, einer Wärmebehandlung, einer Staubentfernungsbehandlung oder ähnlichem unterworfen werden. Der Schichtträger weist vorzugsweise eine mittlere Mittellinien-Oberflächenrauhigkeit von 0,03 µm oder weniger, insbesondere von 0,02 µm oder weniger, besonders bevorzugt von 0,01 µm oder weniger auf. Außerdem ist es erwünscht, dass der Träger nicht nur eine derart geringe mittlere Mittellinien-Oberflächenrauhigkeit aufweist, sondern auch keine großen Vorsprünge (Erhebungen) von 1 µm oder mehr besitzt. Das Rauhigkeitsprofil der Oberfläche des Trägers kann durch Füllstoffe, die dem Schichtträger bei dessen Herstellung zugesetzt werden, variiert werden. Beispiele für geeignete Füllstoffe sind Oxide und Carbonate von Ca, Si und Ti sowie organische feine Pulver von Acrylsubstanzen.

Der Träger kann auch eine metallisierte Folie oder ein vorzugsweise poliertes Metallband sein.

Das erfindungsgemäße bandförmige cholesterische Material kann, gegebenenfalls zusammen mit dem Träger, je nach Art und Aufeinanderfolge der Schichten, als, in oder aber auf Folien oder auf Papier Verwendung finden, beispielsweise in, als oder auf Farbeffektfolien zur Beschichtung von flächigen und nichtflächigen Gegenständen oder auf Geschenkpapier. Folien aus erfindungsgemäßem bandförmigem cholesterischen Material sind insbesondere zum Folienkaschieren, Tiefziehen oder Hinterspritzen verwendbar.

Ein weiterer Gegenstand der vorliegenden Erfindung sind Pigmente, die durch das Zerkleinern erfindungsgemäßen ein- oder mehrschichtigen bandförmigen cholesterischen Materials erhältlich sind. Das erfindungsgemäße Material wird zu diesem Zweck von seinem vorzugsweise bandförmigen Träger abgelöst. Das Ablösen des vernetzten, cholesterischen Materials von dem Träger kann zum Beispiel dadurch erfolgen, dass die Unterlage über eine Umlenkrolle mit kleinem Durchmesser geführt wird. Infolgedessen blättert das vernetzte Material dann von dem Träger ab. Weitere bekannte Methoden sind gleichfalls geeignet, zum Beispiel das Abziehen des Trägers über eine scharfe Kante, Air Knife (Luftrakel) Ultraschall oder Kombinationen davon. Das nun trägerlose cholesterische Material wird auf eine gewünschte Korngröße zerkleinert. Dies kann beispielsweise durch Mahlen in Universalmühlen erfolgen. In Abhängigkeit von der beabsichtigten Verwendung der Pigmente können Korngrößen mit einem Durchmesser von 5 µm bis etwa 200 µm hergestellt werden. Vorzugsweise haben die Pigmente eine Korngröße zwischen 10 µm und 50 µm, insbesondere zwischen 15 µm und 30 µm. Die zerkleinerten Pigmente können anschließend zur Verengung der Korngrößenverteilung, beispielsweise durch einen Siebprozess, klassiert werden.

Bevorzugte erfindungsgemäße Pigmente sind Mehrschichtpigmente, insbesondere dreischichtige Pigmente, die zwei cholesterische Schichten und zwischen diesen eine transmittierendes Licht vollständig oder teilweise absorbierende Schicht umfassen.

Gegenstand der vorliegenden Erfindung sind somit auch plättchenförmige cholesterische Mehrschichtpigmente, gekennzeichnet durch die Schichtfolge A¹/B/A², wobei
- A¹ und A²: gleich oder verschieden sind und jeweils mindestens eine cholesterische Schicht umfassen, und
- B: für mindestens eine die Schichten A¹ und A² voneinander trennende Zwischenschicht steht, die das die Schichten A¹ und A² transmittierende Licht teilweise oder vollständig absorbiert.

Derartige erfindungsgemäße Mehrschichtpigment bietet eine Reihe überraschender Vorteile:
a) B kann voll deckend (transmittierendes Licht vollständig absorbierend) eingestellt werden, so dass bei ausreichender Pigmentierungshöhe der Farbeindruck des Pigmentes völlig untergrundunabhängig ist und eine aufwendige und kostspielige auf transparente Interferenzpigmente abgestimmte Untergrundbehandlung, wie bislang üblich, entfällt. Selbstdeckende cholesterische Effektpigmente werden somit erstmals zur Verfügung gestellt.
b) Die Farbe von B kann variiert werden, wodurch eine weitere Steuergröße für den Farbeindruck des Gesamtpigmentes zur Verfügung gestellt wird.
c) Die Brillanz des Gesamtpigments lässt sich durch Variation des Glanzes bzw. der Rauhigkeit von B zusätzlich einstellen.
d) B kann anwendungsspezifisch zur Einstellung der Härte bzw. der Flexibilität des Gesamtpigments variiert werden.
e) B kann elektrisch leitfähig sein und dadurch dem Gesamtpigment elektrische Leitfähigkeit verleihen, ohne dass die Qualität der cholesterischen Schichten dadurch beeinträchtigt wird.
f) A¹, B und A² sind von gleichmäßiger Dicke und parallel zueinander übereinander gestapelt, bilden also eine Art Sandwichstruktur, wodurch die Brillanz des Pigments erheblich verstärkt wird. Außerdem wird dadurch ein verbesserter Farbeindruck im Vergleich zu rundum beschichteten Pigmenten bewirkt, weil sämtliche Cholesteren-Moleküle einer Schicht gleich ausgerichtet sind.
g) Der Farbeindruck des Pigments ist von externen Stimuli weitgehend unabhängig, d. h. über einen weiten Temperatur- und Druckbereich stabil.

Die obere und die untere cholesterische Schicht A¹ bzw. A² des erfindungsgemäßen Pigments besitzen gleiche oder verschiedene optische Eigenschaften. Sie können insbesondere Licht gleicher oder unterschiedlicher Wellenlänge reflektieren, d. h. von gleicher oder von unterschiedlicher Farbe sein. Im letztgenannten Fall lassen sich besonders interessante Farbeffekte erzielen. Besonders bevorzugt sind A¹ und A² von unterschiedlicher Händigkeit, so dass beispielsweise A¹ Licht einer bestimmten Wellenlänge linkszirkular-polarisiert reflektiert, wogegen A² Licht derselben Wellenlänge rechtszirkular-polarisiert reflektiert. Vorteilhafterweise erscheint deshalb beispielsweise ein Lack, der erfindungsgemäße Pigmente in dieser bevorzugten Ausführungsform enthält, besonders brillant, da in der Lackschicht A¹ und A² in statistischer Verteilung dem einfallenden Licht zugewandt sind, so dass der Lack sowohl rechts- als auch linkszirkular-polarisiertes Licht einer bestimmten Wellenlänge reflektiert, wogegen ein Lack, der nur Pigmente mit nur einer cholesterischen Schicht oder mit mehreren cholesterischen Schichten gleicher Händigkeit enthält, entweder das links- oder das rechtszirkular-polarisierte Licht durchlässt.

A¹ und A² können auch hinsichtlich ihrer mechanischen Eigenschaften gleich oder verschieden sein. Sie können beispielsweise unterschiedliche Dicke oder Sprödigkeit aufweisen.

Eine weitere bevorzugte Ausführungsform sind Dreischichtpigmente, worin die Absorptionspigmente der Schicht B in eine Bindemittelmatrix eingebunden sind, die die oben als Inhaltsstoffe der Schichten A¹ und A² beschriebenen cholesterischen Gemische enthält. Ganz besonders bevorzugt umfasst die Bindemittelmatrix der Schicht B die gleichen cholesterischen Gemische wie die Schichten A¹ und A².

Vorzugsweise beträgt die Schichtdicke jeder einzelnen cholesterischen Schicht von A¹ oder A² etwa 0,5 bis 20 µm, insbesondere etwa 1 bis 10 µm, besonders bevorzugt etwa 2 bis 4 µm. Die Schichtdicke jeder einzelnen Schicht von B beträgt etwa 0,2 bis 5 µm, insbesondere etwa 0,5 bis 3 µm. Der Durchmesser der erfindungsgemäßen Pigmente beträgt etwa 5 bis 500 µm, insbesondere etwa 10 bis 100 µm, besonders bevorzugt etwa 10 bis 30 µm. In der Regel beträgt der Pigmentdurchmesser etwa das 5-fache der Pigmentdicke.

Ein weiterer Gegenstand der vorliegenden Erfindung ist ein Verfahren zur Herstellung obiger Dreischichtpigmente, das dadurch gekennzeichnet ist, dass man die Schichten A¹, B und A² gleichzeitig oder zeitlich versetzt übereinander auf einen Träger aufbringt, gleichzeitig oder zeitlich versetzt thermisch, durch UV-Strahlen, Elektronenstrahlen oder durch schnelles Abkühlen unter die Glasübergangstemperatur härtet, die ausgehärteten Schichten vom Träger entfernt und anschließend zu Pigmenten zerkleinert.

Das Aufbringen der Schichten A¹, B und A² auf den Träger kann mittels eines der oben erwähnten Verfahren erfolgen.

Der Träger kann auch eine metallisierte Folie oder ein vorzugsweise poliertes Metallband sein.

Die Schichten A¹, B und A² können niedrig- oder hochviskos, vorzugsweise jedoch niedrigviskos auf den Träger aufgebracht werden. Zu diesem Zweck können die cholesterischen Gemische bzw. die Absorptionspigment enthaltenden Formulierungen niedrigverdünnt bei erhöhter Temperatur oder hochverdünnt bei niedriger Temperatur auf den Träger aufgebracht werden. Es ist besonders bevorzugt, die drei Schichten A¹, B und A² in einem Auftragungsvorgang nass-in-nass auf den Träger aufzubringen, gegebenenfalls gemeinsam zu trocknen und danach gemeinsam zu härten.

Für den gleichzeitigen Auftrag nass-in-nass der genannten Schichten ist es besonders bevorzugt, wenn die Schicht B Absorptionspigmente in einer Matrix aus dem gleichen cholesterischen Gemisch eingebunden enthält, das auch in den Schichten A¹ und A² enthalten ist. Hierdurch werden möglicherweise störende Schichtgrenzen zwischen A¹, B und A² vermieden, so dass ein homogenes System erhalten wird, das im mittleren Bereich homogen verteilte Pigmente enthält.

Für das gleichzeitige Auftragen der genannten Schichten sind Gießverfahren besonders geeignet, insbesondere die oben beschriebenen Messer- bzw. Rakelgießverfahren, Extrusions- bzw. Abstreifgießverfahren sowie das Kaskadengießverfahren.

Die transmittierendes Licht vollständig oder teilweise absorbierende Schicht enthält mindestens ein anorganisches oder organisches Weiß-, Bunt- oder Schwarzpigment. Geeignete anorganische Absorptionspigmente sind beispielsweise Titandioxid, Al₂O₃, Bariumsulfat, Strontiumsulfat, Zinkoxid, Zinkphosphate, schwarzes Eisenoxid, Bleichromat, Strontiumchromat, Bariumchromat sowie metallische Pigmente wie Aluminium- oder Bronzepulver.

Geeignete organische Absorptionspigmente sind beispielsweise Azopigmente, Metallkomplex-Pigmente, wie Azo- und Azomethin-Metallkomplexe, Isoindolinon- und Isoindolin-Pigmente, Phthalocyanin-Pigmente, chinakridon-Pigmente, Perinon- und Perylen-Pigmente, Anthrachinon-Pigmente, Diketopyrrolopyrrol-Pigmente, Thioindigo-Pigmente, Dioxazin-Pigmente, Triphenylmethan-Pigmente, Chinophthalon-Pigmente und fluoreszierende Pigmente.

Besonders geeignet sich feinteilige Absorptionspigmente mit einer mittleren Teilchengröße von 0,01 bis 1 µm, vorzugsweise 0,01 bis 0,1 µm.

Bevorzugt einsetzbar sind Graphitpigmente oder verschiedene Rußtypen, ganz besonders bevorzugt leicht dispergierbare Farbruße mit einer spezifischen Oberfläche von 30 bis 150 m²/g (BET-Methode) und einem Absorptionsvermögen von 50 bis 100 ml Dibutylphthalat/100 g (DBP-Zahl).

Besonders bevorzugte Absorptionspigmente sind solche, die der transmittierendes Licht absorbierenden Schicht magnetische Eigenschaften verleihen. Hierfür geeignet sind beispielsweise γ-Fe₂O₃ Fe₃O₄, CrO₂ oder ferromagnetische Metallpigmente, wie z. B. Fe-, Fe-Cu-, Fe-Ni-Cu-Legierungen. Mit diesen Pigmenten lassen sich hochglänzende schwarze Zwischenschichten herstellen.

Pigmente, deren absorbierende Schicht magnetisch ist, stellen einen weiteren Gegenstand der vorliegenden Erfindung dar. Solche Pigmente können vorteilhafterweise durch Anlegen eines Magnetfeldes beliebig orientiert werden. Beispielsweise kann so vermieden werden, dass einzelne Pigmentplättchen aus den anderen herausragen, was zur Folge hat, dass weniger Licht gestreut wird und der Farbeindruck besser wird. Alle Plättchen können gemeinsam in einem bestimmten Winkel orientiert werden. Es ist auch möglich, gesamtflächige Raster zum Erzielen neuer Farbeffekte oder partielle Raster zum optischen Herausheben von Schriften oder Strukturen zu erzeugen. Die erfindungsgemäßen, magnetischen cholesterischen Pigmente sind auch in einer flüssigen Matrix vorteilhaft einsetzbar, beispielsweise in LCDs, in denen sie bei Anlegen eines Magnetfeldes ihre Richtung und somit ihren Farbeindruck ändern.

Die Absorptionspigmente sind vorzugsweise in eine organische Bindemittelmatrix eingebunden. Als Bindemittel können die lacküblichen Systeme eingesetzt werden. Vorzugsweise eignen sich strahlungshärtbare Systeme, die reaktive vernetzbare Gruppen, wie Acryl-, Methacryl-, α-Chloracryl-, Vinyl-, Vinylether-, Epoxid-, Cyanat-, Isocyanat- oder Isothiocyanatgruppen, enthalten.

Als Bindemittel sind auch monomere Mittel und deren Mischungen mit polymeren Bindemitteln einsetzbar. Als monomere Mittel kommen bevorzugt solche in Betracht, die zwei oder mehr vernetzungsfähige Gruppen wie Acryl-, Methacryl-, α-Chloracryl-, Vinyl-, Vinylether-, Epoxid-, Cyanat-, Isocyanat- oder Isothiocyanatgruppen enthalten. Besonders bevorzugt sind Acryl-, Methacryl- oder Vinylethergruppen. Monomere Mittel mit zwei vernetzungsfähigen Gruppen sind beispielsweise die Diacrylate, die Divinylether oder die Dimethacrylate von Diolen wie beispielsweise Propandiol, Butandiol, Hexandiol, Ethylenglykol, Diethylenglykol, Triethylenglykol oder Tetrapropylenglykol.

Monomere Mittel mit drei vernetzungsfähigen Gruppen sind beispielsweise die Triacrylate, die Trivinylether oder die Trimethacrylate von Triolen wie beispielsweise Trimethylolpropan, ethoxyliertem Trimethylolpropan mit 1 bis 20 Ethylenoxideinheiten, propoxyliertem Trimethylolpropan mit 1 bis 20 Propylenoxideinheiten, gemischt ethoxyliertem und propoxyliertem Trimethylolpropan bei dem die Summe aus Ethylenoxideinheiten und Propylenoxideinheiten 1 bis 20 beträgt. Monomere Mittel mit drei vernetzungsfähigen Gruppen sind beispielsweise auch die Triacrylate, die Trivinylether oder die Trimethacrylate von Glycerin, ethoxyliertem Glycerin mit 1 bis 20 Ethylenoxideinheiten, propoxyliertem Glycerin mit 1 bis 20 Propylenoxideinheiten, gemischt ethoxyliertem und propoxyliertem Glycerin, bei dem die Summe aus Ethylenoxideinheiten und Propylenoxideinheiten 1 bis 20 beträgt.

Monomere Mittel mit vier vernetzungsfähigen Gruppen sind beispielsweise die Tetraacrylate, die Tetravinylether oder die Tetramethacrylate von Tetraolen wie beispielsweise Bis-trimethylolpropan, ethoxyliertem Bis-trimethylolpropan mit 1 bis 20 Ethylenoxideinheiten, propoxyliertem Bis-trimethylolpropan mit 1 bis 20 Propylenoxideinheiten, gemischt ethoxyliertem und propoxyliertem Bis-trimethylolpropan, bei dem die Summe aus Ethylenoxideinheiten und Propylenoxideinheiten 1 bis 20 beträgt. Monomere Mittel mit vier vernetzungsfähigen Gruppen sind beispielsweise auch die Tetraacrylate, die Tetravinylether oder die Tetramethacrylate von Tetraolen wie beispielsweise Pentaerythrit, ethoxyliertem Pentaerythrit mit 1 bis 20 Ethylenoxideinheiten, propoxyliertem Pentaerythrit mit 1 bis 20 Propylenoxideinheiten, gemischt ethoxyliertem und propoxyliertem Pentaerythrit, bei dem die Summe aus Ethylenoxideinheiten und Propylenoxideinheiten 1 bis 20 beträgt.

Zur Erhöhung der Reaktivität bei der Vernetzung oder Polymerisation an Luft können die Bindemittel und die monomeren Mittel 0,1 bis 10 % eines primären oder sekundären Amins enthalten. Beispiele für geeignete Amine sind Ethanolamin, Diethanolamin oder Dibutylamin.

Die Herstellung der Absorptionspigmentformulierung kann nach den üblichen, in der Fachwelt bekannten Dispergierverfahren und unter Verwendung von Verdünnungsmitteln, Dispergiermitteln, Photoinitiatoren und gegebenenfalls weiteren Additiven erfolgen.

Als Verdünnungsmittel können Wasser oder organische Flüssigkeiten oder deren Mischungen verwendet werden, wobei organische Flüssigkeiten bevorzugt sind. Besonders bevorzugt sind organische Flüssigkeiten mit einem Siedepunkt unterhalb von 140 °C, insbesondere Ether wie Tetrahydrofuran, Ketone wie Ethylmethylketon und Ester wie Butylacetat.

Als Dispergiermittel können niedermolekulare Dispergiermittel wie beispielsweise Stearinsäure oder auch polymere Dispergiermittel verwendet werden. Geeignete polymere Dispergiermittel oder Dispergierharze sind dem Fachmann bekannt. Insbesondere sind zu nennen sulfonatgruppen-, phosphatgruppen-, phosphonatgruppen- oder carboxylgruppenhaltige Polyurethane, carboxylgruppenhaltige Vinylchloridcopolymere, Polyiminpolyester oder Polyetheracrylate mit oder ohne eingebaute funktionelle Gruppen.

Für die Herstellung von vernetzbaren oder polymerisierbaren Absorptionspigmentformulierungen können für die photochemische Polymerisation handelsübliche Photoinitiatoren verwendet werden, beispielsweise die oben für die photochemische Polymerisation der cholesterischen Gemische aufgeführten Photoinitiatoren.

Ein weiterer Gegenstand der vorliegenden Erfindung sind Zusammensetzungen, die erfindungsgemäße Pigmente enthalten.

Besonders bevorzugte erfindungsgemäße Zusammensetzungen sind Überzugs- oder Beschichtungsmittel wie z. B. Farben und Lacke, die neben den erfindungsgemäßen Pigmenten eine oder mehrere Substanzen enthalten, die ausgewählt ist bzw. sind unter Wasserlakken, beispielsweise in Form von wässrigen Dispersionen, wie PMA, SA, Polyvinyl-Derivate, PVC, Polyvinylidenchlorid, SB-Copo, PV-AC-Copo-Harze, oder in Form von wasserlöslichen Bindemitteln, wie Schellack, Maleinharze, Kolophonium-modifizierte Phenolharze, lineare und verzweigte, gesättigte Polyester, Aminoplast-vernetzende, gesättigte Polyester, Fettsäure-modifizierte Alkydharze, plastifizierte Harnstoffharze, oder in Form von wasserverdünnbaren Bindemitteln, wie PUR-Dispersionen, EP-Harze, Harnstoffharze, Melaminharze, Phenolharze, Alkydharze, Alkydharzemulsionen, Siliconharzemulsionen; Pulverlacken, wie beispielsweise Pulverlacken für TRIBO/ES, wie Polyester-Beschichtungspulverharze, PUR-Beschichtungspulverharze, EP-Beschichtungspulverharze, EP/SP-Hybrid-Beschichtungspulverharze, PMA-Beschichtungspulverharze, oder Pulverlacken für Wirbelsintern, wie thermoplastifiziertes EPS, LD-PE, LLD-PE, HD-PE; lösemittelhaltigen Lacken, wie beispielsweise als Ein- und Zweikomponenten-Lacke (Bindemittel), wie Schellack, Kolophonium-Harzester, Maleinatharze, Nitrocellulosen, Kolophonium-modifizierte Phenolharze, physikalisch trocknende, gesättigte Polyester, Aminoplast-vernetzende, gesättigte Polyester, Isocyanat-vernetzende, gesättigte Polyester, selbstvernetzende, gesättigte Polyester, Alkyde mit gesättigten Fettsäuren, Leinölalkydharze, Sojaölharze, Sonnenblumenölalkydharze, Safflorölalkydharze, Ricinenalkydharze, Holzöl-/Leinölalkydharze, Mischölalkydharze, harzmodifizierte Alkydharze, Styrol/Vinyltoluolmodifizierte Alkydharze, acrylierte Alkydharze, Urethan-modifizierte Alkydharze, Silicon-modifizierte Alkydharze, Epoxid-modifizierte Alkydharze, Isophthalsäure-Alkydharze, nichtplastifizierte Harnstoffharze, plastifizierte Harnstoffharze, Melaminharze, Polyvinylacetale, nichtvernetzende P(M)A-Homo- bzw. Copolymerisate, nichtvernetzende P(M)A-Homo- bzw. Copolymerisate mit Nichtacrylmonomeren, selbstvernetzende P(M)A-Homo- bzw. Copolymerisate, P(M)A-Copolymerisate mit anderen Nichtacrylmonomeren, fremdvernetzende P(M)A-Homo- bzw. Copolymerisate, fremdvernetzende P(M)A-Copolymerisate mit Nichtacrylmonomeren, Acrylat-Copolymerisationsharze, ungesättigte Kohlenwasserstoffharze, organisch lösliche Celluloseverbindungen, Silicon-Kombiharze, PUR-Harze, P-Harze, Peroxid-härtende, ungesättigte Kunstharze, strahlenhärtende Kunstharze, photoinitiatorhaltig, strahlenhärtende Kunstharze photoinitiatorfrei; lösemittelfreien Lacken (Bindemittel), wie Isocyanat-vernetzende, gesättigte Polyester, PUR-2K-Harzsysteme, PUR-1K-Harzsysteme feuchtigkeitshärtend, EP-Harze, sowie Kunstharze - einzeln oder in Kombination -, wie Acrylnitril-Butadien-Styrol-Copolymere, BS, Celluloseacetat, Celluloseacetobutyrat, Celluloseacetopropionat, Cellulosenitrat, Cellulosepropionat, Kunsthorn, Epoxidharze, Polyamid, Polycarbonat, Polyethylen, Polybutylenterephthalat, Polyethylenterephthalat, Polymethylmethacrylat, Polypropylen, Polystyrol, Polytetrafluorethylen, Polyvinylchlorid, Polyvinylidenchlorid, Pulyurethan, Styrol-Acrylnitril-Copolymere, ungesättigte Polyesterharze als Granulate, Pulver oder Gießharz.

Die erfindungsgemäßen Zusammensetzungen können beispielsweise einschichtige Pigmente von gleicher Farbe aber unterschiedlicher Händigkeit enthalten, wodurch wesentlich mehr Licht der gleichen Wellenlänge reflektiert wird, als bei Zusammensetzungen, die Pigmente gleicher Händigkeit enthalten.

Die erfindungsgemäßen Zusammensetzungen können außerdem Stabilisatoren gegen UV- und Wettereinflüsse sowie anorganische oder organische Pigmente enthalten, wie oben beschrieben.

Die erfindungsgemäßen Pigmente können einzeln oder in Mischungen in die erfindungsgemäßen Zusammensetzungen eingearbeitet und dort gegebenenfalls zusätzlich durch Scherkräfte auslösende Methoden ausgerichtet werden. Geeignete Methoden zur Ausrichtung der erfindungsgemäßen Pigmente sind Drucken und Rakeln oder, bei magnetischen Pigmenten, Anlegen eines magnetischen Feldes.

Ein weiterer Gegenstand der vorliegenden Erfindung ist die Verwendung der erfindungsgemäßen Pigmente im Fahrzeug- und Fahrzeugzubehörsektor, im Freizeit-, Sport- und Spielsektor, im Kosmetikbereich, im Textil-, Leder- oder Schmuckbereich, im Geschenkartikelbereich, in Schreibutensilien, Emballagen oder Brillengestängen, im Bausektor, im Haushaltssektor sowie bei Druckerzeugnissen aller Art, wie beispielsweise Kartonagen, Verpackungen, Tragetaschen, Papiere, Etiketten oder Folien.

Die durch die erfindungsgemäßen cholesterischen Folien bzw. cholesterischen Pigmente erzielbaren Farbeffekte umfassen, bedingt durch die Vielfalt der erzielbaren Reflexionswellenlängen, auch den UV- und den IR-Bereich sowie selbstverständlich den Bereich des sichtbaren Lichtes. Werden die erfindungsgemäßen Pigmente auf Banknoten, Scheckkarten, andere bargeldlose Zahlungsmittel oder Ausweise aufgebracht (beispielsweise durch bekannte Druckverfahren) oder in sie eingearbeitet, erschwert dies das identische Kopieren, insbesondere das Fälschen dieser Gegenstände erheblich. Ein weiterer Gegenstand der vorliegenden Erfindung ist somit die Verwendung der erfindungsgemäßen Pigmente zur fälschungserschwerenden Bearbeitung von Gegenständen, insbesondere von Banknoten, Scheckkarten oder anderen bargeldlosen Zahlungsmitteln oder Ausweisen.

Weitere Gegenstände der vorliegenden Erfindung sind die Verwendung der erfindungsgemäßen Zusammensetzungen oder Pigmente zur Beschichtung von Gebrauchsgegenständen und zur Lackierung von Fahrzeugen.

Ein weiterer Gegenstand der vorliegenden Erfindung sind Beschichtungsmittel, die wenigstens ein erfindungsgemäßes Pigment enthalten, vorzugsweise Beschichtungsmittel, die ausgewählt sind unter Effektlacken, -farben oder -folien, insbesondere unter selbstdekkenden Effektlacken, -farben oder -folien.

Die Erfindung wird nun anhand der folgenden Ausführungsbeispiele und unter Bezugnahme auf beiliegende Figuren näher erläutert. Dabei zeigen
- Figur 1:: die schematische Darstellung einer erfindungsgemäß einsetzbaren Beschichtungsapparatur; und
- Figur 2:: die Domänenstruktur erfindungsgemäßer Schichten bei einem Gießüberdruck von (A) 0,2 bar bzw. (B) 0,3 bar.

### Beispiel 1

Anhand der folgenden Testreihen A bis D wird die erfindungsgemäße Herstellung von cholesterischen Effektschichten unter Verwendung eines Messergießers näher erläutert.

### Testreihe A:

Testreihe A zeigt den Einfluss des Feststoffgehalts der Beschichtungsmasse auf die Farbqualität der erzeugten cholesterischen Schicht.

Es wurde eine cholesterische Mischung der oben beschriebenen Gruppe b) eingesetzt, die als chirales Monomer eine Verbindung der oben angegebenen Formel 2 und als achirales, nematisches Monomer ein Gemisch von Verbindungen der oben angegebenen Formel 3 enthielt. Das unverdünnte cholesterische Gemisch enthielt 90,5 Gew.-% der achiralen, nematischen Verbindung, 6,5 Gew.-% der chiralen Verbindung und als Photoinitiator 3 Gew.-% 1-Hydrocyclohexylphenylketon, das unter der Bezeichnung Irgacure 184 vertrieben wird. Als Lösungsmittel wurde Methylethylketon verwendet.

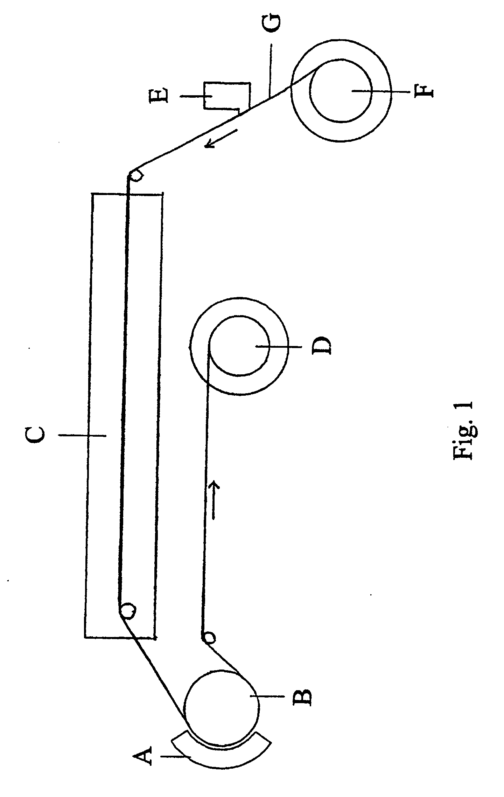

Die Beschichtung erfolgte mit einer Beschichtungsapparatur, die in Figur 1 schematisch dargestellt ist. Eine schwarzglänzend, rückseitig vorbeschichtete Polyethylenterephthalatfolie (PET-Folie) (G) mit einer Dicke von 15 µm wurde vom Folienwickel (F) kontinuierlich abgerollt und mit einem Messergießer beschichtet. Die Dicke der cholesterischen Schicht betrug 2,5 µm. Die Trocknung erfolgte bei 60 °C im Trockner (C). Die Härtung der Schicht erfolgte durch UV-Fixierung in der UV-Anlage (A) während das getrocknete Band über die Kühlwalze (B) geführt wurde. Die gehärtete Cholesterenschicht wurde auf die Rolle (D) aufgewickelt.

Tabelle A zeigt den überraschenden, vorteilhaften Effekt der Verdünnung des cholesterischen Gemisches auf eine Konzentration (Feststoffgehalt) von 40 bis 50 %. In Spalte 2 sind die Verweilzeiten im Trockenraum angegeben. Die den Farbeindruck charakterisierenden Symbole bedeuten: -- = sehr schlecht, - = schlecht, o = mäßig, + = gut, ++ = sehr gut.

**Tabelle A:**

| | Konzentration (%) | Verweilzeit (sec) | Farbeindruck | Glanz n. DIN 67530 Winkel 60° |
|---|---|---|---|---|
| Vergleichsexperiment 1a | 70 % | 13 | - | 72 |
| Vergleichsexperiment 1b | 70 % | 20 | o | 73 |
| Vergleichsexperiment 1c | 70 % | 40 | o | 75 |
| | | | | |
| Vergleichsexperiment 2a | 60 % | 13 | o | 75 |
| Vergleichsexperiment 2b | 60 % | 20 | o | 77 |
| Vergleichsexperiment 2c | 60 % | 40 | o | 80 |
| | | | | |
| Experiment 1a | 50 % | 13 | + | 122 |
| Experiment 1b | 50 % | 20 | + | 123 |
| Experiment 1c | 50 % | 40 | + | 125 |
| | | | | |
| Experiment 2a | 40 % | 13 | + | 125 |
| Experiment 2b | 40 % | 20 | + | 128 |
| Experiment 2c | 40 % | 40 | + | 120 |

### Testreihe B:

Testreihe B zeigt die positive Auswirkung der Zugabe minimaler Mengen Verlaufsmittel.

Hierbei wurde jeweils von der auch in Testreihe A eingesetzten cholesterischen Mischung in einer Konzentration von 45 % in Methylethylketon ausgegangen. Die Trocknertemperatur betrug 60 °C, die Verweilzeit im Trocknerraum 20 Sekunden. Die Härtung der Beschichtung erfolgte durch UV-Bestrahlung. Beschichtet wurde, wie für Testreihe A beschrieben.

**Tabelle B:**

| | % Additive/Cholester | Farbeindruck | Glanz n. DIN 67530 Winkel 60° |
|---|---|---|---|
| Vergleichsexperiment | ohne Zusätze | + | 117 |
| | | | |
| Experiment 1a | 0,01 % Byk 361 | ++ | 149 |
| Experiment 1b | 0,10 % Byk 361 | ++ | 146 |
| Experiment 1c | 0,50 % Byk 361 | ++ | 119 |
| | | | |
| Experiment 2c | 0,01 % Tego flow ZFS 460 | ++ | 147 |
| Experiment 2b | 0,10 % Tego flow ZFS 460 | ++ | 132 |
| Experiment 2c | 0,50 % Tego flow ZFS 460 | ++ | 136 |

### Testreihe C:

Testreihe C zeigt die positive Auswirkung des Gießens mit Überdruck auf die Glattheit der hergestellten cholesterischen Schichten.

Hierbei wurde jeweils von der auch in Testreihe A eingesetzten cholesterischen Mischung in einer Konzentration von 45 % in Methylethylketon ausgegangen. Die Trocknertemperatur betrug 60 °C, die Verweilzeit im Trockenraum 20 Sekunden. Die Härtung der Beschichtung erfolgte durch UV-Bestrahlung. Die Beschichtung erfolgte, wie für Testreihe A beschrieben. Die Dicke der cholesterischen Schicht betrug 2,5 µm.

Tabelle C1 zeigt, dass ein erhöhter Gießerüberdruck, insbesondere bei Zusatz eines Verlaufsmittels wie in Testreihe B beschrieben, zu einer deutlich verminderten Rauigkeit der gegossenenen und gehärteten Schicht führt. Die Rauigkeit wurde mittels eines Pertometers der Fa. FEINPRÜF mechanisch gemessen (Teststrecke: 5,6 mm; Cut-off: 0,25 mm). Rz gibt die gemittelte Rautiefe nach DIN 4768, Ra den Mittelrauwert nach DIN 4768/1 an. Die Oberflächenqualität ist bereits bei Experiment 1b auf hohem Niveau und führt zu einer exzellenten Brillanz. Weitere Verbesserungen der Oberflächeneigenschaften sind mit dem optischen Verfahren nach DIN 67530 nicht mehr messbar, was die identischen Werte in Spalte 6 für Experiment 1b und 1c erklärt, und müssen durch andere Verfahren nachgewiesen werden.

Tabelle C2 zeigt die Ergebnisse der Vermessung der drei in Tabelle C1 angegebenen Schichten mittels Rasterkraftmikroskopie (REM). Die Oberflächen der LC-Schichten sind, je nach Qualität, von einer domänenartigen Struktur netzähnlich überzogen. Je höher die Oberflächenqualität ist, desto größer sind die Domänenflächen (Domänendurchmesser). Gleichzeitig sind die domänenabgrenzenden Mikrorillen wesentlich weniger tief.

**Tabelle C1**

| | zusätze | Gießerüberdruck | Rauigkeit Rz | Rauigkeit Ra | Glanz DIN 67530 Winkel60° |
|---|---|---|---|---|---|
| Experiment 1a | ohne | 0,02 bar | 200 nm | 30 nm | 117 |
| Experiment 1b | 0,1% Byk361 | 0,02 bar | 102 nm | 16 nm | 146 |
| Experiment 1c | 0,1% Byk361 | 0,2 bar | 59 nm | 10 nm | 146 |

**Tabelle C2**

| | Zusätze | Gießerüberdruck | Domänendurchmesser (µm) | Mikrostruktur/ Rillentiefe (nm) |
|---|---|---|---|---|
| Experiment 1a | ohne | 0,02 bar | ca. 10 | 50-100 |
| Experiment 1b | 0,1 % Byk361 | 0,02 bar | ca. 20 | 30-50 |
| Experiment 1c | 0,1 % Byk361 | 0,2 bar | ca. 25 | 5-10 |

### Testreihe D:

Testreihe D zeigt die positive Auswirkung des Gießens mit Überdruck auf die Glattheit der hergestellten cholesterischen Schichten.

Die Tests wurden mit der in Testreihe A eingesetzten cholesterischen Mischung in einer Konzentration von 45 % in Methylethylketon durchgeführt. Als Verlaufsmittel wurde Byk361 in einer Konzentration von 0,1 % zugesetzt. Die cholesterische Mischung wurde wie für Testreihe A beschrieben auf eine Trägerfolie aufgetragen. Die Trocknertemperatur betrug 60 °C, die Verweilzeit im Trockenraum 20 Sekunden. Die beschichteten und getrockneten Folien wurden wie in Testreihe A beschrieben weiterbehandelt. Die Dicke der getrockneten und vernetzten cholesterischen Schicht betrug 3,4 µm. Tabelle D zeigt die Versuchsergebnisse. Domänendurchmesser und Rillentiefe der die Domänen abgrenzenden Mikrorillen wurden wie in Testreihe C vermessen.

**Tabelle D**

| | Gießgeschwindigkeit (m/min) | Gießüberdruck (bar) | Gießspalt (µm) | Domänendurchmesser (µm) | Mikrostruktur Rillentiefe(nm) |
|---|---|---|---|---|---|
| Experiment 1a | 5 | 0,2 | 12 | ca 30-50 | 5-10 |
| Experiment 1b | 10 | 0,3 | 10 | keine Domänenstruktur mehr erkennbar | ≤ 5 |

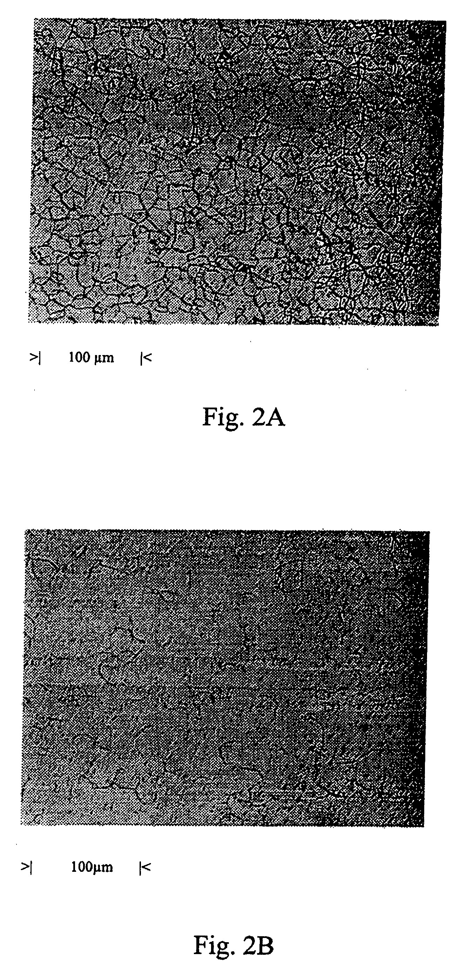

Die Figuren 2A und 2B lassen den in der Tabelle D dokumentierten Effekt deutlich erkennen. Die mit einem Gießerüberdruck von 0,2 bar hergestellte Beschichtung, die in Figur 2A abgebildet ist, zeigt eine deutlich erkennbare Domänenstruktur. Hingegen ist die mit einem Gießerüberdruck von 0,3 bar hergestellte und in Figur 2B abgebildete Beschichtung wesentlich glatter, so dass die Domänenstruktur zum überwiegenden Teil aufgelöst ist und nurmehr vereinzelt Rillen zu erkennen sind.

Die beobachteten Testresultate sind insofern überraschend, als mit zunehmender Gießgeschwindigkeit die Schichtqualität weiter verbessert werden kann, obwohl die verbleibende Orientierungszeit (Zeit bis zum Eintritt in die Trocknungsphase) für die Cholesteren-Helices verringert wird. Darüber hinaus erlaubt eine Erhöhung der Gießgeschwindigkeit eine wirtschaftlichere, d. h. höhere Produktionsgeschwindigkeit.

Die im Rahmen des Beispiels 1 hergestellten Cholesterschichten können in herkömmlicher Weise von der Trägerfolie entfernt und z. B. zu Effektpigmenten vermahlen werden. Weiterhin besteht die Möglichkeit, die beschichteten Folienbahnen als solche, z. B. als Effektfolien, zu verwenden. Zur Verbesserung der Haftung der Cholesterschicht auf der Trägerfolie kann es dabei von Vorteil sein, die Trocknungstemperatur und/oder Trocknungsdauer zu vergrößern. Ausgehend von den detaillierten Angaben in vorliegender Beschreibung wird es dem Durchschnittsfachmann ermöglicht, ohne unzumutbaren Aufwand die Beschichtungsbedingungen dem jeweiligen Verwendungszweck des Produktes entsprechend zu optimieren.

### Beispiel 2: Herstellung einer transparenten grün-blauen Farbeffektfolie

Es wird eine Lösung bestehend aus 20 Tl. Cholesterenmischung (96,2 % nematische Komponente der Formel (3) und 3,8 % chirale Komponente der Formel (5)) mit einem Reflexionsmaximum bei 510 nm, 3 Tl. Photoinitiator Irgacure® 907 (von Fa. Ciba-Geigy), 0,1 Tl. Byk 361 (von Fa. Byk) und 76,9 Tl. Methylethylketon hergestellt. Mit Hilfe einer Beschichtungsmaschine wird die Lösung auf eine 480 mm breite Polyesterfolie aufgebracht. Die Beschichtung erfolgt durch eine Edelstahlwalze, die unten in eine Wanne mit der Lösung eintaucht. Durch Rotation der Walze wird die Oberfläche der Walze ständig mit einem Flüssigkeitsfilm benetzt. Oben an der Walze wird kontinuierlich eine Folie vorbeigeführt, die direkten Kontakt zur Walze hat. Die Drehrichtung der Walze ist gegenläufig zur Bewegungsrichtung der Folie (Reverse Roll Coating). Auf diese Weise wird ein dünner Flüssigkeitsfilm der Lösung auf die Folie übertragen und anschließend in einem Trockenkanal bei 60°C physikalisch getrocknet. Im direkten Anschluß daran wird die physikalisch getrocknete Cholesterenschicht in-line durch Bestrahlung mit UV-Licht unter Stickstoffatmosphäre gehärtet (chemisch getrocknet). Die Schichtdicke der Beschichtung beträgt 2 µm. Man erhält eine transparente Farbeffektfolie mit einem Reflexionsmaximum bei 528 nm und einer Reflexion von 30 %. Mit dem Auge betrachtet ist die Folie transparent mit einem dezenten aber brillanten Farbwechsel von grün (bei senkrechtem Aufblick) nach blau (bei Aufblick unter flachem Winkel).

### Beispiel 3: Herstellung einer transparenten rot-grünen Farbeffektfolie

Es wird eine Lösung bestehend aus 20 T1. Cholesterenmischung (97,35 % nematische Komponente der Formel (3) und 2,65 % chirale Komponente der Formel (5)) mit einem Reflexionsmaximum bei 664 nm, 3 Tl. Photoinitiator Irgacure® 907 (von Fa. Ciba-Geigy), 0,1 T1. Byk 361 (von Fa. Byk) und 76,9 T1. Methylethylketon hergestellt. Mit Hilfe einer Beschichtungsmaschine wird die Lösung auf eine 480 mm breite Polyesterfolie aufgebracht. Die Beschichtung erfolgt gemäß Beispiel 2. Die Schichtdicke der Beschichtung beträgt 2 µm. Man erhält eine transparente Farbeffektfolie mit einem Reflexionsmaximum bei 655 nm und einer Reflexion von 23 %. Mit dem Auge betrachtet ist die Folie transparent mit einem dezenten aber brillanten Farbwechsel von rot (bei senkrechtem Aufblick) nach grün (bei Aufblick unter flachem Winkel).

### Beispiel 4: Herstellung einer transparenten blau-violetten Farbeffektfolie

Es wird eine Lösung bestehend aus 20 Tl. Cholesterenmischung (96,38 % nematische Komponente der Formel (3) und 3,62 % chirale Komponente der Formel (5)) mit einem Reflexionsmaximum bei 483 nm, 3 Tl. Photoinitiator Irgacure® 907 (von Fa. Ciba-Geigy), 0,1 Tl. Byk 361 (von Fa. Byk) und 76,9 Tl. Methylethylketon hergestellt. Mit Hilfe einer Beschichtungsmaschine wird die Lösung auf eine 480 mm breite Polyesterfolie aufgebracht. Die Beschichtung erfolgt gemäß Beispiel 2. Die Schichtdicke der Beschichtung beträgt 2 µm. Man erhält eine transparente Farbeffektfolie mit einem Reflexionsmaximum bei 487 nm und einer Reflexion von 40 %. Mit dem Auge betrachtet ist die Folie transparent mit einem dezenten aber brillanten Farbwechsel von blau (bei senkrechtem Aufblick) nach violett (bei Aufblick unter flachem Winkel).

### Beispiel 5: Herstellung einer deckenden grün-blauen Farbeffektfolie

Eine Folie, die wie in Beispiel 2 beschrieben hergestellt wurde, wird mit einer Lösung bestehend aus 25 Tl. schwarzer Druckfarbe Flexoplastol VA/2-Schwarz (von Fa. BASF AG) und 75 T1. Ethanol beschichtet. Die Beschichtung erfolgt so wie in Beispiel 2 beschrieben, jedoch ohne UV-Härtung (nur physikalische Trocknung). Die Schichtdicke der schwarzen Schicht beträgt 1 µm. Die Beschichtung mit der schwarzen Druckfarbe erfolgt auf die mit Cholester beschichtete Seite der nach Beispiel 2 hergestellten Folie. Man erhält eine deckende Farbeffektfolie, die auf einer Seite Farbe zeigt und auf der anderen Seite schwarz ist. Schaut man auf die farbige Seite der Folie, so schaut man durch die Polyesterfolie auf die farbige Schicht, d. h. die Außenseite der Farbeffektfolie ist durch die Polyesterfolie geschützt. Somit besitzt die Farbeffektfolie auf der Außenseite die gleichen guten Eigenschaften, beispielsweise hinsichlich Kratzfestigkeit und Chemikalienbeständigkeit, wie eine reine Polyesterfolie. Mit dem Auge betrachtet ist die Folie deckend mit einem kräftigen und brillanten Farbwechsel von grün (bei senkrechtem Aufblick) nach blau (bei Aufblick unter flachem Winkel).

### Beispiel 6: Herstellung einer deckenden rot-grünen Farbeffektfolie

Eine Folie, die wie in Beispiel 3 beschrieben hergestellt wurde, wird mit einer Lösung bestehend aus 25 Tl. schwarzer Druckfarbe Flexoplastol VA/2-Schwarz (von Fa. BASF AG) und 75 Tl. Ethanol beschichtet. Die Beschichtung erfolgt so wie in Beispiel 3 beschrieben, jedoch ohne UV-Härtung (nur physikalische Trocknung).

Die Schichtdicke der schwarzen Schicht beträgt 1 µm. Die Beschichtung mit der schwarzen Druckfarbe erfolgt auf die mit Cholester beschichtete Seite der nach Beispiel 3 hergestellten Folie.

Man erhält eine deckende Farbeffektfolie, die auf einer Seite Farbe zeigt und auf der anderen Seite schwarz ist. Schaut man auf die farbige Seite der Folie, so schaut man durch die Polyesterfolie auf die farbige Schicht, d. h. die Außenseite der Farbeffektfolie ist durch die Polyesterfolie geschützt. Somit besitzt die Farbeffektfolie auf der Außenseite die gleichen guten Eigenschaften, beispielsweise hinsichlich Kratzfestigkeit und Chemikalienbeständigkeit, wie eine reine Polyesterfolie. Mit dem Auge betrachtet ist die Folie deckend mit einem kräftigen und brillanten Farbwechsel von rot (bei senkrechtem Aufblick) nach grün (bei Aufblick unter flachem Winkel).

### Beispiel 7: Herstellung einer deckenden blau-violetten Farbeffektfolie

Eine Folie, die wie in Beispiel 4 beschrieben hergestellt wurde, wird mit einer Lösung bestehend aus 25 T1. schwarzer Druckfarbe Flexoplastol VA/2-Schwarz (von Fa. BASF AG) und 75 T1. Ethanol beschichtet. Die Beschichtung erfolgt so wie in Beispiel 4 beschrieben, jedoch ohne UV-Härtung (nur physikalische Trocknung). Die Schichtdicke der schwarzen Schicht beträgt 1 µm. Die Beschichtung mit der schwarzen Druckfarbe erfolgt auf die mit Cholester beschichtete Seite der nach Beispiel 4 hergestellten Folie.

Man erhält eine deckende Farbeffektfolie, die auf einer Seite Farbe zeigt und auf der anderen Seite schwarz ist. Schaut man auf die farbige Seite der Folie, so schaut man durch die Polyesterfolie auf die farbige Schicht, d. h. die Außenseite der Farbeffektfolie ist durch die Polyesterfolie geschützt. Somit besitzt die Farbeffektfolie auf der Außenseite die gleichen guten Eigenschaften, beispielsweise hinsichlich Kratzfestigkeit und Chemikalienbeständigkeit, wie eine reine Polyesterfolie. Mit dem Auge betrachtet ist die Folie deckend mit einem kräftigen und brillanten Farbwechsel von blau (bei senkrechtem Aufblick) nach violett (bei Aufblick unter flachem Winkel).

### Beispiel 8: Herstellung einer transparenten grün-violetten Farbeffektfolie mit cholesterischer Doppelschicht

Eine Folie, die wie in Beispiel 3 beschrieben hergestellt wurde, wird mit einer 2. Cholesterenschicht so wie in Beispiel 4 beschrieben beschichtet. Dabei wird die 2. Cholesterenschicht auf die 1. Cholesterenschicht aufgebracht.

Man erhält eine transparente Farbeffektfolie mit zwei Reflexionsmaxima, eines bei 486 nm und das andere bei 640 nm. Bei 486 nm erhält man 36 % Reflexion, bei 640 nm 21 %. Mit dem Auge betrachtet ist die Folie transparent mit einem dezenten aber brillanten Farbwechsel von grün (bei senkrechtem Aufblick) nach rot-violett (bei Aufblick unter flachem Winkel).

### Beispiel 9: Herstellung einer deckenden grün-violetten Farbeffektfolie

Eine Folie, die wie in Beispiel 8 beschrieben hergestellt wurde, wird mit einer Lösung bestehend aus 25 Tl. schwarzer Druckfarbe Flexoplastol VA/2-Schwarz (von Fa. BASF AG) und 75 Tl. Ethanol beschichtet. Die Beschichtung erfolgt so wie in Beispiel 2 beschrieben, jedoch ohne UV-Härtung (nur physikalische Trocknung). Die Schichtdicke der schwarzen Schicht beträgt 1 µm. Die Beschichtung mit der schwarzen Druckfarbe erfolgt auf die mit Cholester beschichtete Seite der nach Beispiel 8 hergestellten Folie.

Man erhält eine deckende Farbeffektfolie, die auf einer Seite Farbe zeigt und auf der anderen Seite schwarz ist. Schaut man auf die farbige Seite der Folie, so schaut man durch die Polyesterfolie auf die farbige Schicht, d. h. die Außenseite der Farbeffektfolie ist durch die Polyesterfolie geschützt. Somit besitzt die Farbeffektfolie auf der Außenseite die gleichen guten Eigenschaften, beispielsweise hinsichlich Kratzfestigkeit und Chemikalienbeständigkeit, wie eine reine Polyesterfolie. Mit dem Auge betrachtet ist die Folie deckend mit einem kräftigen und brillanten Farbwechsel von grün (bei senkrechtem Aufblick) nach rot-violett (bei Aufblick unter flachem Winkel).

### Beispiel 10: Herstellung von cholesterischen Dreischichtpigmenten

### a) Herstellung der 1. Cholesterenschicht

Mit Hilfe einer Gießvorrichtung gemäß Beispiel 1 wird eine Lösung bestehend aus 45 Tl. Cholesterenmischung (96,2 % nematische Komponente gemäß Formel (3) und 3,8 % chirale Komponente gemäß Formel (5)), 3 Tl. Photoinitiator Irgacure® 907 (von Fa. Ciba-Geigy), 0.1 Tl. Byk 361 (von Fa. Byk) und 51,9 Tl. Methylethylketon auf eine Polyesterfolie aufgebracht. Die beschichtete Folie wird dann durch einen Trockenkanal geführt, der auf 60°C temperiert ist. Anschließend wird die physikalisch getrocknete Schicht in-line durch Bestrahlen mit UV-Licht unter Stickstoffatmosphäre gehärtet und die beschichtete Folie wird auf eine Spule gewikkelt. Die Cholesterenschicht hat eine Dicke von 2 µm und reflektiert senkrecht zur Schichtebene Licht mit eimem Maxium der Reflexion bei einer Wellenlänge von 505 nm. Mit dem Auge betrachtet erscheint die Schicht bei senkrechtem Aufblick grün mit einem Farbwechsel nach blau, wenn man schräg auf die Schicht schaut.

### b) Herstellung der Zwischenschicht

Die, wie unter a) beschrieben, beschichtete Folie wird mit Hilfe der gleichen Gießvorrichtung mit einer Lösung bestehend aus 70, 82 Tl. schwarzer Druckfarbe Flexoplastol VA/2-Schwarz (von Fa. BASF AG), 7,08 Tl. Reaktivverdünner (Triacrylat von propoxyliertem/ethoxyliertem Trimethylolpropan; Laromer® PO 33F; von Fa. BASF AG), 0,85 Tl. Photoinitiator Irgacure® 500 (von Fa. Ciba-Geigy), und 21,25 Tl. Tetrahydrofuran beschichtet. Die beschichtete Folie wird dann durch einen Trockenkanal geführt, der auf 60°C temperiert ist und physikalisch getrocknet. Anschließend wird die Schicht in-line durch Bestrahlen mit UV-Licht unter Stickstoffatmospäre gehärtet und die beschichtete Folie wird auf eine Spule gewickelt. Die schwarze Schicht hat eine Dicke von 1 µm.

### c) Herstellung der 2. Cholesterenschicht

Die, wie unter a) und b) beschrieben, beschichtete Folie wird mit Hilfe der gleichen Gießvorrichtung mit einer Lösung bestehend aus 45 Tl. Cholesterenmischung (vgl. Schritt a)), 3 Tl. Photoinitiator Irgacure 907, 0,1 Tl. Byk 361 und 51,9 Tl. Methylethylketon beschichtet. Die beschichtete Folie wird dann durch einen Trokkenkanal geführt, der auf 60°C temperiert ist und physikalisch getrocknet. Anschließend wird die Schicht in-line durch Bestrahlen mit UV-Licht unter Stickstoffatmosphäre gehärtet und die beschichtete Folie wird auf eine Spule gewickelt. Die Cholesterenschicht hat eine Dicke von 2 µm und reflektiert senkrecht zur Schichtebene Licht mit eimem Maxium der Reflexion bei 510 nm. Mit dem Auge betrachtet erscheint die Schicht bei senkrechtem Aufblick grün mit einem Farbwechsel nach blau, wenn man schräg auf die Schicht schaut.

Nach den Arbeitsschritten a), b) und c) erhält man einen 3-Schichtverbund auf der Polyesterträgerfolie. Die mechanische Stabilität des 3-Schichtverbundes wurde durch Messen der Abrißkraft und der Abschälkraft bestimmt. Dazu werden die mit dem 3-Schichtverbund beschichteten Folien in 3,81 mm breite Streifen geschnitten, der Kraftaufnehmer auf den 3-Schichtverbund geklebt und die Kraft bestimmt, die zum Einreißen (Abrißkraft) bzw. zum Abziehen (Abschälkraft) der bereits eingerissenen Schicht nötig ist. Die Abrißkraft zwischen der 1. Cholesterenschicht und der schwarzen Zwischenschicht beträgt 0.065 N und die Abschälkraft beträgt 0.005 N.

### d) Entfernen des Dreischichtverbundes von der Trägerfolie

Der, wie unter a), b) und c) beschriebene, Dreischichtverbund wird von der Polyesterträgerfolie entfernt, indem der Dreischichtverbund quer zur Folienbahnrichtung mit einer Rasierklinge verletzt wird und dann mit Druckluft, die durch eine Schlitzdüse gepresst wird, abgeblasen wird. Die beschichtete Folie wird dabei kontinuierlich an der Schlitzdüse vorbeigeführt und der abgeblasene Dreischichtverbund wird in Form von Flocken aufgefangen. Die Dreischichtflocken sind 6 µm dick und zeigen auf beiden Seiten bei senkrechtem Aufblick eine kräftige grüne Farbe mit einem Farbwechsel nach blau, wenn man schräg auf die Flocken schaut.

### e) Mahlen der Dreischichtflocken zu einem Pigment

10 g Cholesterenflocken, hergestellt wie unter d) beschrieben, werden mit 100 g Natriumchlorid gemischt und 6 mal 2 Minuten in einer Schlagmessermühle gemahlen. Nach dem Mahlen wird das Salz mit Wasser herausgewaschen und das Pigment isoliert. Beim Mahlen kommt es teilweise zu Delamination des Dreischichtpigmentes.

### Beispiel 11: Herstellung von cholesterischen Dreischichtpigmenten

### a) Zunächst wird die 1. Cholesterenschicht wie in Beispiel 10 unter a) beschrieben hergestellt.

### b) Herstellung der Zwischenschicht

Die, wie unter a) beschrieben, beschichtete Folie wird mit Hilfe der gleichen Gießvorrichtung mit einer Lösung bestehend aus 28,33 Tl. schwarzer Druckfarbe Flexoplastol VA/2-Schwarz (von Fa. BASF AG), 2,83 Tl. Laromer® PO 33F (von Fa. BASF AG), 0,34 Tl. Photoinitiator Irgacure 500 (von Fa. Ciba-Geigy), 60 Tl. 20 prozentige Lösung eines Copolymers aus Ethylhexylacrylat und Acrylsäure (Acronal® 101 L; von Fa. BASF AG) in Tetrahydrofuran und 8,5 Tl.

Tetrahydrofuran beschichtet. Die beschichtete Folie wird dann durch einen Trockenkanal geführt, der auf 60°C temperiert ist und physikalisch getrocknet. Anschließend wird die Schicht in-line durch Bestrahlen mit UV-Licht unter Stickstoffatmosphäre gehärtet und die beschichtete Folie wird auf eine Spule gewickelt. Die schwarze Schicht hat eine Dicke von 1 µm.

### c) Herstellung der 2. Cholesterenschicht

Auf die schwarze Zwischenschicht wird wie in Beispiel 10 unter c) beschrieben die 2. Cholesterenschicht aufgebracht und dadurch ein Dreischichtverbund erhalten. Die Prüfung der mechanischen Stabilität des Dreischichtverbundes ergibt eine Abrißkraft zwischen der 1. Cholesterenschicht und der schwarzen Zwischenschicht von 0.19 N und eine Abschälkraft von 0.01 N.

### d) Entfernen des Dreischichtverbundes von der Trägerfolie

Der Dreischichtverbund wird wie in Beispiel 10 unter d) beschrieben von der Trägerfolie entfernt.

### e) Mahlen der Dreischichtflocken zu einem Pigment

Die Mahlung zu einem Pigment erfolgt wie in Beispiel 10 unter e) beschrieben. Die mikroskopische Beurteilung ergibt einen im Vergleich zu Beispiel 10 deutlich geringeren Anteil an delaminierten Pigmentteilchen, die 6 µm dick sind und auf beiden Seiten bei senkrechtem Aufblick eine kräftige grüne Farbe zeigen. Ändert man den Betrachtungswinkel, so erfolgt ein Farbwechsel von grün nach blau. Beim Betrachten auf einem weißen Untergrund sind die Pigmentteilchen deckend.

### Beispiel 12: Herstellung von Dreischichtpigmenten mit pigmentierter Absorberschicht umfassend ein cholesterisches, strahlungshärtbares Bindemittel

### a) Herstellung der 1. Cholesterschicht

Es wird zunächst analog Beispiel 1, Testreihe A auf eine 15 µm PET-Trägerfolie eine 2 µm (Trockendicke) Cholesterschicht gegossen und UV-gehärtet. Das Reflektionsmaximum dieser Schicht lag bei 520 nm.

### b) Herstellung einer rußpigmentierten Absorberschicht mit cholesterischem Bindemittel

In einem Laborkneter mit einem Nutzvolumen von 300 ml werden 150 g Farbruß Regal 400R (Hersteller: Cabot Corporation) mit 3 g Stearinsäure, 80 g eines phosphonathaltigen Dispergierharzes 50 %-ig in Tetrahydrofuran, beschrieben in DE-A-195 16 784, und 40 g Methylethylketon 1 Stunde geknetet. Die daraus resultierende Knetmasse (Feststoffanteil 70,7 %) wird anschließend in einem Dissolver mit 499 g Methylethylketon auf einen Feststoffgehalt von 25 % eingestellt. Diese Dispersion wird danach in einer Rührwerksmühle (Typ Dispermat SL, Mahlkammervolumen 125 ml, Mahlkörper Zirkonoxid 1-1,25 mm) optimal ausdispergiert. Der Dispergierfortschritt wird dabei mittels einem Interferenzkontrastverfahren (EP-B-0 032 710) verfolgt. Die Endfeinheit ist erreicht, wenn die zu prüfende Oberfläche agglomeratfrei ist. Eine daraus gefertigte Schicht ist hochglänzend und weist eine Grundrauhigkeit von ≤ 100 nm auf. Zu der so erhaltenen Dispersion werden 500 g einer 60 %-igen Cholesterlösung zusammen mit 0,3 g Byk 361 (Byk-Chemie) mittels eines Dissolvers 30 Minuten intensiv eingemischt. Nach Einrühren von 9 g Photoinitiator Irgacure 907 (Ciba Geigy) kann diese Dispersion (Feststoffanteil 39,2 %) aufgetragen werden. Dazu wird sie in einer Schichtdicke von 0,8 µm (Trockendicke) auf die 1. Cholesterschicht analog zu Schritt a) aufgetragen, physikalisch getrocknet und dann unter Stickstoffatmosphäre strahlungsgehärtet.

### c) Herstellung der 2. Cholesterschicht

Auf die ausgehärtete Absorberschicht wird analog zu Schritt a) eine weitere Cholesterschicht aufgetragen, getrocknet und gehärtet. Die 2. Cholesterschicht ist hinsichtlich Zusammensetzung und Schichtdicke mit der 1. Cholesterschicht vergleichbar.

### d) Herstellung von Pigmenten

Der ausgehärtete Dreischichtverbund wird wie in Beispiel 11 beschrieben vom Substrat abgetrennt und gemahlen. Man erhält Pigmente mit beidseitig hoher Brillanz mit vom Betrachtungswinkel abhängiger Farbe.

## Patentansprüche

1. Verfahren zur Herstellung von cholesterischen Schichten, **dadurch gekennzeichnet, dass** man auf einen Träger wenigstens eine Schicht eines härtbaren, gießfähigen cholesterischen Gemischs mittels einer Gießvorrichtung aufbringt und eine feste Cholesterenschicht ausbildet, die eine mittlere Schichtdikkenschwankung von weniger als ± 0,2 µm besitzt.

2. Verfahren nach Anspruch 1, **dadurch gekennzeichnet, dass** man ein gießfähiges, härtbares cholesterisches Gemisch mit einem Anteil des Verdünnungsmittels von etwa 5 bis 95 Gew.-%, bezogen auf das Gesamtgewicht des aufzubringenden Gemischs, aufträgt.

3. Verfahren nach einem der vorhergehenden Ansprüche, **dadurch gekennzeichnet, dass** man ein gießfähiges, härtbares cholesterisches Gemisch einsetzt, das ausgewählt ist unter Gemischen, enthaltend:
a) mindestens ein cholesterisches, polymerisierbares Monomer in einem inerten Verdünnungsmittel; oder
b) mindestens ein achirales, nematisches, polymerisierbares Monomer und eine chirale Verbindung in einem inerten Verdünnungsmittel; oder
c) mindestens ein cholesterisches, vernetzbares Oligomer oder Polymer in einem inerten Verdünnungsmittel; oder
d) ein cholesterisches Polymer in einem polymerisierbaren Verdünnungsmittel, oder
e) mindestens ein cholesterisches Polymer, dessen cholesterische Phase durch schnelles Abkühlen unter die Glasübergangstemperatur eingefroren werden kann.

4. Verfahren nach einem der vorhergehenden Ansprüche, **dadurch gekennzeichnet, dass** das gießfähige, härtbare cholesterische Gemisch eine Viskosität im Bereich von etwa 10 bis 500 mPas, insbesondere im Bereich von etwa 10 bis 100 mPas, gemessen bei 23 °C aufweist.

5. Verfahren nach einem der vorhergehenden Ansprüche, **dadurch gekennzeichnet, dass** man das cholesterische Gemisch mit einer Geschwindigkeit im Bereich von etwa 1 bis 800 m/min, insbesondere etwa 5 bis 100 m/min auf den Träger aufbringt.

6. Verfahren nach einem der vorhergehenden Ansprüche, **dadurch gekennzeichnet, dass** man das Gemisch mittels einer Gießvorrichtung ausgewählt unter einem Umkehrwalzenbeschichter, einem kiss coater, einem Extrusionsgießer, einem Rakelgießer oder einem Messergießer, auf den Träger aufbringt.

7. Verfahren nach einem der vorhergehenden Ansprüche, **dadurch gekennzeichnet, dass** man das auf den Träger aufgebrachte Gemisch trocknet und anschließend, oder anstatt zu trocknen, thermisch, durch UV-Strahlen oder Elektronenstrahlen härtet.

8. Verfahren nach einem der vorhergehenden Ansprüche, **dadurch gekennzeichnet, dass** man den Träger mit wenigstens einem weiteren cholesterischen Gemisch gleicher oder unterschiedlicher Zusammensetzung beschichtet; oder dass man den Träger vor, nach oder zwischen der Auftragung der cholesterischen Schicht(en) mit wenigstens einer weiteren Schicht beschichtet, die ausgewählt ist unter einer Releaseschicht, einer transmittierendes Licht absorbierenden Schicht, Klebeschicht, Stabilisatorschicht, Stützschicht, Schutzschicht oder Deckschicht.

9. Verfahren nach einem der vorhergehenden Ansprüche, **dadurch gekennzeichnet, dass** man die auf den Träger aufgebrachte und ausgehärtete Schichtstruktur von diesem entfernt und gegebenenfalls zu Pigmenten zerkleinert.

10. Cholesterisches Material, **dadurch gekennzeichnet, dass** es eine oder mehrere cholesterische Schichten umfasst, wobei die cholesterischen Schichten eine mittlere Schichtdickenschwankung von weniger als ±0,2 µm besitzen.

11. Cholesterisches Material nach Anspruch 10, **dadurch gekennzeichnet, dass** die cholesterischen Schichten eine mittlere Trockenschichtdicke von etwa 0,5 bis 20 µm aufweisen.

12. Cholesterisches Material nach einem der Ansprüche 10 oder 11 in Bahnform oder in Blattform.

13. Pigmente erhältlich durch Zerkleinern ein- oder mehrschichtigen cholesterischen Materials nach einem der Ansprüche 10 oder 11 oder eines nach einem der Ansprüche 1 bis 9 hergestellten Materials.

14. Mehrschichtpigmente nach Anspruch 13, die mindestens zwei cholesterische Schichten und zwischen diesen eine transmittierendes Licht vollständig oder teilweise absorbierende Schicht umfassen.

15. Mehrschichtpigment nach Anspruch 14, **dadurch gekennzeichnet, dass** die absorbierende Schicht eine Bindemittelmatrix auf der Basis eines cholesterischen Gemisches nach Anspruch 3 umfasst.

16. Mehrschichtpigmente nach Anspruch 14, **dadurch gekennzeichnet, dass** die absorbierende Schicht außerdem magnetisch ist.

17. Zusammensetzungen, enthaltend wenigstens ein ein- oder mehrschichtiges Pigment nach einem der Ansprüche 13 bis 16.

18. Verwendung von Folien aus bandförmigem cholesterischem Material nach einem der Ansprüche 10 bis 12, zum Folienkaschieren, Tiefziehen oder Hinterspritzen.

19. Verwendung von Pigmenten oder Material nach einem der Ansprüche 10 bis 16 im Fahrzeug- und Fahrzeugzubehörsektor, im EDV-, Freizeit-, Sport- und Spielsektor, als optische Bauelemente wie Polarisatoren oder Filter, im Kosmetikbereich, im Textil-, Leder- oder Schmuckbereich, im Geschenkartikelbereich, in Schreibutensilien oder auf Brillengestellen, im Bausektor, im Haushaltssektor sowie bei Druckerzeugnissen aller Art sowie zur Herstellung von Farben und Lacken.

20. Verwendung von Pigmenten nach einem der Ansprüche 13 bis 16 oder Pigmenten, hergestellt nach einem der Ansprüche 1 bis 9 zur fälschungserschwerenden Bearbeitung von Gegenständen, oder zur Beschichtung von Gebrauchsgegenständen oder zur Lakkierung von Fahrzeugen.

## Claims

1. A process for producing a cholesteric layer, which comprises applying at least one layer of a curable, pourable, cholesteric mixture to a substrate by means of a casting apparatus, and forming a solid cholesteric layer which has a mean fluctuation in layer thickness of less than ± 0.2 µm.

2. A process as claimed in claim 1, wherein a pourable, curable cholesteric mixture having a diluent fraction of from about 5 to 95 % by weight, based on the overall weight of the mixture that is to be applied, is applied.

3. A process as claimed in any of the preceding claims, wherein a pourable, curable cholesteric mixture is employed which is selected from mixtures comprising:
a) at least one cholesteric, polymerizable monomer in an inert diluent; or
b) at least one achiral, nematic, polymerizable monomer and one chiral compound in an inert diluent; or
c) at least one cholesteric, crosslinkable oligomer or polymer in an inert diluent; or
d) a cholesteric polymer in a polymerizable diluent; or
e) at least one cholesteric polymer whose cholesteric phase can be frozen in by rapid cooling to below the glass transition temperature.

4. A process as claimed in any of the preceding claims, wherein the pourable, curable cholesteric mixture has a viscosity in the range from about 10 to 500 mPas, in particular in the range from about 10 to 100 mPas, measured at 23 °C.

5. A process as claimed in any of the preceding claims, wherein the cholesteric mixture is applied to the substrate at a rate in the range from about 1 to 800 m/min, in particular from about 5 to 100 m/min.

6. A process as claimed in any of the preceding claims, wherein the mixture is applied to the substrate by means of a casting apparatus selected from a reverse roll coater, a kiss coater, a cast-film extruder, a bar coater or a knife coater.

7. A process as claimed in any of the preceding claims, wherein the mixture applied to the substrate is dried and subsequently or alternatively is cured by means of heat, UV or electron beams.

8. A process as claimed in any of the preceding claims, wherein the substrate is coated with at least one further cholesteric mixture of the same or different composition; or wherein the substrate is coated, before, after or between the application of the cholesteric layer(s), with at least one further layer selected from a release layer, a layer which absorbs transmitted light, an adhesive layer, stabilizer layer, support layer, protective layer or cover layer.

9. A process as claimed in any of the preceding claims, wherein the fully cured layer structure which is applied to the substrate is removed therefrom and, if desired, is comminuted to form a pigment.

10. A cholesteric material comprising one or more cholesteric layers having a mean fluctuation in layer thickness of less than ±0.2 µm.

11. A cholesteric material as claimed in claim 10, wherein the cholesteric layers have a mean dry layer thickness of from about 0.5 to 20 µm.

12. A cholesteric material as claimed in either of claims 10 or 11 which is in web form or in sheet form.

13. A pigment obtainable by comminuting a single- or multilayer cholesteric material as claimed in either of claims 10 or 11 or by comminuting a material produced as claimed in any of claims 1 to 9.

14. A multilayer pigment as claimed in claim 13, which comprises at least two cholesteric layers between which there is a layer which absorbs all or some transmitted light.

15. A multilayer pigment as claimed in claim 14, wherein the absorbing layer comprises a binder matrix based on a cholesteric mixture as set forth in claim 3.

16. A multilayer pigment as claimed in claim 14, wherein the layer which absorbs is also magnetic.

17. A composition comprising at least one single- or multilayer pigment as claimed in any of claims 13 to 16.

18. The use of a film of strip-form cholesteric material as claimed in any of claims 10 to 12, for film lamination, thermoforming or backspraying.

19. The use of a pigment or material as claimed in any of claims 10 to 16 in the vehicle and vehicle accessories sector, in the EDP, leisure, sport and games sector, as an optical component such as a polarizer or filter, in the cosmetics field, in the textile, leather or jewelry field, in the gift product field, in writing utensils or on spectacle frames, in the construction sector, in the domestic sector or in connection with a printed product of any kind, or for preparing an ink or paint.

20. The use of a pigment as claimed in any of claims 13 to 16, or a pigment produced as claimed in any of claims 1 to 9, for the anticounterfeiting treatment of an article, or for coating an article of utility or for painting a vehicle.

## Revendications

1. Procédé de fabrication de couches cholestériques, **caractérisé en ce qu'**on applique sur un support, à l'aide d'un dispositif de coulée, au moins une couche d'un mélange cholestérique durcissable pouvant être coulé, et on forme une couche cholestérique solide, qui présente une variation moyenne d'épaisseur de couche inférieure à ± 0,2 µm.

2. Procédé selon la revendication 1, **caractérisé en ce qu'**on applique un mélange cholestérique durcissable pouvant être coulé, contenant une proportion d'un diluant d'environ 5 à 95 % en poids par rapport au poids total du mélange devant être appliqué.

3. Procédé selon l'une des revendications précédentes, **caractérisé en ce qu'**on utilise un mélange cholestérique durcissable pouvant être coulé, qui est choisi parmi les mélanges contenant :
a) au moins un monomère polymérisable cholestérique dans un diluant inerte ; ou
b) au moins un monomère polymérisable nématique achiral ou un composé chiral dans un diluant inerte ; ou
c) au moins un oligomère ou un polymère réticulable cholestérique dans un diluant inerte ; ou
d) un polymère cholestérique dans un diluant polymérisable, ou
e) au moins un polymère cholestérique, dont la phase cholestérique peut être congelée par refroidissement rapide en dessous de la température de transition vitreuse.

4. Procédé selon l'une des revendications précédentes, **caractérisé en ce que** le mélange cholestérique durcissable pouvant être coulé présente une viscosité, mesurée à 23°C, comprise dans la plage d'environ 10 à 500 mPa.s et en particulier dans la plage d'environ 10 à 100 mPa.s.

5. Procédé selon l'une des revendications précédentes, **caractérisé en ce qu'**on applique sur le support le mélange cholestérique à une vitesse comprise dans la plage d'environ 1 à 800 m/min, en particulier d'environ 5 à 100 m/min.

6. Procédé selon l'une des revendications précédentes, **caractérisé en ce qu'**on applique le mélange sur un support à l'aide d'un équipement de coulée choisi parmi une enduiseuse à tambours inversés, une coucheuse par léchage, un dispositif de coulée par extrusion, un dispositif de coulée à la racle ou un dispositif de coulée à la lame.

7. Procédé selon l'une des revendications précédentes, **caractérisé en ce qu'**on sèche le mélange appliqué sur le support, et, après le séchage ou à la place de ce dernier, on le durcit par voie thermique, par des rayons UV ou des faisceaux d'électrons.

8. Procédé selon l'une des revendications précédentes, **caractérisé en ce qu'**on applique sur le support au moins un autre mélange cholestérique, ayant une composition identique ou différente ; ou **en ce qu'**on applique sur le support, avant ou après l'application de la ou des couches cholestériques, ou entre l'application de ces dernières, au moins une autre couche, qui est choisie parmi une couche anti-adhésive, une couche absorbant la lumière transmise, une couche adhésive, une couche à effet stabilisant, une couche de protection, une couche de soutien ou une couche de finition.

9. Procédé selon l'une des revendications précédentes, **caractérisé en ce qu'**on enlève du support la structure de couches appliquée et durcie sur le support, et éventuellement on la broie pour obtenir des pigments.

10. Matériau cholestérique, **caractérisé en ce qu'**il comporte une ou plusieurs couches cholestériques, les couches cholestériques présentant une fluctuation moyenne de leur épaisseur de couche inférieure à ± 0,2 µm.

11. Matériau cholestérique selon la revendication 10, **caractérisé en ce que** les couches cholestériques ont une épaisseur de feuil sec d'environ 0,5 à 20 µm.

12. Matériau cholestérique selon l'une des revendications 10 ou 11, sous forme d'une bande ou sous forme d'une feuille.

13. Pigments pouvant être obtenus par broyage d'un matériau cholestérique monocouche ou multicouche selon l'une des revendications 10 ou 11 ou d'un matériau fabriqué selon l'une des revendications 1 à 9.

14. Pigments multicouches selon la revendication 13, qui comportent au moins deux couches cholestériques et, entre ces dernières, une couche absorbant en totalité ou en partie la lumière transmise.

15. Pigments multicouches selon la revendication 14, **caractérisés en ce que** la couche absorbante comporte une matrice de liant à base d'un mélange cholestérique selon la revendication 3.

16. Pigments multicouches selon la revendication 14, **caractérisés en ce que** la couche absorbante est par ailleurs magnétique.

17. Compositions contenant au moins un pigment monocouche ou multicouche selon l'une des revendications 13 à 16.

18. Utilisation de feuilles obtenues à partir d'un matériau cholestérique en forme de bande selon l'une des revendications 10 à 12 pour le contrecollage de feuilles, pour l'emboutissage ou la décoration dans le moule.

19. Utilisation de pigments ou d'un matériau selon l'une des revendications 10 à 16 dans le secteur de l'automobile et des accessoires pour automobiles, dans le secteur de l'informatique, des loisirs, des sports et des jeux, en tant que composants optiques tels que des polariseurs ou des filtres, dans le domaine cosmétique, dans le secteur des textiles, du cuir ou des bijoux, dans le secteur des articles cadeaux, dans les instruments d'écriture ou sur les montures de lunettes, dans le secteur du bâtiment, dans le secteur domestique, et dans les produits imprimés de toute nature, et aussi pour fabriquer des peintures et vernis.

20. Utilisation de pigments selon l'une des revendications 13 à 16, ou de pigments fabriqués selon l'une des revendications 1 à 9 pour traiter des objets dans le but d'en rendre plus difficile la falsification, ou pour revêtir des objets d'usage, ou pour appliquer une couche de peinture sur des véhicules.
